# EUROPEAN PATENT APPLICATION

(11) **EP 4 442 513 A1**
(43) Date of publication of application: **09.10.2024**
(21) Application number: 24168338.2
(22) Date of filing: 03.04.2024
(51) Int. Cl.: B60R 9/048, B60R 9/10

(54) **LOAD CARRIERS AND ADD-ON PARTS FOR LOAD CARRIERS**

(30) Priority: 04.04.2023 EP 23166609; 19.06.2023 EP 23180092
(71) Applicant: Thule Sweden AB, 335 04 Hillerstorp (SE)
(72) Inventor: NILVIUS, Anders, 33135 Värnamo (SE); ORMOND, Anderson, 55462 Jönköping (SE); NYGÅRDS, Erik, 31233 Laholm (SE); GRZES, Jan, 64-170 Wielen (PL); BOLMSTAM, Johan, 33195 Värnamo (SE); ASSARSSON, Jonas, 23737 Bjärred (SE); RINGDAHL, Jonas, 56792 Vaggeryd (SE); ROSENQVIST, Klara, 55330 Jönköping (SE); WICHER, Krzysztof, 64-730 Wielen (PL); NILSSON, Lars, 26634 Munka-Ljungby (SE); PERSSON, Leo, 26244 Angelholm (SE); FERMAN, Magnus, 33154 Värnamo (SE); BAGGE, Niklas, 55323 Jönköping (SE); CLAESSON, Olle, 56892 Skillingaryd (SE); KARLSSON, Petter, 56135 Huskvarna (SE); LARSSON, Stig-Johan, 34143 Ljungby (SE); JÖNSSON, Tobias, 33132 Värnamo (SE); GEJERVALL, Ulrik, 57178 Forserum (SE); PERSSON, Örjan, 343 96 Hallaryd (SE); GADIYAR, Bharath, 33130 Värnamo (SE); CATO, Simon, 55453 Jönköping (SE); LARSSON, Fredrik, 56791 Vaggeryd (SE)
(74) Representative: Wallentin, Lars

(57) **Abstract**

Disclosed is a spacer (100) for a load carrier (1) mountable on a vehicle. The spacer (100) comprises a carrier side fastening unit (110) configured to be put on and to be locked with a supporting portion (31) of the load carrier (1). The fastening unit (110) is configured to accommodate the supporting portion (31) and is configured transferable between a locking configuration in which the fastening unit (110) is non-detachably fixed on the supporting portion (31) and an unlocking configuration in which the fastening unit (110) is mountable to and detachable from the supporting portion (31). The fastening unit (110) is configured transferable into the locking configuration by pushing the fastening unit (110) onto the supporting portion (31).

## Description

### FIELD

The present disclosure relates to load carriers mountable to the trailer coupling of a vehicle and components of such load carriers, for example add-on parts such as wheel trays or supporting arms for supporting bikes and a supporting frame for the load carrier.

### BACKGROUND

Load carrier systems mountable to the trailer coupling of a vehicle are known in the art. Such systems need to fulfill highest safety standards while being easy to use for a user.

Known systems have the drawback that they are often cumbersome to use and are not adapted to new requirements, such as requirements resulting from the evolution in sports equipment.

### SUMMARY

The present disclosure relates to improvements of load carrier systems of the above type. In particular, the present disclosure relates to improvements in load carriers and in add-on parts for load carriers, such as bike arms or add-on wheel trays.

It is an object to provide an enhanced load carrier system and/or components of a load carrier system.

The object is solved by the configurations as presented in the claims, aspects and example configurations, examples and embodiments as described herein. Advantageous further formations may be gleaned from the dependent claims and from the below description.

According to an aspect, a load carrier mountable on the trailer coupling of the vehicle is provided. The load carrier comprises a load carrier coupling. The load carrier coupling may be configured to couple the load carrier to the trailer coupling. The load carrier further comprises a carrying frame extending in the first direction and configured to support a load to be transported. The load carrier may be configured as a bike carrier. The carrying frame may be configured to support one or more bikes.

The load carrier may further comprise an asymmetric supporting frame extending from the carrying frame in a second direction cross to the first direction. For example, in some configurations, the supporting frame extends perpendicular to the first direction. The supporting frame is configured to provide a side support for the load to be transported. For example, the supporting frame may be configured to support spacers for fixedly connecting a portion of a bike to the supporting frame for securely holding the bike in an upright position.

The supporting frame may extend in cross direction of the load carrier. For example, the cross direction of the load carrier may correspond to a cross direction of a vehicle to which the load carrier is mounted. The cross direction may extend perpendicular to a longitudinal direction of the load carrier. The longitudinal direction of the load carrier may correspond to a longitudinal direction of the vehicle to which the load carrier is mounted. The load carrier coupling may be provided in a first longitudinal end portion of the load carrier or on a first longitudinal side of the load carrier. The first longitudinal end portion corresponds to a portion which faces the vehicle to which the load carrier is mounted and may also be referred to as vehicle side portion. The first longitudinal end portion may also be referred to as rear portion of the load carrier. The load carrier may comprise a wheel supports which may comprise wheel trays. The wheel supports may be arranged along a path extending in cross direction of the load carrier.

In an embodiment, the supporting frame is configured to provide on a load side of the supporting frame and an enlarged loading space for a load to be transported and to provide on an opposite side of the supporting frame sufficient space for a user to access the load carrier coupling. The opposite side may be the load carrier coupling side of the supporting frame. In other words, the opposite side may be a side of the supporting frame facing the load carrier coupling. Accordingly, the supporting frame may be formed such that additional space is provided where it is needed. The load side of the supporting frame may be a side of the supporting frame facing away from a vehicle when the load carrier is mounted to the vehicle. The load side of the supporting frame may be a side facing away from a load carrier coupling side of the load carrier. The load side of the supporting frame may be a side facing towards the front-end portion of the load carrier. In an embodiment, the supporting frame may be configured such that it extends or is arranged closer to the vehicle or load carrier side end on one side of a longitudinal center of the load carrier and is arranged further away from the vehicle or load carrier side end on the other side of a longitudinal center of the load carrier.

In an embodiment, the supporting frame comprises a bulging portion bulged in the first direction. The bulging portion provides an accommodating space configured to receive a portion of the load to be transported. For example, the bulging portion may be formed at a position where a portion of a crank arrangement of a bike is positioned when the bike is supported on the load carrier. The bulging portion may be formed to provide a recess, recessed portion, or indentation on or in the supporting frame which is configured to receive a portion of the load to be transported. The bulging portion may be formed by creating one or more step like sections.

The bulging portion may be provided in a lower end portion of the supporting frame. For example, the bulging portion may be provided such that a portion of the supporting frame is offset with respect to an adjacent portion in the first direction, for example towards the load carrier coupling side end of the load carrier.

The supporting frame may be configured as an upright frame extending from the carrying frame in upward direction. For example, the supporting frame may extend perpendicular to a carrying frame.

The supporting frame may comprise a base portion. The base portion may be configured to support spacers or bike arms for coupling a portion of a bike to the supporting frame. The base portion may comprise two legs extending from the base portion. For example, the legs may extend from opposite ends of the base portion. The legs may comprise a first end portion. Each leg may be coupled to or integrally formed with the base portion at the first end portion. Each leg may be coupled to a carrying frame at a second end portion thereof. The second end portions may be coupled to a carrying frame by means of connecting portions. The base portion and the legs may form a U-shape. The base portion may comprise a straight section. The straight section may extend in cross direction of the load carrier.

Each leg may comprise a first leg portion and a second leg portion. The first leg portion may be a lower portion of the leg and each second leg portion may be an upper portion of the leg. The first leg portion may comprise a free end portion of the leg. The first leg portion may be coupled to a carrying frame.

The first leg portion of a first leg of the legs may be at least partially offset to the first leg portion of a second leg of the legs in a direction cross to a main extension direction of the supporting frame and/or in a longitudinal direction of the load carrier.

One first leg portion, for example a single first leg portion, a second leg portions and/or the base portion may extend in a first plane. One first leg portion may at least partially extend outside of the first plane. For example, one first leg portion may at least partially extend in a second plane extending in parallel with the first plane.

In some embodiments, the first leg portions and/or the second leg portions may comprise straight sections. The straight sections may extend in parallel with each other.

In some embodiments, the supporting frame is coupled to a carrying frame by means of connecting portions coupled to a carrying frame. For example, the connecting portions may be coupled to a rear end of the carrying frame. The connecting portions may be configured to support the supporting frame at different longitudinal positions of the load carrier. In addition or alternatively, the connecting portions are arranged offset to each other in longitudinal direction of the load carrier. In some embodiments, the carrying frame comprises different attachment portions offset to each other in longitudinal direction of the load carrier. The carrying frame may comprise two longitudinally extending supporting members having different lengths. The first end portions of the supporting members may be provided at the same longitudinal position and the opposite ends may be provided at different longitudinal positions such that they terminate offset to each other in longitudinal direction. In some embodiments, the carrying frame may comprise a single supporting member, for example a beam, having formed thereon the attachment portions in a longitudinally offset manner. One attachment portion may be provided on an end or end portion of the single supporting member and the other attachment portion may be provided in a cut-out formed in the single supporting member.

In some embodiments, one leg may be coupled to the carrying frame at a first longitudinal position located between the carrying frame and a load carrier coupling or an operating region, in particular a movement region of an operating member, of the load carrier coupling. The other leg may be coupled to a carrying frame at a second longitudinal position located in cross direction of the load carrier besides the load carrier coupling or besides the operating region of the load carrier coupling.

According to a further aspect, an add-on wheel tray for a rear mounted bike carrier is provided. The bike carrier can for example be configured like the load carriers described before.

The add-on wheel tray comprises a supporting structure configured to support wheels of a bike. The add-on wheel tray further comprises a coupling structure configured to securely connect the supporting structure with the bike carrier.

In some embodiments, the supporting structure is transferable between a use configuration and a space-saving stowage configuration. In some embodiments, the coupling structure is configured transferable between a use configuration and a space-saving stowage configuration. In some embodiments, the supporting structure and the coupling structure are configured transferable between the use configuration and a space-saving stowage configuration.

In the use configuration, the supporting structure has an enlarged dimension. In the stowage configuration, the supporting structure has a reduced dimension. Accordingly, the supporting structure may be brought into a condition in which it needs less space for stowing purposes. In the use configuration, parts and/or portions of the coupling structure may be positioned on or coupled to the supporting structure in a deployed or extended configuration to allow an attachment to a bike carrier and in the stowage configuration, parts and/or portions of the coupling structure may be moved relative to the supporting structure to a retracted and/or folded configuration.

In some embodiments, the supporting structure comprises a first supporting portion and a second supporting portion. Each supporting portion may be configured to support a wheel of a bike. The first supporting portion and the second supporting portion may be movable with respect to each other. In the use configuration, a distance between the first supporting portion and the second supporting portion is larger than in the stowage configuration.

In some embodiments, the supporting structure is foldable. The supporting structure can be foldable in two parts. In other configurations, the supporting structure can be foldable in three or more parts. In some configurations, the first supporting portion and the second supporting portion are hingedly coupled. The first supporting portion and the second supporting portion can be hingedly coupled directly to each other or, via an intermediate portion, indirectly to each other. In some embodiments, the first supporting portion and the second supporting portion are configured to be foldable into a V-shape. In some embodiments, a movement of the first supporting portion and the second supporting portion with respect to each other may be temporarily locked in the use configuration and/or in the stowage configuration. In some embodiments, the first supporting portion and the second supporting portion are arranged pivotable about a pivot axis, wherein the pivot axis may be offset from the first supporting portion and the second supporting portion, for example of said in upward direction when the first supporting portion and the second supporting portion are in an unfolded use configuration. In some embodiments, the supporting structure comprises two or more folding sections. In some embodiments, the supporting structure comprises a stop configuration defining and/or securing a respective position of the first supporting portion and the second supporting portion in the use configuration. The stop configuration may limit a movement of the first supporting portion and the second supporting portion in an application direction of the force exerted on the first supporting portion of the second supporting portion by a wheel of the supported bike. In some configurations, the supporting structure comprises a fixation portion or fixation device for holding the first supporting portion and the second supporting portion in the stowage configuration, for example such that they remain folded together. In some embodiments, the supporting structure is configured foldable together with foldable wheel trays of the bike carrier when the add-on wheel tray is coupled to the bike carrier.

In some embodiments, the supporting structure is telescopable. Accordingly, the supporting structure may be transferable between the use configuration and the stowage configuration by a telescoping action. At least one of the first supporting portion and the second supporting portion may be translatory movable with respect to the other one. The first supporting portion and the second supporting portion may be translatory movable with respect to each other. At least one of the first supporting portion and the second supporting portion may be movably supported on an elongate guiding member, for example an elongate profile.

In some embodiments, the coupling structure comprises at least one fixation arm. The fixation arm may comprise a tubular profile. The fixation arm may comprise a coupling section and the supporting section. The supporting section may be configured to be coupled to the supporting structure. The coupling section may be configured to be detachably mountable to the bike carrier. The coupling section may be configured to be detachably mountable to the bike carrier from vertically above. The coupling section may be configured for an engagement with the bike carrier. The coupling section may be configured for a snap-in engagement. The coupling section may be configured to be interlocked with a designated attachment portion of a bike carrier. The designated attachment portion may be a holder. The coupling section may be configured to be interlocked directly with the attachment portion by direct engagement. Alternatively, the coupling section may be configured to be interlocked with the attachment portion indirectly via an adapter mounted on the attachment portion. In some embodiments, the coupling section may be formed as a first coupling partner of a plug and socket type coupling arrangement. In some embodiments, the attachment portion and/or the adapter mounted on the attachment portion may form a second coupling partner of a plug and socket type coupling arrangement.

In some embodiments, the coupling section may be configured to automatically engage with the attachment portion on the bike carrier upon inserting the coupling section in the attachment portion. In some embodiments, the coupling section may be configured to automatically engage with the adapter arranged in the attachment portion on the bike carrier upon inserting the coupling section in the adapter. In some embodiments, the coupling section comprises an engaging portion configured to engage with the attachment portion or the adapter. The engaging portion may be a biased engaging portion biased by an urging member, for example a spring. The coupling section may be configured as a male part configured to be received in a female part. For example, the attachment portion or the adapter may form the female part. Alternatively, the coupling section can be configured as a female part to be slipped on the adapter or to receive a portion of the adapter or receive a portion of the attachment portion therein. The engaging portion may be arranged in the coupling section such that it is movable between a protruding position in which it protrudes from an opening in the coupling section and may engage with a recess formed in the adapter or the attachment portion, and a retracted position in which it does not protrude from the opening and/or is retracted into the coupling section.

The add-on wheel tray may comprise a release mechanism for releasing an engagement of the coupling section with the attachment portion and/or the adapter. The release mechanism may comprise an operating member operatively coupled to the coupling section, for example operatively coupled with the engaging portion. The operating member may be movable between a locking position and an unlocking position. The operating member may be arranged on the fixation arm. The operating member may be a lever. The operating member may be provided on the fixation arm and may be configured to allow an operation of the operating member and gripping the fixation arm with a single hand. The operating member may be configured and arranged on the fixation arm such that it is operable by an index finger of a user's hand, for example like a pistol type trigger.

In some embodiments, at least one fixation arm may be transferable between a deployed configuration in which the fixation arm is positioned for coupling with the bike carrier and a retracted configuration in which the fixation arm is folded towards the supporting structure or towards a portion of the supporting structure to which the fixation arm is attached. At least one fixation arm may be pivotable about a pivot axis, wherein the pivot axis may differ from a pivot axis about which rotatable supporting structure portions are pivotable if the supporting structure is configured foldable. In some embodiments, the pivot axis may extend in parallel with a pivot axis of the supporting structure or may extend at an angle with respect to the pivot axis of the supporting structure or may extend perpendicular to or at an angle with respect to a main extension direction of the supporting structure. The fixation arm may comprise a tubular profile.

In some embodiments, the supporting section may be coupled to or may form part of a pivot of the supporting structure. At least a portion of the supporting structure, for example a first supporting portion and a second supporting portion each configured to support a wheel of a bike, may be rotatable about the supporting section. The supporting section may form a hinge pin for the supporting portion. In some embodiments, two of the fixation arms are provided, wherein free end portions of supporting sections of the fixation arms may be coupled to each other by means of a fixation arm coupling portion, for example such that the fixation arms form part of an integral supporting unit. The integral supporting unit may be configured with the fixation arm coupling portion forming a base and the fixation arms forming legs protruding from the base. The legs may protrude from opposite end portions or opposite ends of the base. The supporting sections may extend in a first direction, wherein the supporting sections may extend in parallel with each other. The coupling sections may extend in a second direction. The fixation arm coupling portion may extend in a third direction. The fixation arm coupling portion may be configured straight. The first direction and the second direction may extend perpendicular with respect to each other. The first direction and the third direction may extend perpendicular to each other. The second direction and the third direction may extend skew to each other.

According to an aspect, an add-on wheel tray is provided which comprises a supporting structure configured to support wheels of a bike and a coupling structure configured to securely connect the supporting structure with a bike carrier. The supporting structure and/or the coupling structure may be configured as described in other configurations. The add-on wheel tray according to this aspect comprises an additional support which supports the supporting structure on an outermost wheel tray of the bike carrier to which the add-on wheel tray is mountable in addition to the coupling structure which is configured to connect to a carrying frame of the bike carrier by means of one or more attachment portions and/or adapters as described before.

According to an aspect, a load carrier system is disclosed in which an add-on wheel tray, for example an add-on wheel tray as described before, is coupled to an attachment portion of the load carrier by means of an adapter which adapts the size of the attachment portion to the size of the coupling section of the add-on wheel tray, wherein said adapter may be configured attachable to the attachment portion by a user.

According to an aspect, an add-on wheel tray kit is provided. The add-on wheel tray kit comprises a wheel tray, for example a wheel tray as described before, and an adapter configured to be fixedly attached to an attachment portion on the bike carrier and configured to detachably receive the coupling structure of the wheel tray, wherein the adapter may be configured as described in the configurations as described in the specification.

According to an aspect, a bike carrier is provided. The bike carrier may comprise the features of the load carriers mentioned in the specification. The bike carrier comprises a base frame coupled to a load carrier coupling. The bike carrier further comprises at least one wheel tray supported on the base frame. Furthermore, the bike carrier comprises an attachment portion for receiving an add-on wheel tray, for example an add-on wheel tray as described in other configurations of this specification. The attachment portion may be configured to directly receive a fixation arm of the wheel tray and may be configured to be engageable with the fixation arm. Alternatively, the attachment portion may be configured to receive an adapter acting as an interface between the attachment portion and the fixation arm. The attachment portion may be provided on the base frame between the base frame and a license plate holder.

According to an aspect, a spacer for a load carrier mountable on a vehicle is provided. The spacer comprises a carrier side fasting unit configured to be put on and to be locked with a supporting portion of the load carrier. The fastening unit is configured to accommodate the supporting portion and is configured transferable between a locking configuration in which the fastening unit is held, for example non-detachably fixed, on the supporting portion and an unlocking configuration in which the fastening unit is mountable to and detachable from the supporting portion. The fastening unit is configured transferable into the locking configuration by pushing the fastening unit onto the supporting portion.

According to an aspect, a spacer for a load carrier mountable on a vehicle is provided. The spacer comprises a carrier side fastening unit configured to be put on and to be locked with a supporting portion of said load carrier. The spacer further comprises a load side attachment unit configured to be fixed to a load portion, for example to a frame portion of a bike. The spacer further comprises a connecting structure configured to couple the carrier side fastening unit and the load side attachment unit to each other.

The fastening unit is configured to accommodate the supporting portion and is configured transferable between a locking configuration in which the fastening unit is held, for example non-detachably fixed, on the supporting portion and an unlocking configuration in which the fastening unit is mountable to and detachable from the supporting portion. The carrier side fastening unit is configured transferable into the locking configuration by manually applying a force on the load side attachment unit towards the carrier side fastening unit. In addition or alternatively, the carrier side fastening unit is configured transferable into the unlocking configuration by applying a force on the load side attachment unit in a direction away from the carrier side fastening unit.

According to an aspect, a spacer for a load carrier mountable on a vehicle is provided. The spacer comprises a carrier side fastening unit configured to be put on and to be locked with a supporting portion of the load carrier. The spacer further comprises a load side attachment unit configured to be fixed to a load portion, for example to a frame portion of a bike. The spacer further comprises a connecting structure configured to couple the carrier side fastening unit and the load side attachment unit to each other. The fastening unit is configured to accommodate the supporting portion and is configured transferable between a locking configuration in which the fastening unit is held, for example non-detachably fixed, on the supporting portion and an unlocking configuration in which the fastening unit is mountable to and detachable from the supporting portion. The carrier side fastening unit is configured transferable into the locking configuration by manually moving the load side attachment unit relative to and towards the supporting portion received in the carrier side fastening unit. In addition or alternatively, the carrier side fastening unit is transferable into the unlocking configuration by manually moving the load side attachment unit in a direction away from and relative to the supporting portion in the carrier side fastening unit.

According to an aspect, a spacer for a load carrier mountable on a vehicle is provided. The spacer comprises a carrier side fastening unit configured to be put on and to be locked with the supporting portion of the load carrier. The carrier side fastening unit comprises an arrangement for positively locking the supporting portion between at least two locking members. The first locking member comprises a first receiving section for at least partially accommodating the supporting portion. The second locking member comprises a second receiving section for at least partially accommodating the supporting portion. The first receiving portion is configured to be at least partially retractable into the second receiving portion such that the supporting portion is accommodatable between the first and second receiving sections such that a circumferential portion of the supporting portion is circumferentially enclosed by both of the first and second receiving sections.

In some embodiments, the first receiving section is U-shaped. In addition or alternatively, the second receiving section can be U-shaped. In some embodiments, the first receiving section and the second receiving section are oriented in different directions. In some embodiments, the first receiving section and the second receiving section are oriented in directions extending at an angle of 90 degrees with respect to each other.

According to an aspect, a spacer for a load carrier mountable on a vehicle is provided. The spacer may comprise a carrier side fastening unit configured to be put on and to be locked with a supporting portion of the load carrier. The carrier side fastening unit is configured to accommodate the supporting portion and is configured transferable between a locking configuration in which the fastening unit is non-detachably fixed on the supporting portion and an unlocking configuration in which the fastening unit is mountable to and detachable from the supporting portion. The spacer further comprises a locking mechanism. The locking mechanism may be embodied as a snap in locking mechanism. The locking mechanism is configured to lock the fastening unit in the locking configuration when the carrier side fastening unit is transferred from the unlocking configuration into the locking configuration. The locking mechanism may be configured to automatically lock the fastening unit in the locking configuration.

The locking mechanism may comprise a blocking portion movable between a locking position and an unlocking position. In the locking position, the blocking portion may directly or indirectly block any movement for transferring the fastening unit into the unlocking configuration. In the unlocking position, the blocking portion allows a movement for transferring the fastening unit into the unlocking configuration.

In some embodiments, the carrier side fastening unit comprises a locking member movable between a locking position in which it positively locks the supporting portion and an unlocking position. The fastening unit may be in the locking configuration when the locking member is in the locking position.

In some embodiments, the spacer further comprises a load side attachment unit configured to be attached to a portion of a load, for example to a portion of a bike. In some embodiments, the load side attachment unit is coupled to the carrier side fastening unit by means of a connecting structure, for example comprising a hollow profile. The snap in locking mechanism may be provided on the load side attachment unit.

In some embodiments, the spacer further comprises a force transfer member. The force transfer member may be a rod. The force transfer member extends between the load side attachment unit and the carrier side fastening unit. The force transfer member may be coupled to the carrier side fastening unit to be movable between a first position corresponding to a locking configuration of the carrier side fastening unit and a second position corresponding to an unlocking configuration of the carrier side fastening unit. The snap in locking mechanism may be configured to block and release a movement of the force transfer member.

In some embodiments, the spacer further comprises an adjusting mechanism for adjusting a longitudinal position of the snap in locking mechanism relative to the force transfer member and/or relative to the connecting structure and/or relative to the carrier side fastening unit and/or relative to the load side attachment unit.

According to an aspect, a spacer for a load carrier mountable on a vehicle is provided. The spacer comprises a carrier side fastening unit configured to be put on and to be locked with a supporting portion of the load carrier. The carrier side fastening unit comprises a locking member movable between a locking position and an unlocking position. In the locking position, the locking member positively locks the supporting portion. The spacer further comprises a load side attachment unit configured to be fixed to a load portion, for example to a frame portion of a bike. The spacer further comprises a connecting structure configured to couple the carrier side fastening unit and the load side attachment unit to each other. The spacer further comprises a locking mechanism for blocking a movement of the locking member out of the locking position. The position of the locking mechanism relative to the locking member is adjustable by an adjusting mechanism.

In some embodiments, the load side attachment unit is coupled to the connecting structure by means of an adjusting mechanism for longitudinally adjusting a position of the load side attachment unit relative to the connecting structure and/or relative to the carrier side fastening unit.

According to an aspect, a spacer for a load carrier mountable on a vehicle is provided. The spacer comprises a carrier side fastening unit configured to be put on and to be locked with a supporting portion of the load carrier. The spacer further comprises a load side attachment unit configured to be fixed to a load portion, for example to a frame portion of a bike. The spacer further comprises a connecting structure configured to couple the carrier side fastening unit and the load side attachment unit to each other. The connecting structure may in this aspect and in all other aspects and embodiments be a rigid structure rigidly coupling the carrier side fastening unit and the load side attachment unit. The load side attachment unit is in this aspect coupled to the connecting structure by means of an adjusting mechanism for longitudinally adjusting a position of the load side attachment unit relative to the connecting structure and/or relative to the carrier side fastening unit.

In some embodiments, the load side attachment unit comprises a locking mechanism for blocking a movement of a locking member arranged on the carrier side fastening unit, for example the locking member as described in connection with other aspects and embodiments.

In some embodiments, the fastening unit comprises an arrangement for positively locking the supporting portion between at least two locking members.

In some embodiments, the fastening unit comprises an arrangement for positively locking the supporting portion between at least two locking members a first locking member of the locking members may be arranged movable in a first direction with respect to a second locking member of the locking members in order to positively lock the supporting portion in the fastening unit when the fastening unit is in the locking configuration. The first direction may be a direction along a portion of the second locking member and/or towards and away from the second locking member.

In some embodiments, the first locking member comprises a first receiving section. The first receiving section may be a U-shaped receiving section and/or a hook shaped receiving section. The first receiving section may be configured to at least partially receive the supporting portion. At least one of the locking members may form a clamping portion configured to exert a clamping force on the supporting portion when the fastening unit is in the locking configuration. In some embodiments, the receiving section may be configured such that it can be put on the supporting portion by moving the fastening unit in a second direction, wherein the second direction extends cross to the first direction in which the first locking member is movable.

The second locking member may comprise a second receiving section. The second receiving section may be U-shaped the first receiving section and the second receiving section may each be U-shaped. The first receiving section may be turned with respect to the second receiving section by 90 degrees. In other words, the receiving directions in the first receiving section and the second receiving section may extend perpendicular to each other. The first receiving section may be configured to be at least partially retractable into the second receiving section. The first locking member may be guided in the second locking member such that it is translatory movable in the first direction but non-rotatable about an axis which extends parallel to the first direction. The second locking member may be configured to be coupled to a connecting structure, for example a hollow profile, connecting the fastening unit with a load side attachment unit configured to be fixed to a load portion, for example to a frame portion of a bike. The second locking member may be configured to guide the first locking member outside of the connecting structure. At least a guided portion of the first locking member may comprise a non-round outer circumference guided in a guiding portion of the second locking member which defines a non-round receiving section the first locking member may comprise a hook-like configuration, in particular a hook-like free end portion.

In some embodiments, the fastening unit is configured to at least partially automatically transfer into the locking configuration when the supporting portion is received in the fastening unit. In the context of this disclosure, at least partially automatically transfer can mean that the transfer is at least partially assisted through a suitable force application.

In some embodiments, the spacer further comprises a locking unit for blocking a movement of the first locking member in at least a third direction opposite to the first direction. The locking unit may comprise a blocking portion movable between a locking position in which it directly or indirectly blocks the movement of the first locking member in the third direction and an unlocking position in which the blocking portion allows the movement of the first locking member in the third direction. The blocking portion may be a portion of an inserted strap. In some configurations, fixed end portion of the strap may be operatively coupled to the first locking member such that the first locking member is pulled to remain in the locking position when the strap is tightened.

In some embodiments, the blocking portion is biased towards the locking position by means of a biasing member, for example a spring, such that the blocking portion is able to automatically engage with and block a movement of the first locking member when the first locking member has been moved by a predetermined distance towards a positive locking position. The positive locking position is a position of the first locking member in which an inserted supporting portion is positively interconnected with the fastening unit.

In some embodiments, the spacer may comprise an operating portion for at least returning the blocking portion into the unlocking position. The operating portion may comprise a push member or a pull member or a rotational member. The operating portion may be operatively coupled to the blocking portion such that upon operating the operating portion the blocking portion is moved towards the unlocking position.

In some embodiments, the spacer may comprise a force transfer portion. The force transfer portion may be a portion of a force transfer member. The force transfer portion may be coupled to or integrally formed with the movable locking member and the blocking portion may be configured engageable with the force transfer portion. The force transfer portion may comprise a rod or may be a portion of a rod. The force transfer portion may comprise an engaging section providing a contact surface contactable by the blocking portion. The force transfer portion may comprise a tapered end portion tapering towards the end of the force transfer portion.

In some embodiments, the blocking portion is translatory movably arranged in the locking unit, preferably shiftably arranged in the locking unit. The blocking portion may be movable radially towards and away from the force transfer portion. The blocking portion may be configured to engage behind a protrusion or widened section provided on the force transfer portion and forming the engaging section. The blocking portion may alternatively be configured to engage into a recess formed in the force transfer portion. The blocking portion may comprise an opening for receiving the engaging section of the force transfer portion. The opening may comprise a narrow section and a wide section. The wide section comprises a dimension allowing the engaging section to pass through the opening and the narrow section comprises a dimension which is smaller than an outer dimension of the engaging section.

In some embodiments, the blocking portion is pivotably movably arranged in the locking unit. The blocking portion may comprise a pivot arm pivotably supported at a first end portion thereof about a pivot axis and comprising a contact portion at a second end portion thereof.

In some embodiments, the spacer further comprises a load side attachment unit configured to be fixed to a load portion, for example to a frame portion of a bike.

In some embodiments, the first locking member is arranged pivotably movable with respect to the second locking member. The first locking member may be biased in a direction away from the second locking member. An urging member may be arranged between the first locking member and the second locking member.

According to an aspect, a spacer for coupling two bikes to each other while holding them at a predetermined distance from each other is provided. The spacer comprises two attachment portions. Each attachment portion comprises a fastening mechanism. Each fastening mechanism is transferable between a closed configuration in which the fastening mechanism is capable of firmly attaching to a bike and an opened configuration in which the fastening mechanism can be put on and detached from a respective bike.

In some embodiments, the attachment portions are configured to be independently rotatable with respect to each other, for example about a comment rotation axis.

In some embodiments, at least one attachment portion may be configured for contacting the bike at a contact portion provided on an outer circumference of the attachment portion.

The spacer may further comprise a locking mechanism which is configured to lock the fastening mechanisms in the closed configuration.

In some embodiments, the locking mechanism comprises an operating unit operable by a user and configured such that the user can lock both fastening mechanisms in the closed configuration by performing a single operating step.

In some embodiments, the locking mechanism is configured to simultaneously lock the fastening mechanisms in the closed configuration.

In some embodiments, at least one fastening mechanism, for example each fastening mechanism, comprises a strap and a strap receiver. Each strap comprises a free end portion insertable into the strap receiver for forming a fixation loop. In some embodiments, the locking mechanism is configured to block a detachment of the free end portions from the strap receivers after the free end portions have been received in the strap receivers.

In some embodiments, the locking mechanism comprises an operating unit operable by a user and configured such that the user can block the detachment of the free end portions by performing a single operating step.

In some embodiments, the operating unit comprises a movable operating member configured to be moved by the user. In some embodiments, the movable operating member may be translatory and/or rotatably movable. In some embodiments, the movable operating member can comprise a locking cylinder. The locking cylinder may be operable by a key and may thus comprise a keyhole. In some embodiments, the movable operating member can comprise a translatory movable portion, for example a sleeve portion movable along a main extension direction of the spacer. In some embodiments, the movable operating member can comprise a rotatably movable portion.

In some embodiments, the locking mechanism is configured to simultaneously lock each of the free end portions.

In some embodiments, the locking mechanism comprises a first locking portion associated with the first attachment portion of the two attachment portions and a second locking portion associated with a second attachment portion of the two attachment portions. The movable operating member may be operatively coupled with the first locking portion and the second locking portion to transfer each of the first locking portion and the second locking portion between an unlocking configuration and a locking configuration. The operating member may be operatively coupled with the first locking portion by means of a first force transfer portion and with the second locking portion by means of a second force transfer portion. The force transfer portions may be provided on separate force transfer members. The force transfer members may comprise a rod and/or other elongate members and/or cables. The force transfer portions may alternatively be provided on a single force transfer member. The force transfer portions may be configured to move translatory and/or along their respective longitudinal axes.

In some embodiments, the first locking portion comprises a first engaging member configured to engage with a first strap of the straps and the second locking portion comprises a second engaging member configured to engage with a second strap of the straps. The first engaging member and/or the second engaging member may be rotatable about a rotation axis. The rotation axis may extend perpendicular to the main extension direction of the spacer.

In some embodiments, the first locking portion comprises a first engaging member configured to engage with a first strap of the straps and the second locking portion comprises a second engaging member configured to engage with a second strap of the straps. The first engaging member and/or the second engaging member may be translatory movable.

In some embodiments, the first engaging member and/or the second engaging member comprise a through opening for receiving a respective strap therein and may be configured to engage with an inserted strap extending through the through opening. Each engaging member may comprise an engaging portion, for example one or more teeth, for engaging with teeth on the straps. Each engaging portion may be biased towards a disengagement position. The operating member may be operatively coupled to each engaging member such that each engaging member is moved towards and/or away from the disengagement position upon operating the operating member.

In some embodiments, the two attachment portions are configured such that an insertion of a free end portion of the first strap into a first attachment portion grants access into a second attachment portion for a free end portion of the second strap.

In some embodiments, at least one fastening mechanism comprises a gripping unit, for example comprising a claw, for gripping a portion of a bike. One fastening mechanism may comprise a gripping unit with a claw having one or two jaws and the other fastening mechanism may comprise a strap and a strap receiver. In some configurations, both fastening mechanisms comprise the gripping unit.

In some embodiments, each strap comprises a fixed end portion which is fixed to the attachment portion. The fixed end portion may be provided between a bike contact portion of the attachment portion and a strap receiver and/or between the bike contact portion and a center of the spacer. As strap path or strap passage in each of the attachment portions may be configured such that free end portions of the straps are closer to each other than the fixed end portions when the free end portions have been passed through the strap receiver. The strap paths or strap passages in the attachment portions may be configured such that insertion openings into the strap paths or strap passages are provided in opposite longitudinal end faces of the spacer and accept openings of the strap paths or strap passages are provided closer to the longitudinal center of the spacer, for example on a side on which bike contact portions are provided. The spacer may be configured to provide a side support for a bike portion. The side support may be provided by a supporting portion which extends along the longitudinal direction of the spacer and faces in a direction cross to the longitudinal direction. The spacer may be configured to provide an end support for a bike portion, wherein the end support may be provided on the longitudinal end of the spacer and may face in longitudinal direction of the spacer.

According to a further aspect, a spacer for a load carrier mountable on a vehicle is provided. The spacer comprises a carrier-side fastening unit which is transferable between a closed configuration in which the fastening unit groups around a supporting portion of the load carrier and an opened configuration allowing the fastening unit to be coupled to and decoupled from the supporting portion. The spacer further comprises a load-side attachment unit configured to be fixed to a load portion, for example a frame of a bike. The attachment unit comprises a tightening device for tightening a clamping member of the attachment unit. The attachment unit is transferable between an active configuration in which a fixation of the attachment unit on the load portion is possible and an inactive configuration in which a fixation of the attachment unit on the load portion is not possible. In the inactive configuration at least an engaging portion of the tightening device which, upon operating the tightening device is normally interacting with the clamping member for applying and/or keeping a tightening force, is moved to a position in which such interaction with the clamping member is not possible.

In some embodiments, the tightening device is movable between a blocking position in which an insertion of the clamping member into the tightening device is prevented or not possible and the receiving position in which the clamping member may be inserted into the tightening device. When the tightening device is in the blocking position, the attachment unit is in the inactive configuration.

In some embodiments, the tightening device is translatory movable or rotatably movable and/or wherein the tightening device is movable between a retracted position and an extended position. The attachment portion may comprise a housing, wherein when the tightening device is in the retracted position, the tightening device may be at least partially retracted into the housing. The tightening device may be slidably received in the housing. The tightening device may be held in or on the housing so as to be pivotable about a predefined pivot axis.

In some embodiments, the engaging portion of the tightening device is movable between a blocking position in which the engaging portion blocks an insertion of the clamping member into the tightening device and a release position in which the engaging portion cannot engage with an inserted clamping member. The engaging portion may be maintained in the blocking position or the release position when the attachment unit is in the inactive configuration.

The engaging portion may be rotatably movable and/or may comprise an opening for receiving the clamping member. When the attachment unit is in the inactive configuration, the opening may extend in a direction which is not suitable for receiving the clamping member.

In some embodiments, the attachment unit is operatively coupled to the fastening unit such that when the fastening unit is transferred from the closed configuration into the opened configuration, the attachment unit is transferred into the inactive configuration.

In some embodiments, the clamping member comprises a strap, for example a toothed strap. The tightening device may comprise a strap receiver, for example a pump buckle mechanism. The pump buckle mechanism may comprise a tightening lever and an engaging portion, for example a pawl, rotatably supported on a base defining a supporting surface for the strap.

According to an aspect, a spacer for a load carrier, in particular a spacer for coupling two bikes to each other while holding them at a predetermined distance from each other, is provided. The spacer comprises a first attachment portion. The first attachment portion comprises a first supporting portion for contacting a first coupling portion of a first bike to be fixed to the first attachment portion. The first coupling portion of the first bike may be a first frame portion of the first bike. The first attachment portion further comprises a first fastening mechanism for clamping the first coupling portion on the first supporting portion. The fastening mechanism comprises a first strap and a first strap receiver. The first strap comprises a fixed end portion and a free end portion. The free end portion is configured detachably couplable to the first strap receiver for forming a fixation loop extending over the first supporting portion of the coupling portion. The fastening mechanism is configured to move the first strap receiver and/or the fixed end portion of the first strap relative to the first supporting portion for exerting a clamping force on the first coupling portion via the strap.

In some embodiments, the first fastening mechanism comprises a movable support. The movable support may be arranged on a rear side of the supporting portion. The movable support may comprise a fixation section for fixing the fixed end portion of the strap. The fixed end portion and/or the first strap receiver may be fixed on or movably coupled to the movable support. The strap receiver may be configured to detachably receive the free end portion. The first strap receiver may comprise a hook portion on which the free end portion is hookable. The movable support is movable towards and away from the supporting portion.

In some embodiments, the spacer further comprises a second attachment portion. The second attachment portion comprises a second supporting portion for contacting a second coupling portion of a second bike to be fixed on the second attachment portion. The second coupling portion may be a frame portion of the second bike. The second attachment portion further comprises a second fastening mechanism for clamping the second coupling portion on the second supporting portion. The second fastening mechanism comprises a second strap and a second strap receiver. The second strap comprises a fixed end portion and a free end portion. The free end portion is configured detachably couplable to the second strap receiver for forming a fixation loop extending over the second supporting portion and the second coupling portion. The second strap is operatively coupled to the movable support. For example, the second strap may be coupled to a coupling portion on the movable support. In some embodiments, the fixed end portion of the second strap is attached to the coupling portion on the movable support. The coupling portion may be configured to allow a rotation of the movable support relative to the second strap. The first and second attachment portions may thus be arranged rotatable to each other without twisting the second strap. The second strap receiver may comprise a pump buckle mechanism.

According to an aspect, a spacer for a load carrier mountable on a vehicle is provided. The spacer comprises an attachment portion, for example a load side attachment unit configured to be fixed to a load portion, for example to a frame portion of a two-wheeler. The spacer further comprises a fastening mechanism with a strap and a strap receiver. The spacer further comprises a strap passage provided in the attachment portion and accessible via an insertion portion on the attachment portion. The insertion portion may be an opening. The strap receiver is arranged on the attachment portion such that the strap is passable into the strap receiver via the strap passage.

In some embodiments, the spacer comprises a strap passage blocking portion configured to move between an unblocking position in which it does not block the strap passage and a blocking position in which it blocks the strap passage. The strap passage blocking portion may be rotatable between the unblocking position and the blocking position.

In some embodiments, the strap passage blocking portion is rotatable about an axis which is perpendicular to a strap passage extension path and/or parallel to a strap passage extension surface. The strap passage blocking portion may be arranged such that the axis is located or extends in the strap passage.

In some embodiments, the strap passage blocking portion comprises a through opening for receiving the strap. The through opening may be aligned with the strap passage when the strap passage blocking portion is in the unblocking position. The through opening may be unaligned with the strap passage when the strap passage blocking portion is in the blocking position.

In some embodiments, the spacer comprises a strap locking member configured to move between an unlocking position in which it does not lock an inserted strap in the strap passage and a locking position in which it blocks the strap in the strap passage. In some embodiments, the strap locking member is rotatable between the unlocking position and the locking position.

In some embodiments, the strap locking member is rotatable about a rotation axis which is perpendicular to a strap passage extension path and/or parallel to a strap passage extension surface. The strap locking member may be arranged such that the rotation axis is located in the strap passage.

In some embodiments, the strap locking portion defines a passageway for receiving the strap and is configured engageable with an inserted strap. In some embodiments, the strap locking portion is engageable with an inserted strap. In some embodiments, the strap locking portion comprises an engaging portion engageable with the strap. In some embodiments, the strap locking portion comprises a sleeve, for example a cylindrical sleeve. In some embodiments, the strap locking portion or member is provided around the strap passage blocking portion. In some embodiments, the strap passage blocking portion is accommodated in the strap locking portion. In some embodiments, the strap locking portion and the strap passage blocking portion are arranged coaxially. In some embodiments, the strap locking portion and the strap passage blocking portion are independently movable.

In some embodiments, the spacer further comprises a strap locking mechanism comprising an operating member, for example a locking cylinder operable by a key. In some embodiments, the operating member is operatively coupled to the strap locking portion such that a movement of the operating member to a locking position moves the strap locking portion to the locking position.

In some embodiments, the spacer further comprises a further attachment portion, for example a carrier side fastening unit for attaching a supporting portion of a load carrier. The further attachment portion may be configured transferable between a locking configuration in which the fastening unit is non-detachably fixed on the supporting portion and an unlocking configuration in which the fastening unit is mountable to and detachable from the supporting portion. The spacer further comprises an attachment portion locking mechanism configured to lock the further attachment portion in the locking configuration. The spacer may comprise a release mechanism for unlocking the further attachment portion. The strap locking mechanism may be operatively coupled to the release mechanism such that when the operating portion is in a locking position, the release mechanism is blocked, for example by blocking a movement of an operating portion of the release mechanism, for example a push member or a pulling member.

In some embodiments, the supporting frame of one of the before described load carriers may comprise a supporting portion for supporting an attachment portion of the spacer. In general, a load carrier may comprise a carrying frame extending in a first direction and configured to support a load to be transported, for example a bike, and comprising a supporting frame extending from the carrying frame in a second direction cross or inclined to the first direction, for example perpendicular to the first direction, and configured to provide a side support for the load to be transported wherein the supporting frame comprises a supporting portion for supporting an attachment portion of a spacer. The supporting portion may comprise a movement prevention portion for preventing a sideways movement of the attachment portion of the spacer. In addition or alternatively, the movement prevention portion may be configured to prevent a movement along a main extension direction of the supporting portion when the attachment portion is mounted on the supporting portion.

In some embodiments, the movement prevention portion is configured to geometrically and/or frictionally prevent the movement.

In some embodiments, the movement prevention portion comprises at least one stop portion for blocking a sideways movement of the attachment portion and along the main extension direction of the supporting portion when the attachment portion is mounted on the supporting portion.

The stop portion may comprise a protrusion protruding from the supporting portion in a radial direction. For example, the protrusion may protrude from the supporting portion perpendicular to the main extension direction of the supporting portion.

The supporting portion may comprise two or more separated supporting sections for supporting the attachment portion. The supporting sections may be separated by at least one stop portion. The supporting portion may be configured such that a clamping part or locking member of the attachment portion may only be supported on the supporting sections. Accordingly, the geometry of the attachment portion and/or of the supporting portion may be configured and adapted to each other such that it is not possible to receive the supporting portion in the attachment portion at a position at which the stop portion is provided.

At least one supporting section may be limited by two stop portions. The stop portions may be configured to guide the attachment portion, for example the clamping part or locking member of the attachment portion, into the supporting section. The stop portions may be configured such that a distance between them is enlarged towards free edge portions of the stop portions.

The stop portions may be formed tapering towards a free end portion in radial direction away from the supporting portion. In addition or alternatively, the stop portions may be at least partially formed tapering in circumferential direction about the supporting portion.

In some embodiments, the stop portions may at least or only be provided on the supporting portion such that they protrude in rearward direction of the load carrier away from the supporting frame. When the load carrier is mounted on a vehicle, the stop portions may protrude towards the vehicle. In some configurations, the stop portions may at least or only be provided on the supporting portion such that they protrude away from a loaded two-wheeler such as a bike.

In some configurations, at least one stop portion is integrally formed on the supporting frame. For example, the supporting frame may be deformed such that local material deviations occur on the outer surface of the supporting frame. A stop portion may in some configurations also be provided on the supporting frame by bonding the stop portion to the supporting frame, for example using an adhesive.

In some embodiments, the at least one stop portion is mounted on an outer circumference of the supporting portion. The stop portions and the supporting sections may be provided on a blocking member which is mountable on the supporting portion. The blocking member can be configured to be mounted on the supporting portion by means of one or more fastening members. The fastening members may be screws or rivets.

In some configurations, the movement prevention portion comprises or is made of a material providing higher friction than a surface of the supporting frame. The movement prevention portion may be made of rubber or comprise a rubber coating. The movement prevention portion may comprise a surface portion with increased surface deviation compared to other portions on the supporting frame. For example, the surface portion may comprise an increased waviness or periodic deviation. In other configurations, the surface portion may comprise an increased roughness compared to the surface on other portions of the supporting frame. The surface portion may comprise corrugations and/or grooves and/or scores and/or scratches.

The load carrier may comprise a spacer. A total outer dimension of the supporting portion including a stop portion can be larger than an inner diameter of the receiving section of an attachment portion of the spacer. A width of the receiving section of the spacer may correspond to a width of a supporting section of the supporting portion and/or wherein a width of the receiving section is at maximum 5mm larger than the width of the receiving section.

In some configurations, the before described load carriers may comprise at least one spacer with an attachment portion configured to be supported on the movement prevention portion. The attachment portion and the movement prevention portion may be configured such that a movement prevention is only effective when the spacer is positioned on the movement prevention portion in a first angular orientation range and is ineffective when the spacer is positioned in a second angular orientation range. The attachment portion and the movement prevention portion may be mechanically coded. For example, the attachment portion may be permanently attached to the supporting frame and/or may comprise a groove or channel having a dimension allowing to pass the attachment portion over one or more protrusions in the movement prevention portion such that the attachment portion can be moved from one supporting section to another supporting section without having to detach the attachment portion from the movement prevention portion.

The supporting portion may be a straight portion on the supporting frame. For example, the supporting portion may be a straight portion extending in cross direction of the load carrier.

The locking member of the attachment portion may comprise a narrow width. As mentioned in connection with other configurations, the locking member may comprise a hook like configuration. For example, a width of the locking member can be 2cm or less, for example 1cm or less. In some configurations, the width of the locking member can be less than half of an inner dimension of the receiving section formed in the locking member. In other configurations, the width of the locking member can be smaller than the width of a strap provided in a further attachment portion of the spacer, for example in a load side attachment unit of the spacer. In some configurations, the width of the locking member can be half of the width or smaller than half of the width of the strap or may be one third of the width of the strap or smaller. In some embodiments, the width of the locking member can be up to 5mm smaller than a width of a supporting section between the stop portions.

According to another aspect, a fixation strap for a load carrier is provided. The fixation strap may be used on spacers for the load carrier. The fixation strap may for example be provided in the load side attachment unit of the spacer. Accordingly, a spacer may comprise an attachment portion having such fixation strap. The fixation strap comprises an engaging portion engageable with the strap receiver. The engaging portion may be a toothed portion. The fixation strap further comprises a coupling portion for fixedly attaching the fixation strap on an attachment portion of the spacer. The coupling portion comprises a receiving section for receiving a fixation member. The receiving section may comprise or define an insertion opening. The fixation member may be a screw. The coupling portion may comprise an energy absorbing configuration configured to partially absorb a force transferred from the fixation strap on an inserted fixation member when a predetermined pulling force acting on the fixation strap is exceeded. By providing an energy absorbing configuration, some of the forces acting on the connection between strap and housing of the spacer can be absorbed.

The coupling portion may be configured to perform a relative movement relative to the inserted fixation member against a predetermined resistance when the predetermined pulling force on the fixation strap is exceeded.

The fixation strap may further comprise a base portion with a first opening for receiving the fixation member. An inner dimension of the first opening is larger than an outer dimension of the fixation member. The fixation strap may further comprise a resistance portion for providing the resistance against a movement of the inserted fixation member within the first opening. The resistance portion may be a deformable portion. For example, the resistance portion may be a plastically or elastically deformable portion which is deformed, for example compressed, when the coupling portion is moved relative to an inserted fixation member. The first opening may be a slotted opening which may extend in longitudinal direction of the fixation strap. The base portion may be a reinforcing member. The base portion may be made from metal and/or may comprise a sheet like structure.

The fixation strap may further comprise a covering portion fixedly and immovably provided on the base portion. The covering portion may form the resistance portion. A portion of the coupling portion, which may also be referred to as deformation portion, may extend into the first opening. The covering portion may be made from a material which is less rigid than a material of the base portion.

The covering portion may be molded onto the base portion, for example such that the first opening is partially filled with a material of the covering portion.

The covering portion may comprise a second opening. A forward end portion of the first opening, which forward end portion is closer to the engaging portion than a rearward end portion of the first opening, and at least a rearward end portion of the second opening overlap each other to commonly define an insertion opening for the fixation member.

The covering portion may be configured to deform, for example to plastically deform and/or elastically deform, when the predetermined pulling force on the fixation strap is exceeded and the covering portion is pulled or pushed against an inserted fixation member. The covering portion may be configured such that the inserted fixation member may tear up the covering portion, for example tear up the second opening in the covering portion in which the fixation member is receivable.

In some configurations, a spacer for a load carrier mountable on a vehicle is provided. The spacer comprises a first attachment portion and a second attachment portion coupled to each other by means of a connecting structure. The first attachment portion and/or the second attachment portion and/or the connecting structure may be configured as described in connection with other configurations in the specification. The first attachment portion and/or the second attachment portion comprises a fixation strap. The fixation strap may be configured according to one of the before described fixation straps.

In some configurations, the fixation strap is fixed to the attachment portion by the fixation member such that the fixation member does not exert a clamping force on the coupling portion. The fixation strap may only be attached by said fixation member in formlocking manner and without frictional locking on a housing of said spacer. In this way, it is ensured that a force acting on the strap is entirely transferred via the fixation member.

Other features of the present invention will be apparent from consideration of the information contained above as well as in or in combination with the following detailed description, drawings and claims and configurations given in itemized structure of aspects below. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a side view on a load carrier according to an embodiment.
Fig. 2 shows a side view on a rear portion of the load carrier according to Fig. 1.
Fig. 3 shows details of the rear portion of the load carrier according to Fig. 1.
Fig. 4 shows a front view on the load carrier according to Fig. 1.
Fig. 5 shows a perspective view on a supporting structure according to an embodiment, wherein the supporting structure is in a use configuration.
Fig. 6 shows the supporting structure of Fig. 5 in a stowage configuration.
Fig. 7 shows a perspective view on a supporting structure according to another embodiment, wherein the supporting structure is in a use configuration.
Fig. 8 shows the supporting structure of Fig. 7 in a stowage configuration.
Fig. 9 shows a perspective view on a supporting structure according to a further embodiment, wherein the supporting structure is in a use configuration.
Fig. 10 shows the supporting structure of Fig. 9 in a stowage configuration.
Fig. 11 shows a perspective view on a supporting structure according to a further embodiment, wherein the supporting structure is in a use configuration.
Fig. 12 shows the supporting structure of Fig. 11 in a stowage configuration.
Fig. 13 shows a perspective view on a load carrier with an add-on wheel tray according to an embodiment.
Fig. 14 shows a perspective view on a front portion of the load carrier of Fig. 13.
Fig. 15 shows a perspective view on an attachment portion on the load carrier, wherein the attachment portion is configured for the attachment of the add-on wheel tray.
Fig. 16 shows a perspective view on fixation arms of an add-on wheel tray and adapters coupled to the fixation arms.
Fig. 17 shows an enlarged perspective view on an upper portion of an adapter into which a fixation arm is inserted.
Fig. 18 shows a perspective view of a coupling section of a fixation arm according to an embodiment.
Fig. 19 shows an unlocking state of the coupling section of Fig. 18.
Fig. 20 shows a perspective view on an attachment portion to which an adapter is mounted.
Fig. 21 shows a perspective view on a locking unit for coupling the fixation arm to an adapter according to an embodiment.
Fig. 22 shows a perspective view on another locking unit according to an embodiment.
Fig. 23 shows a perspective view on a further locking unit according to an embodiment.
Fig. 24 shows a perspective sectional view on a further locking unit according to an embodiment.
Fig. 25 shows a sectional view on a further locking unit according to an embodiment.
Fig. 26 shows a sectional view on a further locking unit according to an embodiment.
Fig. 27 shows a perspective view on an adapter mounted to an attachment portion according to an embodiment.
Fig. 28 shows a sectional view of an adapter according to an embodiment.
Fig. 29 shows a perspective view from behind on an add-on wheel tray according to an embodiment.
Fig. 30 shows a perspective front view of the add-on wheel tray of Fig. 29.
Fig. 31 shows a perspective and partially sectional view of a front portion of the load carrier two which the add-on wheel tray of Fig. 29 is mounted.
Fig. 32 shows a perspective view on a load carrier with the add-on wheel tray of Fig. 29, wherein the add-on wheel tray is in a stowage configuration.
Fig. 33 shows a perspective view on a spacer according to an embodiment.
Fig. 34 shows a perspective view on a spacer according to a further embodiment.
Fig. 35 shows a perspective exploded view on the spacer of Fig. 34.
Fig. 36 shows a perspective view on the spacer of Fig. 34.
Fig. 37 shows a carrier side fastening unit according to an embodiment in an opened configuration.
Fig. 38 shows the carrier side fastening unit of Fig. 37 in a close configuration.
Fig. 39 shows a load side attachment unit according to an embodiment.
Fig. 40 shows the load side attachment unit of Fig. 39 in an inactive configuration.
Fig. 41 shows details of the load side attachment unit of Fig. 39 in the inactive configuration.
Fig. 42 shows details of the load side attachment unit of Fig. 39 in an active configuration.
Fig. 43 shows a spacer according to another embodiment.
Fig. 44 shows the spacer according to Fig. 43 mounted to the supporting portion of the load carrier.
Fig. 45 shows a sectional view of the spacer according to Fig. 44.
Fig. 46 shows a sectional view of the spacer according to Fig. 44.
Fig. 47 shows a sectional view of the spacer according to Fig. 44.
Fig. 48 shows a sectional view through the load side attachment portion of the spacer according to Fig. 44.
Fig. 49 shows a sectional view through the load side attachment portion of the spacer according to Fig. 44.
Fig. 50 shows a perspective view of a spacer according to an embodiment.
Fig. 51 shows a perspective view of the spacer of Fig. 50 in a sectional view along a longitudinal middle plane of the spacer.
Fig. 52 shows a side view of the spacer of Figs. 50 and 51.
Figs. 53 to 56 show sectional views of a spacer according to a further embodiment.
Figs. 57 and 58 show different views on a spacer according to another embodiment.
Figs. 59 and 60 show a possible configuration of the carrier side fastening unit according to an embodiment.
Figs. 61 to 68 show different possible configurations of load side attachment units according to embodiments.
Fig. 69 shows a perspective view on a spacer according to a further embodiment.
Figs. 70 to 72 show a spacer according to a further embodiment.
In Figs. 73 to 77 show the function of load side attachment units according to embodiments.
Figs. 78 two 80 show the function of a further configuration of the load side attachment unit according to an embodiment.
Figs. 81 to 85 show another embodiment of a load side attachment unit.
Fig. 86 shows a perspective view on an adjusting mechanism for adjusting a locking unit for locking the carrier side fastening unit in a closed configuration.
Fig. 87 shows a further perspective view on the adjusting mechanism.
Fig. 88 shows a side view on a spacer comprising the adjusting mechanism.
Fig. 89 shows the spacer of Fig. 88 from below.
Fig. 90 shows a side view of a spacer according to an embodiment.
Fig. 91 shows a sectional view of the spacer of Fig. 90.
Fig. 92 shows a sectional side view on a spacer according to an embodiment.
Figs. 93 to 96 shows details of a spacer according to a further embodiment.
Figs. 97 and 98 show details of a spacer according to another embodiment.
Fig. 99 shows a sectional view through the adjusting mechanism of Fig. 86.
Fig. 100 shows a perspective view on an upper portion of a supporting frame comprising a movement prevention portion.
Figs. 101 and 102 show different views on a rear end portion of the fixation strap.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement, interlocking contact.

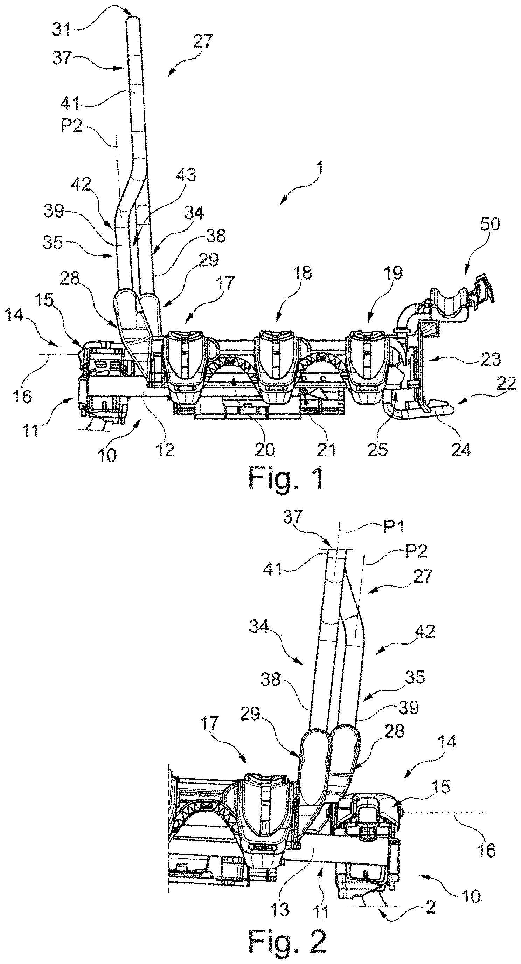

An example load carrier 1 is shown in Figs. 1, 2, 4, 13 and 32. The load carrier 1 comprises a base 10 which is configured to support from below a load to be transported. The base 10 can comprise a supporting structure 11. The supporting structure 11 may comprise a supporting portion, for example two supporting portions 12, 13. Each supporting portion 12, 13 may comprise an elongate member, for example a tube-like member. In a state in which the load carrier 1 is mounted on a trailer coupling 2 of a vehicle, the elongate members may extend in longitudinal rearward direction of the vehicle. The supporting structure 11 may comprise a fork like structure with the elongate members forming prongs of the fork like structure. The supporting structure 11 may be U-shaped with the elongate members forming legs of such a U-shape and coupled to each other via a connecting portion.

The base 10 may comprise a load carrier coupling 14. The supporting structure 11 is coupled to the load carrier coupling 14. For example, the connecting portion of the supporting structure may be coupled to the load carrier coupling 14. The load carrier coupling 14 may comprise an operating member 15, for example a lever. The operating member 15 may be arranged on an upper side of the base 10. The operating member 15 may be configured to transfer the load carrier coupling 14 between a clamping state in which the load carrier coupling 14 can be fixedly held on the trailer coupling 2 and a release state in which the load carrier coupling 14 can be put on or taken off the trailer coupling 2. The operating member 15 is configured to be grasped and moved by a user. The operating member 15 can be configured to be pivoted about a pivot axis 16. The operating member 15 can be configured to be moved between a clamping position in which the load carrier coupling 14 is in the clamping state and a release position in which the load carrier coupling 14 is in the release state. In some embodiments, the pivot axis 16 extends along the extension direction of the elongate members of the supporting portions. In some embodiments, the load carrier 1 is configured such that the pivot axis 16 extends in longitudinal direction of the vehicle when the load carrier 1 is mounted on the vehicle. In the clamping position, the operating member 15 may extend in cross direction of the vehicle and/or of the load carrier 1 and/or in cross direction of, for example perpendicular to the supporting portions 12, 13. In the release position, the operating member 15 may extend in upward direction and may extend substantially upright. The load carrier 1 may be configured such that the operating member 15 is operable and accessible from the side of the load carrier 1. For that, load carrier 1 may be specifically configured as will become apparent later in the description.

The load carrier 1 may be configured as a bike carrier. The load carrier 1 may comprise wheel supports 17, 18, 19 fixedly mounted on the supporting structure 11 of the base 10. Each of the wheel supports 17, 18, 19 is configured to support the wheels of a bike. The wheel supports 17, 18, 19 may at least partially be formed tray-like. Such wheel supports 17, 18, 19 may also be referred to as wheel trays. The wheel supports 17, 18, 19 may be foldable for stowing the load carrier 1. The wheel supports 17, 18, 19 may comprise wheel support sections pivotably coupled to the supporting structure 11.

The load carrier may comprise a carrying frame 20 which is coupled to the supporting structure 11, for example in a manner such that the carrying frame 20 is movable relative to the supporting structure 11, for example to grant access to a vehicle trunk.

Wheel supports 17, 18, 19 may be provided on a carrying frame 20. In some embodiments, the carrying frame 20 is configured to be pivotable by a user for granting access to the vehicle trunk. The carrying frame 20 can be coupled to the supporting structure 11, for example to end portions of the elongate members 12, 13, by means of a pivot 21. A release mechanism 22 operable by a user, for example by foot, may be provided and configured to, upon operation, release the carrying frame 20 for a pivoting movement is provided. A license plate holder 23 may be provided on the front-end portion of the carrying frame 20 at a position above an operating member 24 of release mechanism 22. In some embodiments, the carrying frame 20 and the supporting structure 11 are integrally formed. The carrying frame 20 does not necessarily have to be pivotable. In some configurations, the carrying frame 20 may be fixed on the supporting structure 11 or integrally formed with the supporting structure 11 such that it is not movable between different positions. In some configurations, the carrying frame is shiftable along a predetermined path, for example a straight path or a curved path to move the carrying frame 20 relative to the supporting structure 11.

At the front portion of the carrying frame 20, at least one add-on wheel tray attachment portion 25, 26 can be provided. In the examples as shown in the Figures, two attachment portions 25, 26 are provided. Each attachment portion 25, 26 may be configured for directly supporting or directly establishing a connection with an add-on wheel tray 50 or may be configured to receive an adapter 30 for converting the attachment portion 25, 26 into a coupling member of a coupling interface for attaching the add-on wheel tray 50.

On a rear portion of the carrying frame 20, a supporting frame 27 may be provided. The supporting frame 27 may limit a loading space on the rear portion of the load carrier 1. The supporting frame 27 may be configured to support spacers 100 which are used to couple a load to be transported to the supporting frame 27. The supporting frame 27 may be coupled to the carrying frame 20 by means of connecting portions 28, 29. The connecting portions 28, 29 may be provided on a rear end portion of the carrying frame 20 such that, in case the carrying frame 20 is pivotable, the connecting portions 28, 29 and the supporting frame 27 can pivot with the carrying frame 20. The carrying frame 20, the connecting portions 28, 29 and the supporting frame 27 can form an integral unit. The supporting frame 27 may be a tubular frame.

The supporting frame 27 may comprise a base portion 31 extending in cross direction of the load carrier 1. The base portion 31 may be configured to support spacers 100, for example bike arms. The base portion 31 may be straight. When mounted on a vehicle, the cross direction of the load carrier 1 may correspond to the cross direction of the vehicle. The supporting frame 27 may comprise a leg 32, 33. The leg 32, 33 may extend from the base portion 31. In the embodiments shown in Figs. 1 to 4 and 13, the supporting frame comprises two legs 32, 33. The base portion 31 and the legs 32, 33 may form a U-shape, for example when viewed in front-rear direction of the load carrier 1. Each leg 32, 33 may comprises first leg portion 34, 35 and a second leg portion 36, 37. The first leg portion 34, 35 may be a lower portion of the leg 32, 33. The first leg portion 34, 35 may comprise a free end portion of the leg 32, 33. The free end portion may be coupled to the connecting portion 28, 29. The second leg portion 36, 37 may be an upper portion of the leg 32, 33 connected to the base portion 31 at one end and connected to the first leg portion 34, 35 at the other end. Each first leg portion 34, 35 may comprise a straight section 38, 39. The straight sections 38, 39 of the first leg portions 34, 35 may run in parallel with each other. Each second leg portion 36, 37 may comprise a straight section 40, 41. The straight sections 40, 41 of the second leg portions 36, 37 may extend in parallel with each other. At least one straight section 40, 41 of the second leg portions 36, 37 may extend in parallel with at least one straight section 38, 39 of the first leg portions 36, 37. The base portion 31 and the first leg portions 34, 35 can be configured to extend in a first plane P1. In some embodiments, one of the second leg portions 36, 37 extends in the first plane P1. Accordingly, the base portion 31 and the first leg portions 34, 35 and one second leg portion 34 may be formed in the first plane P1. A second one 35 of the second leg portions 34, 35 may extend outside of the first plane P1, for example in a second plane P2 which may be parallel to the first plane P1 or at an angle with respect to the first plane P1.

The supporting frame 27 may comprise a bulging portion 42. In the bulging portion 42, the supporting frame 27 is bulged in rearward direction of the load carrier 1, i.e. towards a load carrier coupling side end of the load carrier 1. In the bulging portion 42, a portion of the supporting frame 27 may project in rearward direction of the load carrier 1 or protrude in rearward direction or extend in a rearwardly offset manner compared to other portions of the supporting frame 27. In this way, additional storage space on the load carrier may be provided in the bulging portion of the supporting frame 27, for example in one of two legs of the supporting frame 27. This may add additional room for loads to be transported. The bulging portion 42 may be configured to provide additional accommodating space 43 on a front side of the supporting frame 27 by comprising a recess on the load side, for example on the front side or a side facing towards the front of the load carrier 1, on a side which faces the user when placing loads on the load carrier. Such an accommodating space may be designed to accommodate portions of a bike, for example a crank arrangement of a bike. In other words, the bulging portion 42 provides more space in longitudinal direction on one side of the supporting frame 27, for example by defining a recess on the front side and a protrusion on the rear side. To create the bulging portion, the first leg portions 34, 35 may be offset to each other in front rear direction of the load carrier 1. One first leg portion 34 may extend near an operating region of the operating member 15 of the load carrier coupling 14 or near an accessing region for accessing the operating member 15 such that accessing and operating the operating member 15 is possible. This first leg portion 34 may be provided without the above bulging portion. The other first leg portion 35 may comprise or define the bulging portion and extend further rearward on the load carrier 1 compared to first leg portion 34.

The supporting frame 27 may be configured asymmetric with respect to a middle plane which runs through the center of the base portion 31 of the supporting frame 27. The middle plane may extend perpendicular to the first plane P1 and the second plane P2. The middle plane may intersect with the base portion 31 in a longitudinal middle portion of the base portion 31. The base portion 31 may be formed straight. The supporting frame 27 may be configured such that a portion located on a first side of the middle plane is offset along the middle plane with respect to a portion located on a second side of the middle plane at the same level.

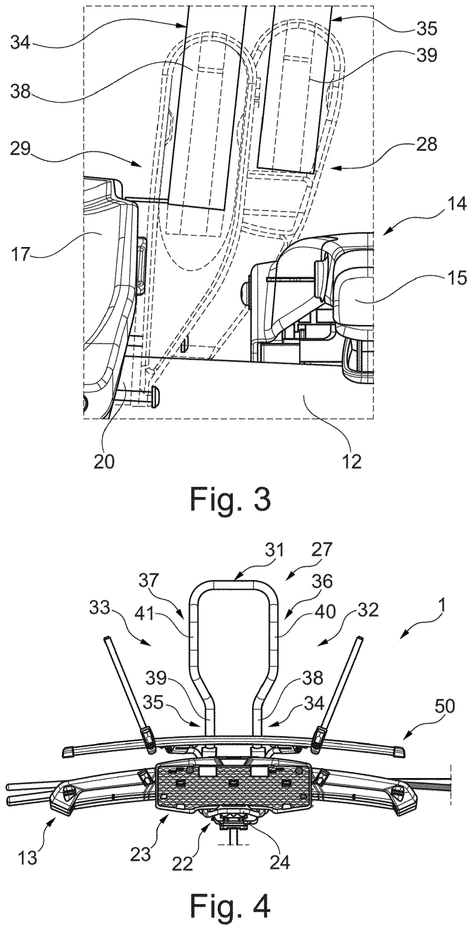

The connecting portions 28, 29 may be arranged offset to each other in front rear direction of the load carrier 1. A first connecting portion 28 may be arranged further rearward on the load carrier than a second connecting portion 29. In this way, a larger space is available behind the second connecting portion 29 allowing a user to access the operating member 15 of the load carrier coupling 14. The connecting portions 28, 29 may be configured to support the first leg portions 34, 35 at different heights as is shown in Fig. 3. The connecting portions 28, 29 may have different lengths in upward direction.

In cross direction, the distance between the lower leg portions can be reduced compared to the distance between the upper leg portions. This renders the supporting frame 27 compact while providing a sufficiently large base portion 31.

The wheel supports 17, 18, 19 may each comprise two wheel support sections. At least one wheel support 19 may be configured to provide an additional function other than supporting the wheel of a bike. For example, in some embodiments, the front wheel support 19 may comprise additional features like rear lighting 27 of the load carrier 1 or add-on wheel tray supporting portions 19.1 used to provide a support for an add-on wheel tray 50. Different types of add-on wheel trays will be described later. Such add-on wheel trays 50 may be configured to be supported on the wheel support 19 in addition to being supported on the supporting structure 11. In this way, such add-on wheel trays 50 may carry a higher weight.

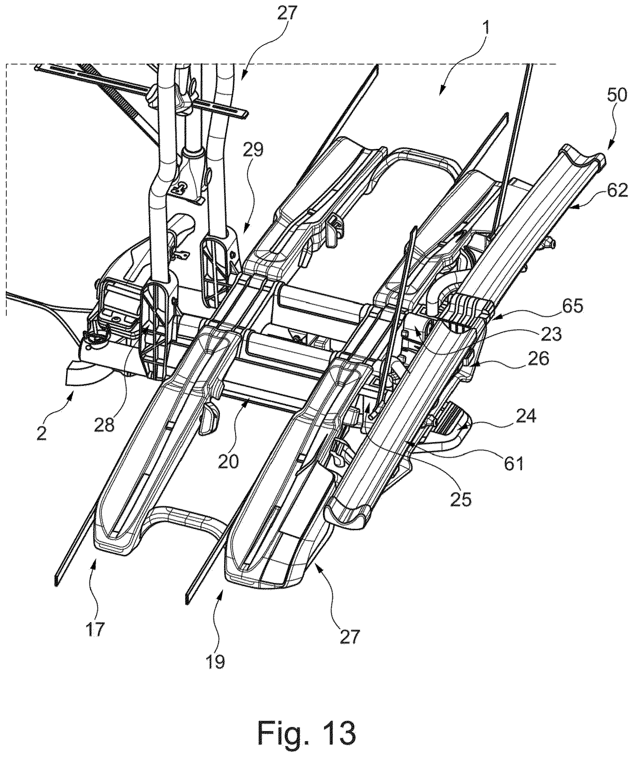

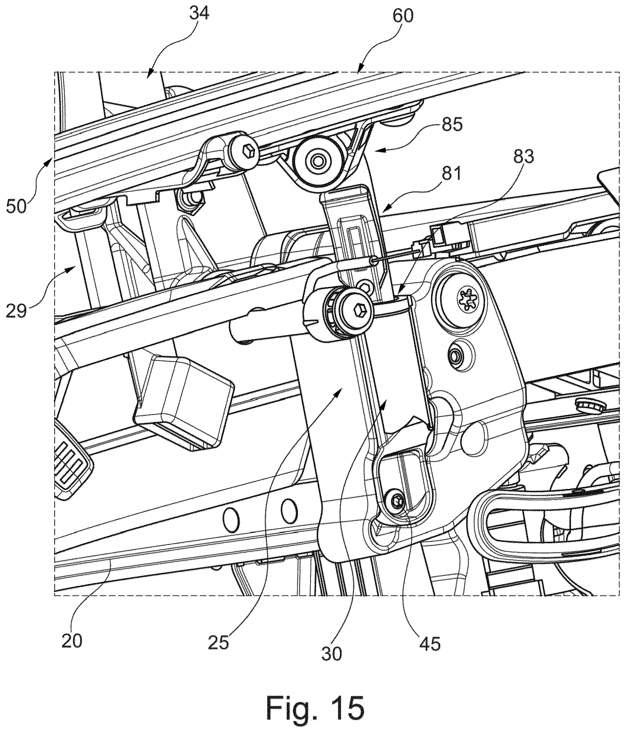

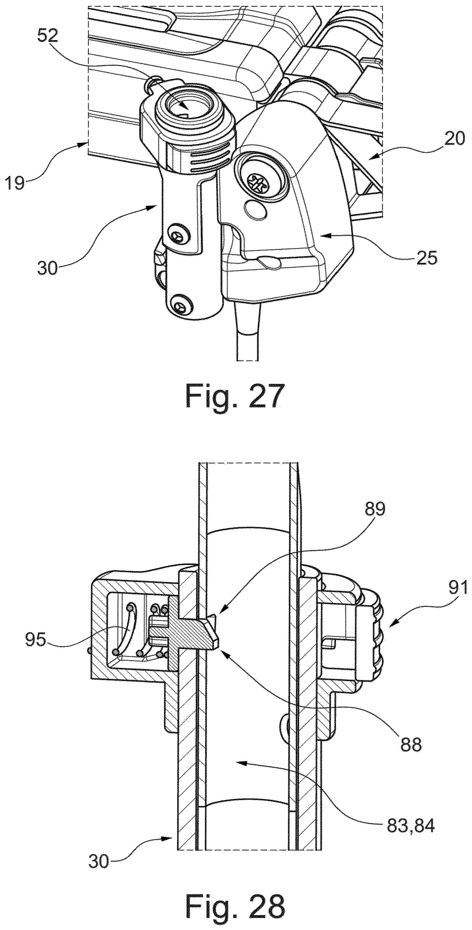

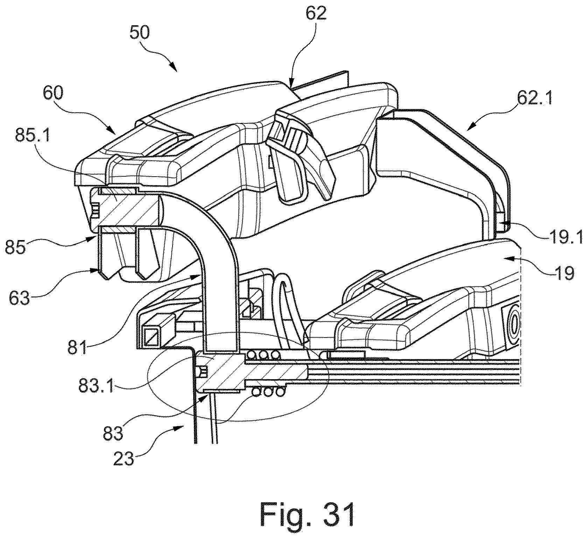

As mentioned before, the carrying frame 20 may be configured to support an add-on wheel tray 50, as for example shown in Figs. 1, 4, 13 and 31. For that, at least one add-on wheel tray attachment portion 25, 26 can be provided on the front portion of the carrying frame 20, as for example shown in Figs. 13 to 15, 20, 27 and 31. In the examples, two attachment portions 25, 26 are provided. Each attachment portion 25, 26 may be configured for directly supporting or directly establishing a connection with an add-on wheel tray 50, as for example shown in Fig. 31, or may be configured to receive an adapter 30, for example an adapter as shown in Figs. 15, 16 and 17, for converting the attachment portion 25, 26 into a coupling member of a coupling interface for attaching the add-on wheel tray 50, see for example Figs. 15, 20 and 27 where an adapter 30 is inserted into wheel tray attachment portions.

In the example as shown in Fig. 31, the carrying frame comprises an attachment portion 25 which is configured to receive a fixation member 83.1 for attaching the add-on wheel tray 50. The fixation member 83.1 is a bolt. However, it is to be noted that other fixation members can be used instead of a bolt. The attachment portion 25 may comprise a threaded opening for an engagement with a threaded portion of the bolt. The attachment portion 25 may be provided at a longitudinal front end of the carrying frame 20.

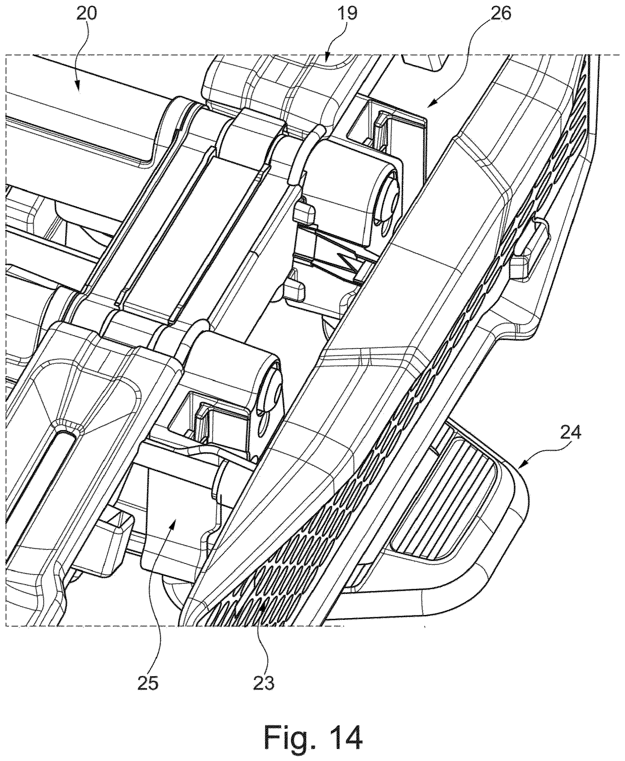

In the example as shown in Figs. 14, 15, 20 and 27, the attachment portions 25, 26 are configured to receive an adapter 30. In some examples, the attachment portions are configured to receive the adapter from above. In other words, the attachment portions may comprise recesses which allow an insertion of the adapter into the attachment portions from above. In some examples, the attachment portions may be configured to allow a fixation of the adapters 30 to the attachment portions by means of a fastening device 56, such as a screw.

According to an aspect, an add-on wheel tray 50 for a rear mounted bike carrier is provided. The add-on wheel tray may also be referred to as accessory wheel tray which is configured to be mounted on a bike carrier by a user for increasing the number of bikes that can be supported on the bike carrier. The add-on wheel tray 50 comprises a supporting structure 60 which is configured to support wheels of a bike. The supporting structure 60 is configured transferable between a use configuration in which the supporting structure 60 has an enlarged dimension and a stowage configuration in which the supporting structure 60 has a reduced dimension. The add-on wheel tray 50 may comprise a coupling structure 80 which is configured to securely connect the supporting structure 60 with a bike carrier, for example a bike carrier 1 as described in other sections of this specification.

The supporting structure 60 comprises a first supporting portion 61 and a second supporting portion 62. Each supporting portion is configured to support a wheel of a bike. Each supporting portion may comprise a fixation arrangement for fixing the wheel on the supporting portion. For example, each supporting portion may comprise a strap mounted on one lateral side of the supporting portion and a strap receiver mounted on an opposite lateral side of the supporting portion, wherein the strap receiver is configured to receive and lock a free end portion of the strap.

The supporting structure may be configured such that in the use configuration, a distance between the first supporting portion 61 and the second supporting portion 62 is larger than in the stowage configuration. For that, the supporting portions can be arranged movable with respect to each other. In particular, the supporting portions may be provided on the supporting structure to be translatory and/or rotatably movable with respect to each other for transferring the supporting structure between the use configuration and the stowage configuration.

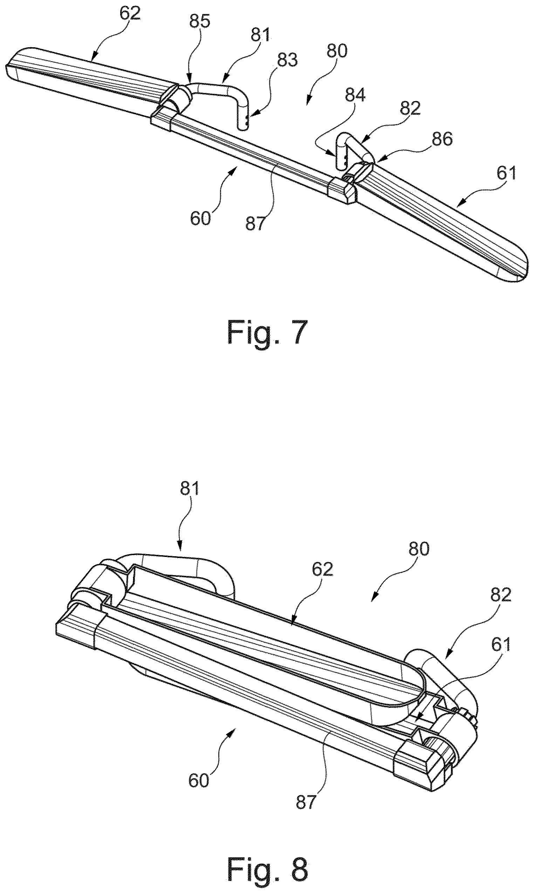

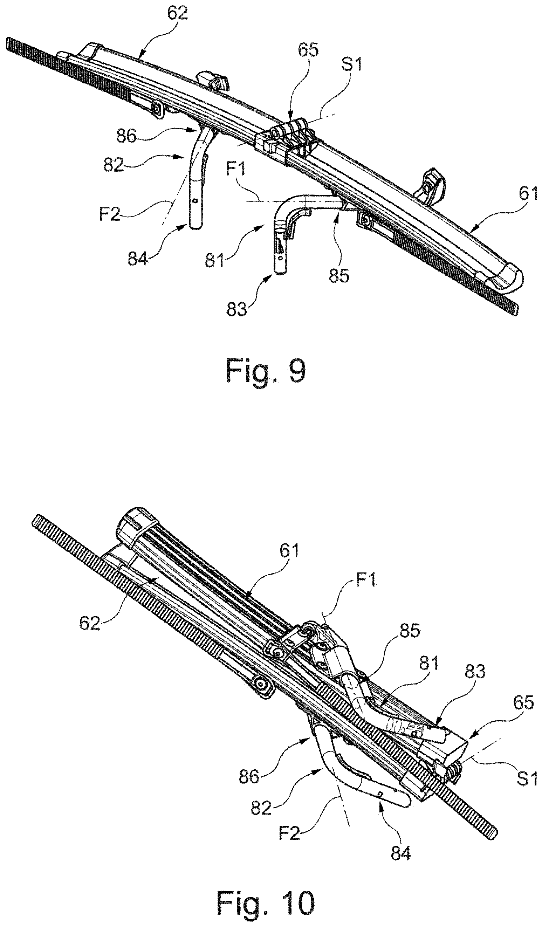

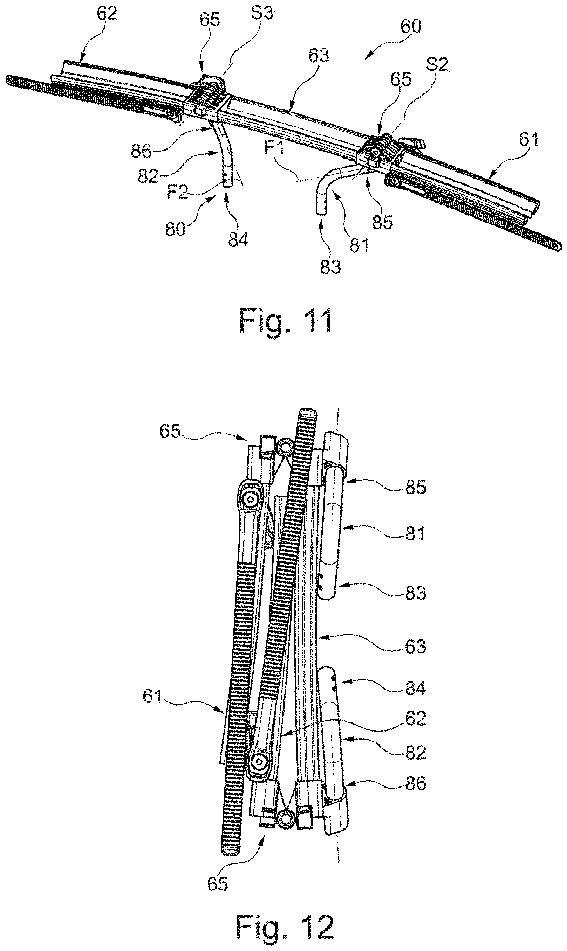

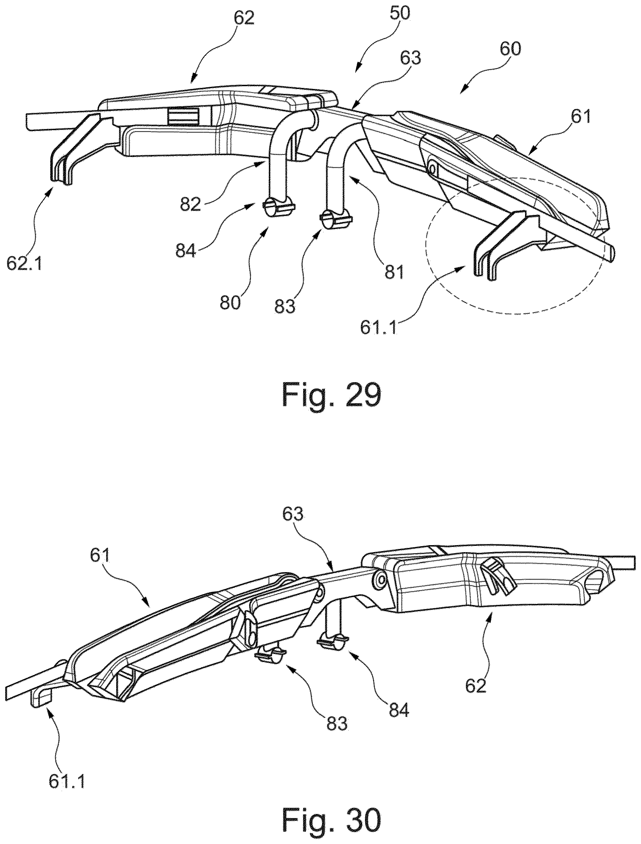

In some embodiments, the supporting structure 60 is foldable. For example, the supporting structure can be foldable in two parts as shown in Fig. 9 or can be foldable in three parts as is for example shown in Fig. 11. The first supporting portion 61 and the second supporting portion 62 can be hingedly coupled to each other. As is shown in Figs. 9, 10, 13 and 32, the first supporting portion 61 and the second supporting portion 62 may be hingedly coupled directly to each other. In such a configuration, the first supporting portion 61 and the second supporting portion 62 may be arranged movable about a single pivot axis S1 defined by a hinge 65 coupling the supporting portions to each other. In some configurations, the first supporting portion 61 and the second supporting portion 62 are configured to be foldable into a V shape. In another configuration, the first supporting portion 61 and the second supporting portion 62 can be indirectly coupled to each other via an intermediate portion 63. Example configurations comprising such an intermediate portion 63 are shown in Figs. 7, 8, 11, 12, 29 and 30. Each supporting portion 61, 62 is hingedly coupled to the intermediate portion 63. For example, the first supporting portion 61 can be hingedly coupled to the intermediate portion 63 by means of a hinge 65 such that it is rotatable about a first pivot axis S2 and the second supporting portion 62 can be hingedly coupled to the intermediate portion 63 by means of a hinge such that it is rotatable about a second pivot axis S3. The configuration may be such that the first pivot axis S2 and the second pivot axis S3 extend in parallel with each other and/or such that both pivot axes extend in longitudinal direction of the load carrier when the add-on wheel tray 50 is mounted on the load carrier 1.

In some configurations, one or more of the hinges 65 coupling the supporting portions to each other directly or indirectly may be configured such that the pivot axis defined by the respective hinge extends offset to the supporting portions. The hinges may be configured such that the pivot axis is arranged at a distance from the supporting portions or other parts of the supporting structure. In other words, the pivot axis and the respective hinge may be offset in upward direction when the first supporting portion and the second supporting portion are in an unfolded configuration. The hinge may be configured to hold an end portion of the respective supporting portion rotatable about and at a distance from the pivot axis.

In some configurations, the supporting structure 60 comprises a stop configuration defining a position of the first supporting portion 61 and the second supporting portion 62 in the use configuration. As described before, a hinge may be provided in which the pivot axis is offset to the supporting portions. Accordingly, end portions of the supporting portions that are coupled to the hinge can abut against each other in the use configuration. Other constructions may be implemented. The stop configuration may limit a movement of the first supporting portion 61 and of the second supporting portion 62 in an application direction of the force exerted on the first supporting portion 61 or the second supporting portion 62 by a wheel of a supported bike. In some configurations, the supporting structure comprises a fixation portion for holding the first supporting portion 61 and the second supporting portion 62 together in the stowage configuration as is for example shown in Fig. 10. For example, a snap in mechanism may be provided by which the first supporting portion 61 and the second supporting portion 62 are temporarily locked for stowing purposes in a folded configuration. The fixation portion may be provided in a hinge 65 coupling the first supporting portion 61 and the second supporting portion 62.

The supporting structure 60 may be configured foldable together with foldable wheel trays of the bike carrier when the add-on wheel tray is coupled to the bike carrier. For example, each of the first supporting portion 61 and the second supporting portion 62 may be operatively coupled to foldable portions of the foremost wheel tray on a bike carrier such that folding the wheel tray on the bike carrier leads to a folding of the add-on wheel tray.

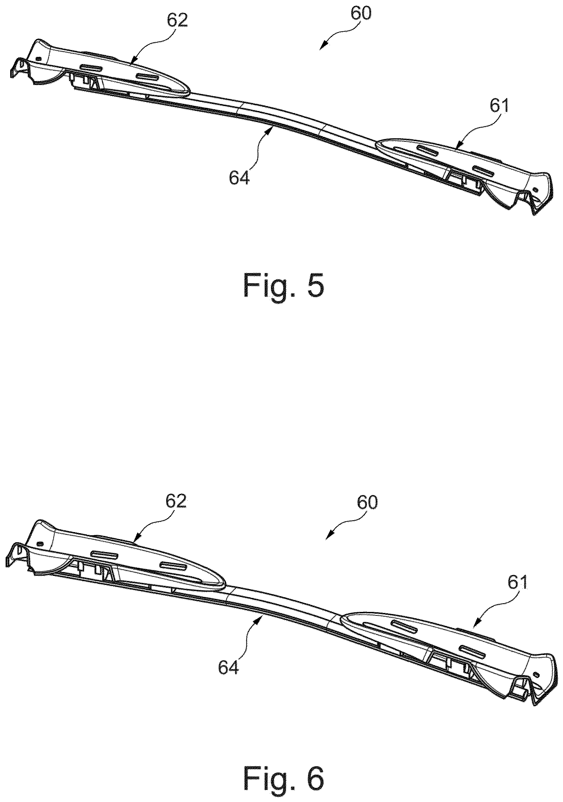

In another configuration, the supporting structure 60 may be configured telescopable. The first supporting portion 61 and the second supporting portion 62 may be provided translatory movable with respect to each other. For example, the first supporting portion 61 and the second supporting portion 62 may be movably supported on an elongate guiding member 64. Such a configuration as shown in Figs. 5 and 6. Fig. 5 shows an extended configuration of a supporting structure 60 and Fig. 6 shows a retracted configuration of the supporting structure 60. The elongate guiding member 64 may be a supporting profile which is suitably configured to shiftably support the first supporting portion and the second supporting portion. In some configurations, the first supporting portion 61 and the second supporting portion 62 are movably guided on the intermediate portion 63. The intermediate portion 63 may comprise or may be integrally formed with the elongate guiding member 64. The intermediate portion 63 may be an integral part of the coupling structure 80 for coupling the supporting structure 62 a bike carrier. In some configurations, the intermediate portion 63 may be configured as or may comprise a fixation arm coupling portion 87 of the coupling structure 80 as is for example shown in Fig. 7 and Fig. 8.

According to an aspect, a coupling structure 80 for coupling an add-on wheel tray 50 to a bike carrier 1 is provided. The coupling structure 80 may be suitably used in an add-on wheel tray 50 as described before, in particular in an add-on wheel tray 50 comprising a supporting structure 60 which is transferable between the use configuration and the stowage configuration. However, it is noted that the coupling structure 80 may also be used in an add-on wheel tray with a supporting structure which is not transferable between the use configuration and the stowage configuration, for example an add on wheel tray 50 comprising a single, continuous supporting portion, for example formed by a continuous profile, as is shown in Fig. 4.

Exemplary configurations of the coupling structure 80 are shown in Figs. 7 to 12 and 29 to 30. In general, the coupling structure 80 comprises at least one fixation arm 81, 82. In the shown embodiment, the coupling structure 80 comprises two fixation arms 81, 82. Each fixation arm 81, 82 may comprise a tubular profile. Each fixation arm 81, 82 may comprise a coupling section 83, 84 and a supporting section 85, 86.

The supporting section 85, 86 is configured to be coupled to the supporting structure 60 of an add-on wheel tray 50. The supporting section 85, 86 may comprise a straight portion. The supporting section 85, 86 may be configured to be pivotably attached to the supporting structure 60, for example attached to the supporting structure 60 from below. The supporting section 85, 86 may be configured to be hingedly mounted on the supporting structure 60, for example by means of a bracket configured to be attached to the supporting structure 60 and configured to hold the supporting section 85, 86 pivotably movable about a pivot axis F1, F2. In some configurations, the supporting section 85, 86 comprises a straight portion and the pivot axis coincides with a middle axis of the straight portion. In some embodiments, the supporting section 85, 86 may be coupled to the supporting structure 60 such that the pivot axis F1, F2 extends cross to a main extension direction of the supporting structure 60 and/or in some configurations to a pivot axis S1, S2, S3 about which a supporting portion 61, 62 is pivotable, for example at an angle of about 45 degrees with respect to the main extension direction. The main extension direction of the supporting structure 60 may be a longitudinal direction of the supporting structure 60. The supporting section 85, 86 and the coupling section 83, 84 of the respective fixation arm may in some configurations extend at an angle of 90 degrees.

The coupling section 83, 84 is configured detachably mountable to the bike carrier 1. In some embodiments, the coupling section 83, 84 is configured to be mounted to and detached from the bike carrier 1 without tools. In other words, the coupling structure 80 may be configured for a tool-free operation by a user. In other embodiments, each coupling section 83, 84 is configured for a fixation on the bike carrier 1 using a tool (see for example the configuration in Fig. 31 in which a bolt 83.1 is used as fixation member for coupling the coupling section 83 to the bike carrier 1). In some embodiments, the coupling section 83, 84 is configured detachably mountable to the bike carrier 1 from vertically above when the bike carrier is mounted on a vehicle, as is for example the case in the configurations shown in Figs. 7 to 12. For example, each coupling section 83, 84 may be configured for an insertion into an attachment portion 25, 26 and/or into an adapter 30 mounted on the attachment portion 25, 26 from vertically above. In some configurations, each coupling section 83, 84 may be formed straight or may comprise a straight portion to be received in the attachment portion 25, 26 and/or in the adapter 30.

In some embodiments, at least one coupling section 83, 84, for example each coupling section 83, 84, may be configured for an engagement with the bike carrier 1. For example, at least one coupling section 83, 84 may be configured for a snap-in engagement. At least one coupling section 83, 84 may be configured to be interlocked with an attachment portion 25, 26 of a bike carrier 1. In some configurations, at least one coupling section 83, 84 is directly engageable with the attachment portion 25, 26. In other configurations, at least one coupling section 83, 84 is indirectly engageable with the attachment portion 25, 26 by means of an adapter 30 mounted on the attachment portion 25, 26. The adapter 30 may comprise a main body 51 and a recess 52 for receiving a coupling section. The recess 52 may be a cylindrical opening. The main body 51 may comprise an engaging portion 53 configured for an insertion into a corresponding recess in the attachment portions 25, 26. The engaging portion 53 may be formed as a hook portion. The engaging portion 53 may be formed on the main body such that it is hookable into the attachment portion 25, 26 from above. For fixing the main body 51 to the attachment portion 25, 26, the main body comprises a fixation opening 54 for receiving a fastening member 56, such as a screw. The opening 54 may be provided in a lower end portion of the main body 51 and the engaging portion may be provided on an upper portion of the main body 51.

At least one coupling section 83, 84 may be formed as a first coupling partner of a plug and socket type coupling arrangement, wherein a second coupling partner of such a coupling arrangement may be formed by the before mentioned attachment portion 25, 26 or the before mentioned adapter 30.

At least one coupling section 83, 84 may be configured to automatically engage with the attachment portion 25, 26 or the adapter 30 upon inserting the coupling section 83, 84 in the attachment portion 25, 26 or the adapter 30.

In general, an engaging configuration may be provided by which an engagement is achieved by interlocking the coupling structure 80 with the load carrier 1, for example with an attachment portion 25, 26 of the load carrier 1 or with an adapter 30 received in the attachment portion 25, 26. The engaging configuration may comprise a movable engaging portion 88 and a receiving portion 55 in the attachment portion 25, 26 or in the adapter 30, for example an opening 89, a recess, a cut-out or a protrusion. The engaging portion 88 may be biased towards a locking position in which it is able to engage with the receiving portion 55, for example by an urging member 95, for example by a spring.

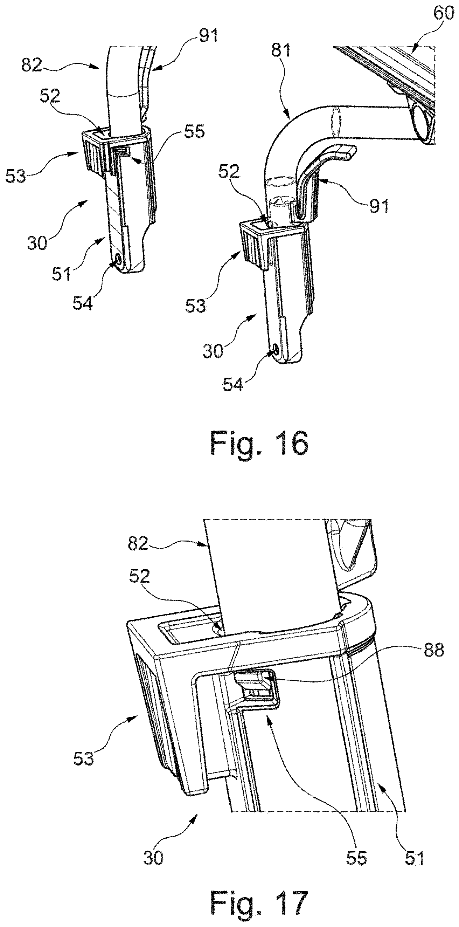

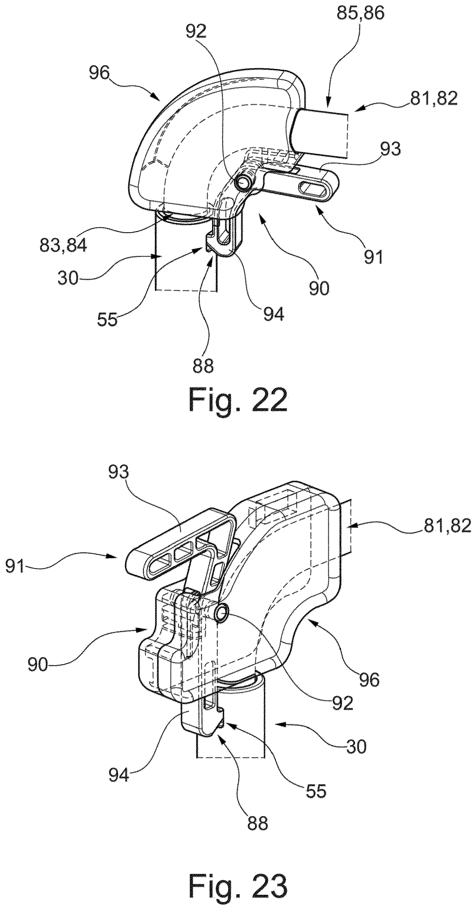

In some configurations, the movable engaging portion 88 is provided on the coupling structure 80 and the receiving portion 55 is provided on the adapter 30 or on the attachment portion 25, 26. Examples of a coupling structure 80 comprising the movable engaging portion 88 are shown in Figs. 16 to 19 and 21 to 24.

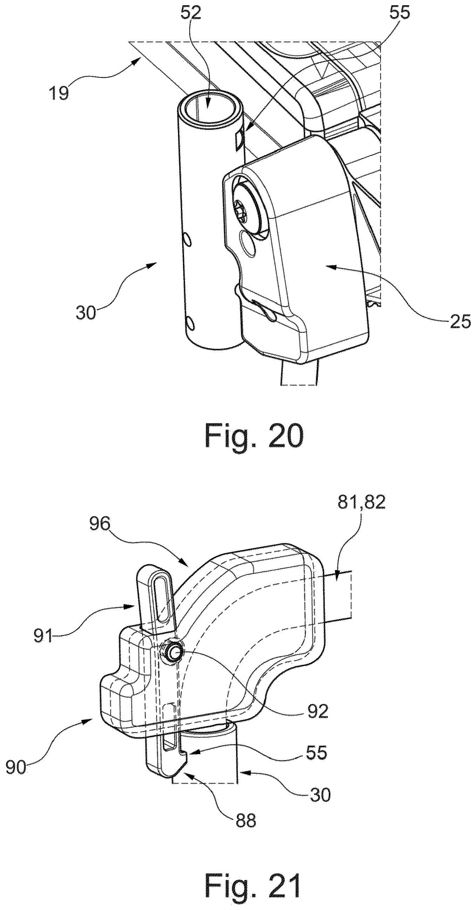

In some of these configurations, the engaging portion 88 is configured to engage with the receiving portion 55 from outside, for example in a manner as shown in Figs. 21, 22 and 23. In some of these configurations, the engaging portion 88 is configured to engage with the receiving portion 55 from inside, for example in a manner as shown in Figs. 16 to 19 and 24. An engaging mechanism comprising such engaging portion may be provided on the coupling structure 80.

At least one coupling section 83, 84 may comprise an engaging unit with an engaging portion 88. In some embodiments, the engaging portion 88 may be biased towards a locking position in which the engaging portion 88 protrudes from the coupling section 83, 84. In some embodiments, the coupling section 83, 84 may be configured as a male part configured to be received in a female part, for example the adapter 30 or the attachment portion 25, 26 (see for example the configuration as shown in Fig. 15). In other embodiments, the coupling section 83, 84 may be configured as a female part configured to be slipped on the adapter 30 or the attachment portion 25, 26, or to receive a portion of the adapter 30 or of the attachment portion 25, 26 therein. In some embodiments, the engaging portion 88 may be arranged in a coupling section 83, 84 such that it is movable between a protruding position in which it protrudes from an opening 89 in the coupling section 83, 84 and can engage with a recess 55 formed in the adapter 30 and a retracted position in which it does not protrude from the opening 89.

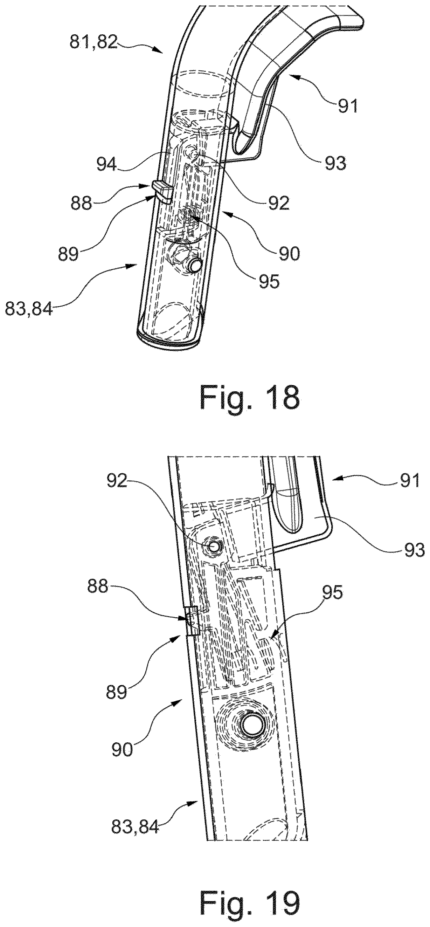

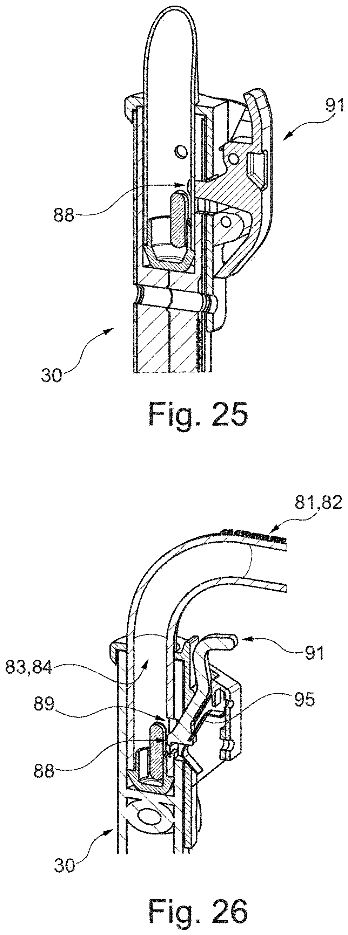

A release mechanism 90 may be provided for releasing an engagement of the engaging portion. The release mechanism and the engaging unit comprising the engaging portion 88 may form a locking unit. The locking unit may be provided on the coupling structure 80 (see for example the configurations in Figs. 18, 19, 21, to 24), on the adapter 30 (see for example the configurations in Figs. 25 to 28) or directly on the attachment portions 25, 26. The release mechanism 90 comprises an operating member 91 provided as a first lever portion and operatively coupled to the engaging portion 88. The operating member 91 may be a lever. The lever 91 may be biased by an urging member 95 towards a locking position in which the engaging portion 88 is in an engaging position. The urging member may apply a force on a second lever portion 94 provided on an opposite side of a pivot member 92 about which the operating member 91 is pivotable. The operating member may be supported in the coupling section 83, 84 or may be supported on a housing 96 coupled to an outer side of the coupling section. The operating portion 91 is manually operable by a user.

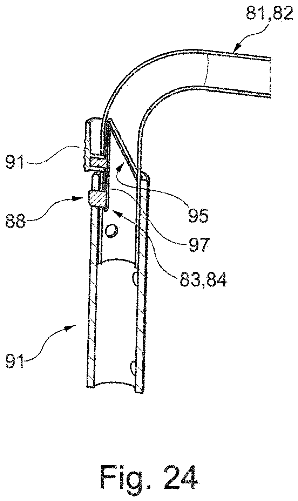

The engaging portion 88 may be supported on an end portion of a spring 95 arranged in the coupling section 83, 84 (see Fig. 24). The operating member 91 may be coupled to the end portion and may protrude out of the coupling section 83, 84. A user may push the operating member 91 radially inward which releases an engagement of the engaging member 88 (see Fig. 24).

According to an aspect, an add-on wheel tray kit is provided. The add-on wheel tray kit comprises an add-on wheel tray 50, for example an add-on wheel tray 50 as described before, and an adapter 30 for adapting a designated attachment portion 25, 26 on a bike carrier 1 to a coupling section 83, 84 of the add-on wheel tray 50. The adapter 30 may be mounted to the attachment portion 25, 26 by a user. As soon as the adapter 30 is mounted, the add-on wheel tray 50 may be coupled to the bike carrier 1 by coupling the coupling section 83, 84 to the attachment portion 25, 26 via the adapter 30. The attachment portion may be configured and positioned on the bike carrier 1 as described in other sections of this specification.

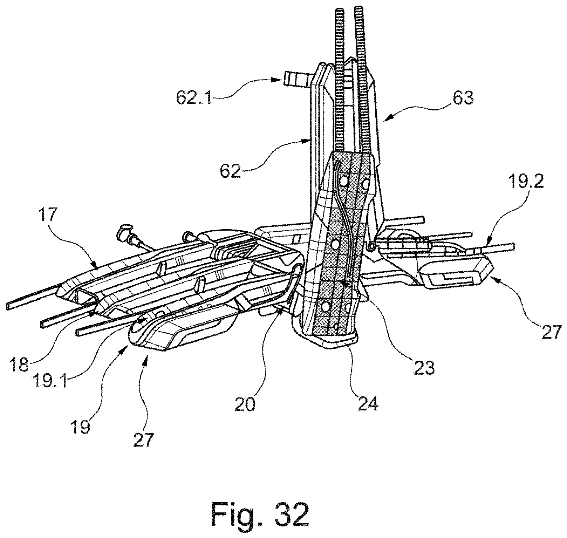

Optionally, the load carrier 1 may comprise auxiliary supporting sections 19.1, 19.2 providing supports for the add-on wheel tray 50 that are arranged more outward in cross direction of the load carrier than the attachment portions 25, 26. Such supporting sections may be provided on the foremost or outermost wheel tray on the load carrier at a position which may be located beyond an extension region of the carrying frame 20. In this way, the add-on wheel tray may be supported at outer portions which provides additional stability, a better load distribution and even a higher load capacity on the add-on wheel tray. In some embodiments, additional supports are provided in addition to the fixation arms 81, 82. The additional supports may be arranged further outwards towards the free ends of the wheel tray compared to the fixation arms 81, 82. In some configurations, at least one of the first supporting portion 61 and the second supporting portion 62 comprises a support 61.1, 62.1 configured to support the supporting portion 61, 62 on the outermost wheel tray 19 of the bike carrier 1. The support 61.1, 62.1 may be provided on the first supporting portion 61 and the second supporting portion 62 such that it extends from the supports towards the outermost wheel tray 19. Each support may be configured to contact a designated auxiliary supporting portion 19.1, 19.2 provided on the first supporting portion 61 and the second supporting portion 62 (see for example Fig. 31 and 32). The auxiliary supporting section 19.1, 19.2 may comprise a protrusion or projection provided on the respective supporting portion. In general, the support 61.1, 62.1 may be configured to engage with the designated auxiliary supporting portion 19.1, 19.2 on the respective supporting portion 61, 62 when the add-on wheel tray 50 is mounted on the bike carrier and optionally transferred into the use configuration if the add-on wheel tray 50 is configured transferable between a use configuration and a stowage configuration, for example in a manner as described above. A lighting configuration 27 may be provided on the outermost wheel tray 19.

Further disclosed are spacers 100, 200 for load carriers 1. In bike carriers, the spacers 100, 200 are also called bike arms. Such spacers 100, 200 may be configured to be used for different purposes. For example, there are spacers 100 which are configured to support a portion of the load to be transported on the load carrier 1. In bike carriers, such spacers 100 are also be referred to as bike-to-frame arms. The spacers 100 may then have the function of fixing a portion of the bike, for example on the bike frame, relative to a supporting portion 31 on the load carrier 1. There are also spacers 200 which are configured to couple different loads to each other while holding them at a distance from each other. In bike carriers, such spacers 200 may also be referred to as bike-to-bike arms and are often used to couple a bike carried by an add-on wheel tray 50 to the adjacent bike on the load carrier 1.

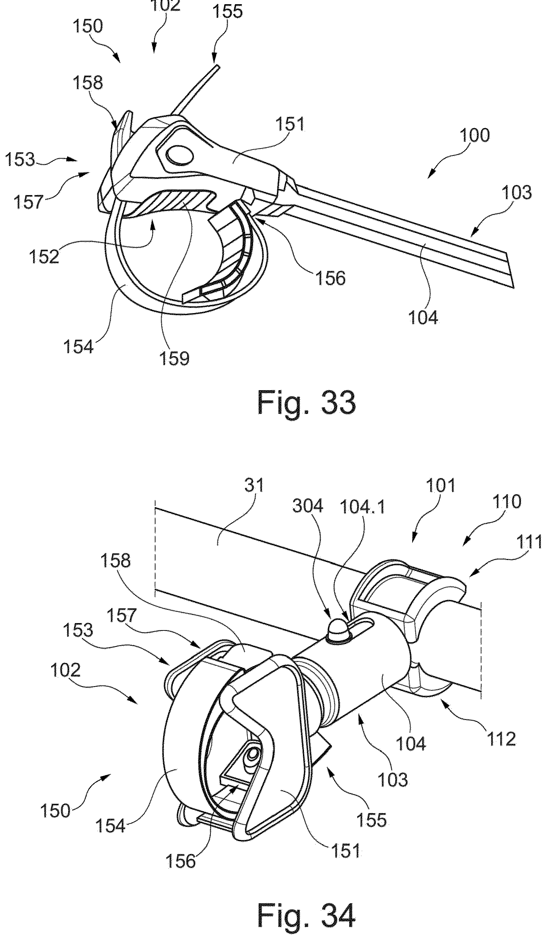

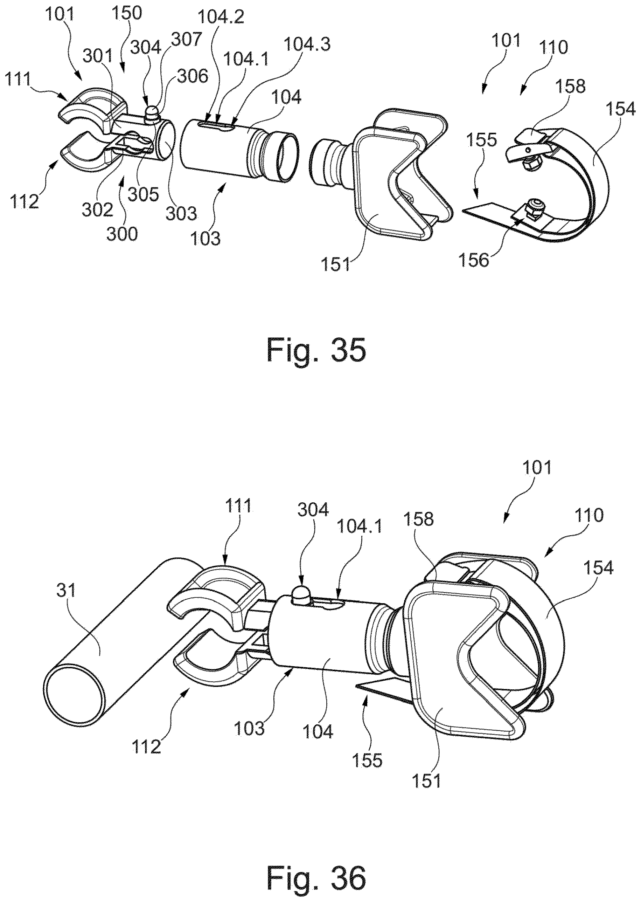

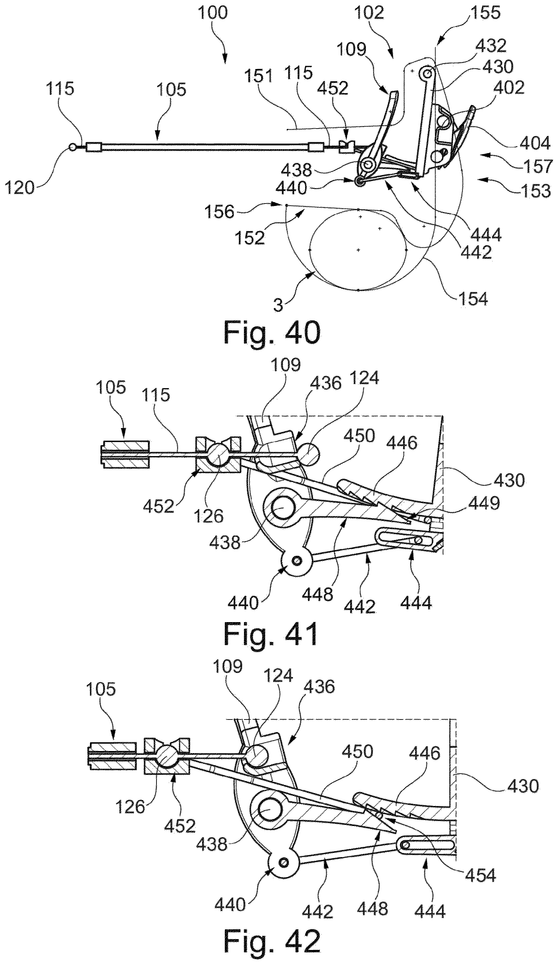

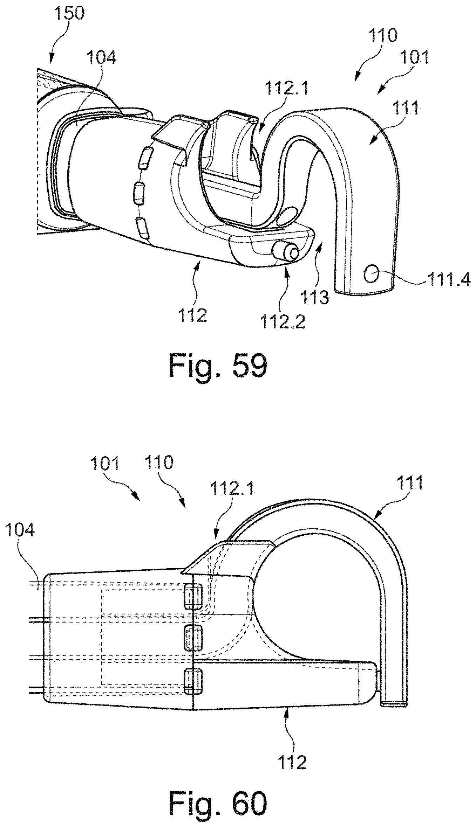

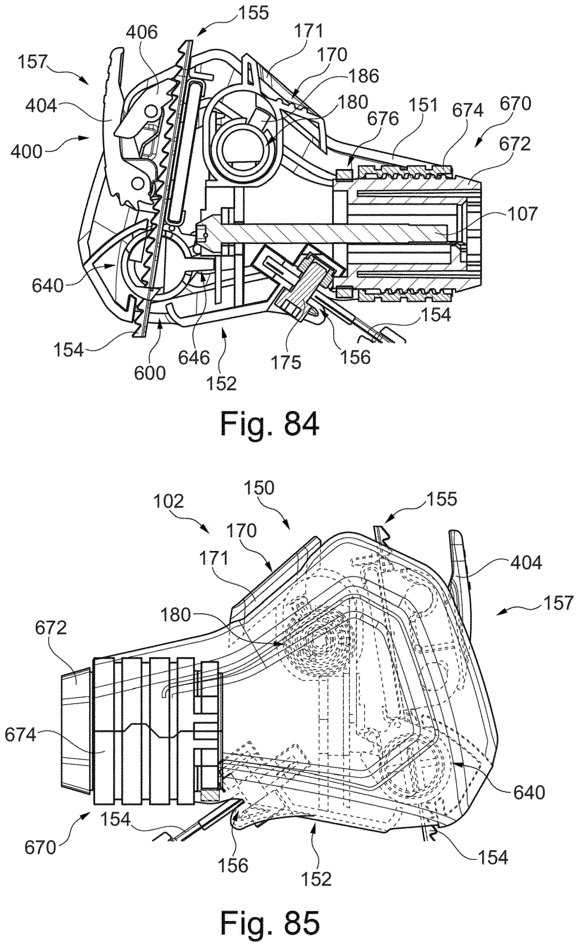

Examples of spacers are shown in Figs. 33 to 126, wherein some examples show bike-to-frame arms 100 and other examples show bike-to-bike arms 200.

Such spacers 100, 200 may comprise a first attachment portion 101, 201 and a second attachment portion 102, 202. In some examples, the first attachment portion 101 is configured to be removably coupled to the supporting portion 31 of a load carrier 1. In some examples, the first attachment portion 201 is configured to be removably coupled to a bike. In all examples, the second attachment portion 102, 202 is configured to be removably coupled to a bike.

The first attachment portion 101, 201 and the second attachment portion 102, 202 are connected to each other by means of a connecting structure 103, 203. The connecting structure 103, 203 may comprise a hollow profile 104, 204, such as a tube. The hollow profile 104, 204 can be elongate. The connecting structure 103, 203 may be a rigid structure or may be configured such that it is transferable into a rigid state during use of the spacer 100, 200. For example, the connecting structure 103, 203 may consist of several parts that are coupled to each other by a pivot to be movable relative to each other if desired and that are lockable to each other to block a movement. In this way the spacer may be foldable into a non-use configuration or may be flexibly adaptable in shape, for example to the shape of loads. The spacers 100, 200 may comprise a force transfer arrangement 105 accommodated in the spacer 100, 200, for example at least partially in said connecting structure 103, 203. The force transfer arrangement 105 may be configured to transfer pushing and/or pulling forces and may comprise a rod, a bar or a wire, for example a Bowden cable.

Fig. 33 shows a first example of components of a spacer 100 according to an embodiment. The spacer 100 comprises a first attachment portion (not shown) and a second attachment portion 102. The second attachment portion 102 is coupled to the first attachment portion by means of a connecting structure 103. The connecting structure 103 comprises a hollow profile 104.

The second attachment portion 102 is configured as a load side attachment unit 150. The spacer 100 is configured as a bike to frame arm which is used to couple a portion of the bike to the frame structure of the load carrier. More precisely, the second attachment portion 102 is configured to attach to the frame of a bike whereas the first attachment portion is configured to attach to the frame of the load carrier.

The load side attachment unit 150 comprises a housing 151. A contact portion 152 is provided on the housing 151. In the embodiment, the contact portion 152 is provided at a position of the housing 151 allowing a contact with the bike frame from above or from below. The contact portion 152 may be provided on an outer circumference of the housing 151. The housing 151 may be rotatably coupled to the connecting structure 103, for example such that the housing 151 is rotatable about a rotation axis which is co-linear the main extension axis of the connecting structure 103. For example, the housing 151 may be a rotatable by 360 degrees.

The contact portion 152 may comprise a contact surface 159. The contact portion 152 may comprise a padded and/or elastic material to prevent any damage of the bike frame. The contact surface 159 may then be formed by the padded and/or elastic material. The contact surface may be shaped such that it faces away from the rotation axis of the second attachment portion 102. For example, the contact surface 159 may be configured to follow a path along the rotation axis. The path may be straight. The path may extend in parallel with the rotation axis. The path may extend such that it approaches the rotation axis when following the path towards the connecting structure 103 and/or the first attachment portion. The path may be curved. The curvature may be such that the path is bulged towards the housing 151. The contact surface 159 and/or path of the contact surface 159 may comprise a first end and a second end. The contact surface 159 or the path along which the contact surface is formed may be shaped such that between the first end and the second end it only extends on one side of an imaginary line running through the first end and the second end of the contact surface 159. The first end and the second end may be positioned such that an imaginary straight line running through the first end and the second end passes through the housing, for example near a connection portion of the housing 151 to the connecting structure 103 or passes through the connecting structure 103 or passes through the first attachment portion or runs in parallel with the rotation axis of the housing 151.

The attachment unit 150 further comprises a fastening mechanism 153. The fasting mechanism 153 is configured to securely hold the attachment unit 150 in contact with the bike frame. The fasting mechanism 153 is configured to removably attach the attachment unit 150 on the bike frame. The fastening mechanism comprises a strap 154. The strap 154 is fixedly coupled to the housing 151 at a fixed end portion 156. The fastening mechanism further comprises a strap receiver 157 which is configured to receive a free end portion 155 of the strap 154. The fastening mechanism may further be configured to automatically lock a movement of the strap 154 in opposite direction to the insertion direction when the strap 154 is received in the strap receiver 157. The strap receiver 157 comprises an operating member 158. The operating member 158 may be a lever. The lever may be arranged and configured such that in an unoperated state, the lever extends substantially perpendicular to the rotation axis of the housing 151. The operating member 158 is provided on an end face of the spacer 100 so that the operating member 158 faces a user when upon mounting the spacer 100. The operating member may be configured to apply a tightening force on the strap 154 when it is moved in a first direction, for example pulled. In this embodiment, the strap 154 is toothed strap. The operating member 158 may be configured to engage with the teeth of the toothed strap. The operating member 158 may further be configured to unlock a blocking of an inserted strap 154 when it is moved in a second direction opposite to the first direction, for example when it is pushed. The operating member 158 is pivotably arranged on the housing 151. The operating member 158 may be provided on the housing 151 such that the operating member 158 faces towards a user and is easily accessible by a user. The strap receiver 157 and/or the housing 151 define a strap path. The strap path may be configured such that it at least partially extends substantially perpendicular to the rotation axis of the housing 151.

The general concept of the configuration in Fig. 33 may be described as providing an attachment portion, for example a load side attachment portion 150, of a spacer 100, wherein the attachment portion is configured for a sideways support against a load to be transported, for example a two wheeler such as a bike, and/or providing a tightening mechanism, such as a strap receiver 157, such that it is accessible from the front of the spacer 100, for example by providing the strap receiver 157 on an end face. For the sideways support, the attachment portion 150 may comprise a contact portion 152 provided on an outer circumference of a housing 151 and/or facing radially away from the housing 151.

Figs. 34 to 36 show another embodiment of a spacer 100. Again, the spacer 100 is configured to couple a bike frame to a supporting portion 31 of a load carrier. In this example, the strap 154 is a fabric strap. The operating member 158 is in this embodiment a biased clamping member that allows passing of the strap 154 in one direction and blocks a movement of an inserted strap 154 in opposite direction. By pushing the operating member 158, a user may disengage the operating member 158 and release the strap 154.

Again, the load side attachment unit 150 comprises a housing 151 which is rotatably coupled to the connecting structure 103. In this embodiment, the housing 151 is rotatable by 360 degrees. The connecting structure 103 is embodied as a tubular hollow profile 104. In this embodiment, the contact portion 152 faces in the direction of the rotation axis of the housing 151 and away from the connecting structure 103. In other words, the contact portion 152 is provided on the front portion of the second attachment portion 102 or load side attachment unit 150. The contact portion 152 may comprise a recess for receiving and accommodating a portion of the bike frame 3. The recess may be U-shaped or V-shaped. The strap 154 may be arranged to close an opening of the recess. The strap receiver 157 and a fixation position of the fixed end portion 156 of the strap 154 are provided on opposite sides of the recess. The strap receiver 157 may be provided on an upper portion of the housing 151 and the fixed end portion 156 of the strap 154 may be attached to the housing 151 on a lower portion of the housing 151.

In this embodiment, a possible configuration of a first attachment portion 101 is shown. Although this example of the first attachment portion is shown in combination with a specific second attachment portion 102, it is noted that this type of first attachment portion may be used in other spacers disclosed in this specification. In general, as long as the first attachment portion 101 and the second attachment portion 102 are separately functioning units that are not operatively coupled, it is possible to freely combine the examples of the first attachment portion 101 and the examples of the second attachment portion 102.

The fastening unit 110 comprises a first locking portion 111 and a second locking portion 112. The first locking portion 111 and the second locking portion 112 are configured to receive the supporting portion 31 between them. The first locking portion 111 and the second locking portion 112 are transferable between an opened state in which they are at least movable away from each other and a closed state in which a movement away from each other is blocked. The first locking portion 111 and the second locking portion 112 can be biased towards each other. The closed state may be a state in which the first locking portion and the second locking portion 112 assume a position in which the supporting portion 31 is enclosed and positively engaged or exerts a clamping force on the supporting portion 31. The first locking portion 11 and the second locking portion 112 may configured to normally move to the closed position when they are unloaded.

In the embodiment, the fastening unit 110 is configured as a quick lock arrangement. The quick lock arrangement comprises a clamping arrangement 300. The clamp 300 is formed by two clamping members 301, 302, for example jaws, comprising the first locking portion 111 and the second locking portion 112. The clamping members 301, 302 are connected to each other to allow a defined movement relative to each other, for example a rotational movement. The clamping members 301, 302 may be pivotably coupled to each other or may be connected to each other, for example by means of a bridging portion 303 connecting end portions of the clamping members 301, 302 to each other, in a manner allowing them to move away from each other by way of elastic deformation. The clamp 300 is in this embodiment partially accommodated in the hollow profile 104 and configured to be pulled out from an end portion of the hollow profile 300 for rendering the spacer ready to be snapped on to the supporting portion 31. The clamping members 301, 302 and the bridging portion form a U-shape with the clamping members 301, 302 forming legs of the U-shape and the bridging portion 303 forming a base from which the clamping members 301, 302 extend. The clamping members may be arranged plane symmetrical with respect to a middle plane. The clamp 300 is configured to be, on one side, movably received in an end portion of the hollow profile to be axially movable relative to the hollow profile 300 between an unlocking position in which the leg portion extends outside of the hollow profile 300 to a greater extent than in a locking position. In the unlocking position, the leg portions are able to flex. When the clamp 300 is moved to the unlocking position, it is possible to snap the clamp on the supporting portion 31, for example a bike carrier tube. The pushing force received on the clamp 300 then moves the clamp 300 relative to the hollow profile 104 up to a position in which the clamp is automatically arrested in position. The clamp 300 may comprise a biased protrusion 304. The biased protrusion 304 may comprise a first portion 305, for example a locking section 305 configured to engage with an opening 104.3 in the hollow profile 104 such that an upper end portion 307 of the protrusion 304 protrudes from an outer surface of the hollow profile 104. The opening 104.3 may be an end portion of a slot 104.1 provided in the hollow profile 104. The opening 104.3 may be an opening with enlarged dimension. The remaining portion 104.2 of the slot may have a smaller dimension. The locking section 305 may comprise a dimension that corresponds to the dimension of the opening 104.3 such that the locking section may automatically engage with the opening 104.3 when the clamp is in the locking position. the protrusion 304 may further comprise a second portion 306, for example a guiding and/or indicating section 306 having a dimension which is smaller than the dimension of the locking section 305 and corresponds to the dimension of the slot 104.1. The second portion 306 is arranged above the first portion 305 so that the second portion 306 may protrude from the hollow profile 104 when the first portion 304 is accommodated in the opening 104.3. The second portion 306 may be provided with a specific color, for example green color, to signalize to a user that the clamp 300 is in the locking position. For pulling out the clamp 300, a user may push the protrusion 304 to disengage the first portion 305 from opening 104.3 and pull out the clamp 300.

In some embodiments, the strap receiver 157 comprises a pump buckle mechanism 400. The pump buckle mechanism 400 comprises a tightening lever 404 pivotably arranged on a supporting portion 402. The tightening lever 404 comprises a toothed end portion 405. A strap passage 401 is defined between the toothed end portion 405 and the supporting portion 402. If a strap 154 is provided in the strap passage 401, a pivoting movement of the tightening lever 404 leads to an engagement between the toothed end portion 405 and teeth on the strap 154 thereby transferring a rotation of the tightening lever 404 into a translating movement of the strap 154. The pump buckle mechanism 400 further comprises a ratchet 406. The ratchet 406 may be a biased pivoting lever or translatory movable engaging portion comprising an engaging portion for an engagement with the teeth on the strap 154. An urging member 408, for example a spring, may be provided for biasing the ratchet 406. The ratchet 406 is biased towards a locking position in which it is engaged with the strap 154 and blocks a movement of the strap 154 in the detachment direction. The detachment direction is a direction in which the strap 154 is pulled out from the strap receiver 157.

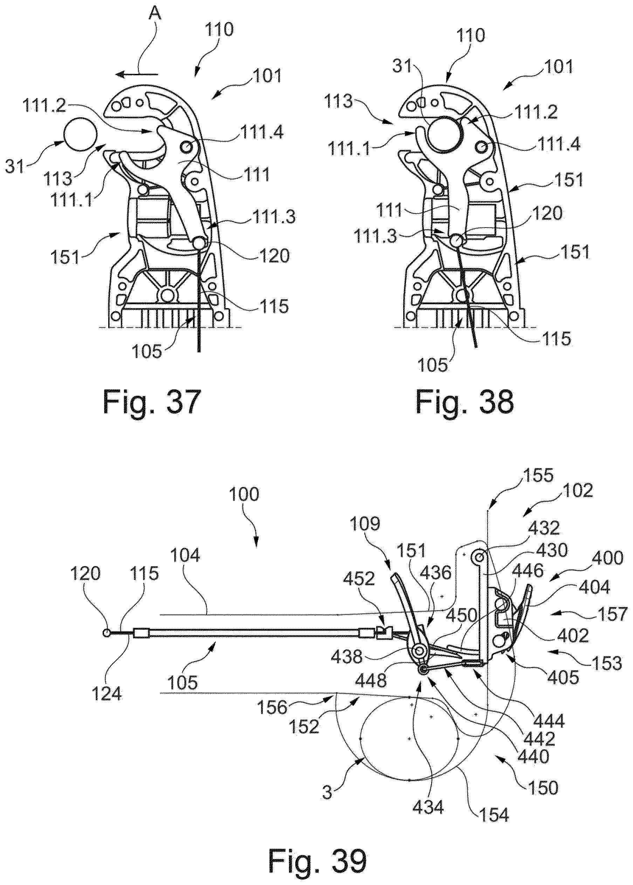

In one embodiment, the first attachment portion 101 comprises a carrier-side fastening unit 110 as shown in Figs. 37 and 38. The carrier side fastening unit 110 is configured to be put on and to be locked with the supporting portion 31 of the load carrier 1. The fastening unit 110 is configured to accommodate the supporting portion 31. The fastening unit 110 is configured transferable between a locking configuration and an unlocking configuration. In the locking configuration the fastening unit 110 is in a state in which, when a supporting portion 31 is accommodated in the fastening unit 110, the supporting portion is non-detachably fixed on the supporting portion 31. In the unlocking configuration, the fastening unit 110 is in a state in which the fastening unit 110 is mountable to and detachable from the supporting portion 31.

The fastening unit 110 may comprise a receiving section 113 for at least partially receiving the supporting portion 31. The receiving section 113 may comprise a recess, for example formed in a housing 151. The receiving section 113 may extend in a direction cross to the main extension direction or longitudinal direction of the fastening unit 110, for example perpendicular to the main extension direction or longitudinal direction of the fastening unit 110 and/or spacer 100.

The fastening unit 110 may comprise a locking member 111. The locking member 111 may be movable between a locking position and an unlocking position. When the locking member 111 is in the locking position, the fastening unit 110 is in the locking configuration. When the locking member 111 is in the unlocking position, the fastening unit 110 is in the unlocking configuration. The locking member 111 is operatively coupled to the force transfer arrangement 105. For example, a first end portion 120 of a force transfer portion 115 may be coupled to an attachment portion 111.3 of the locking member 111. When the locking member 111 is moved, a force is applied on the force transfer portion 115 and vice versa.

The locking member 111 may comprise a blocking section 111.1 configured to be moved into an out of the receiving section 113 to open or block an access into the receiving section and to lock the supporting portion 31 in the receiving section 113 when the fastening unit 110 is put on the supporting portion 31. The locking member 111 may further comprise an abutment portion 111.2 protruding into the receiving section 113, for example in the recess, when the locking member 111 is in the unlocking position. Although the abutment portion 111.2 is in the embodiment an integral part of the locking member 111 it is noted that the abutment portion may be provided as a separate member which is operatively coupled to the locking member such that a movement of the abutment portion triggers a movement of the locking member towards the locking position. The abutment portion 111.2 may serve as a trigger for releasing a movement of the locking member 111 towards the locking position when a force is exerted thereon through contact with the supporting portion 31.

The locking member 111 may be biased such that said locking member 111 is normally held in the unlocking position but urged towards the locking position when the locking member 111 was moved beyond a balance position. In such a configuration, the locking member 111 needs to be first moved against an urging force up to the balance position and is then moved supported by the urging force and urged towards the locking position. With such a configuration, the locking member 111 may be held in the locking position and the unlocking position by an urging force, for example applied by a single urging member. The urging member may be arranged to apply an urging force on the free end portion of the locking member 111, for example near the attachment portion 111.3.

The locking member 111 may comprise a fork like portion with two prongs projecting from a common base portion and forming a receiving space between them for receiving the supporting portion 31. The locking member 111 may be pivotably coupled to the housing 151 by means of a pivot pin 111.4. One of the prongs may form the abutment portion 111.2 and one of the prongs may form the blocking section 111.1.

The second attachment portion 102 comprises a load side attachment unit 150. The load side attachment unit 150 comprises a housing 151. A contact portion 152 for contacting a bike frame portion 3 is provided on the housing 151 on a lower portion thereof. The load side attachment unit 150 further comprises a fastening mechanism 153. The fasting mechanism 153 comprises a strap 154 with a fixed end portion 156 attached to the housing 151 next to the contact portion 152. The fasting mechanism 153 further comprises a strap receiver 157 configured to receive a free end portion 155 of the strap 154. The strap receiver 157 is movably supported on the housing 151. The strap receiver 157 is configured to be moved between an active position in which the strap receiver 157 can receive the free end portion 155 of the strap 154 and inactive position in which the strap receiver 157 cannot receive the free end portion 155. In the embodiment, the strap receiver 157 is configured to be pivoted between the active position and the inactive position. The strap receiver 157 is operatively coupled to the fasting unit 110. In particular, the strap receiver 157 is coupled to the fasting unit 110 by means of the force transfer arrangement 105. The connection between the strap receiver 157 and the fasting unit 110 is such that when the fasting unit 110 is in the locking configuration, the strap receiver 157 is positioned in the active position and when the fasting unit 110 is in the unlocking configuration, the strap receiver 157 is positioned in the in active position.

The configuration comprises an operating mechanism 434 with an operating lever 109. The operating mechanism is configured to transfer the fastening unit 110 from the locking configuration to the unlocking configuration while at the same time moving the strap receiver 157 from the active position into the inactive position. The operating lever 109 comprises a receiving portion 436 for receiving a second end portion 122 of the force transfer portion 150. In the embodiment, the force transfer portion 150 comprises a cable 124. The receiving portion 436 may be configured to receive the second end portion 122. The second end portion 122 may comprise a coupling portion 126, for example a ball shaped coupling portion 126. The receiving portion 436 is configured to accommodate the coupling portion 126 while allowing the coupling member to move out of the receiving portion 436 in one direction. In other words, the operating lever 109 is configured to apply a pulling force on the cable 124 when it is moved in a first direction and is movable relative to the coupling portion 126 in the opposite direction. Accordingly, the operating lever 109 may be used for pulling the cable 124 to an open position in which the carrier side fasting unit 110 is in the opened configuration.

The operating lever 109 is pivotably coupled to the housing 151 about a pivot axis 438. The pivot axis 438 may be defined by a pivot pin. The receiving portion 436 may be provided on the same side of the operating lever 109 on which a user applies a force on the operating lever 109 for operating the same.

A movable support 430 is pivotably coupled to the housing 151, for example by means of a pivot pin 432. In the embodiment, the movable support 430 is a lever coupled to the housing 151 at a first end portion thereof and supporting the strap receiver 157 on a lever arm portion thereof. The lever arm portion together with the strap receiver 157 is retractable into the housing 151. The operating lever 109 is operatively coupled with the movable support 430. The operating lever 109 comprises a coupling portion 440. With respect to the pivot axis 438 the coupling portion 440 is provided on the lever 109 on a side opposite to the side where the receiving portion 436 is provided. The movable support 430 comprises a coupling section 444. The coupling portion 440 and the coupling section 444 are connected to each other by means of a force transfer member 442. The coupling section 444 comprises a slot. An end portion of the force transfer member 442 is received in the slot. The slot and the force transfer member are configured such that the movable support 430 is movable relative to the force transfer member such that the movable support 430 can be moved to the active position independent from the force transfer member. On the other hand, the slot is defined such that the movable support 430 may be pulled into the housing 151 by the force transfer member 442 when the lever 109 is operated by a user.

The operating mechanism 434 comprises a ratchet mechanism which keeps the movable support 430 in a retracted position. A first engaging portion 446 comprising one tooth or multiple teeth is provided on the movable support 430. A second engaging portion 448 is provided stationary with respect to the housing 151. The second engaging portion 448 is configured to get in engagement with the first engaging portion 446 and may comprise one tooth or multiple teeth. The first engaging portion 446 and the second engaging portion 448 are configured to get in engagement when the movable support 430 is moved to the retracted or inactive position. As soon as the movable support 430 is in the inactive position and an engagement is established, the movable support 430 is maintained at that position until the engagement is released. For releasing the engagement, the operating mechanism 434 comprises a release portion 450 which is operatively coupled to the cable 124 by means of a coupling portion 452. The release portion 450 is configured to disengage the first engaging portion 446 and the second engaging portion 448 from each other when the cable 124 is moved to a position at which the carrier side fasting unit 110 is in a locked configuration (see Figs. 38, 39 and 42). The release portion 450 may comprise a separating portion 454 which is configured to be moved between the first engaging portion 446 and the second engaging portion 448 to urge the latter portions away from each other. The second engaging portion 448 may comprise a sliding surface 449 on a free end portion thereof. The sliding surface 448 is tapered such that a gap is created between at least a portion of the sliding surface 448 and the first engaging portion 446. The gap is large enough to allow the separating portion 454 to enter the same. When the separating portion 454 is then further moved between the first engaging portion 446 and the second engaging portion 448, the first engaging portion 446 and the second engaging portion 448 are separated owing to the inclined sliding surface 448 by which a force applied thereon urges the second engaging portion 448 in a direction away from the first engaging portion 446 until they are disengaged from each other. The first engaging portion 446 and the second engaging portion 448 may then move relative to each other allowing the movable support 430 and the strap receiver 157 to move to the active position.

The strap receiver 157 may comprise a pump buckle mechanism 400 as described in other sections of this specification.

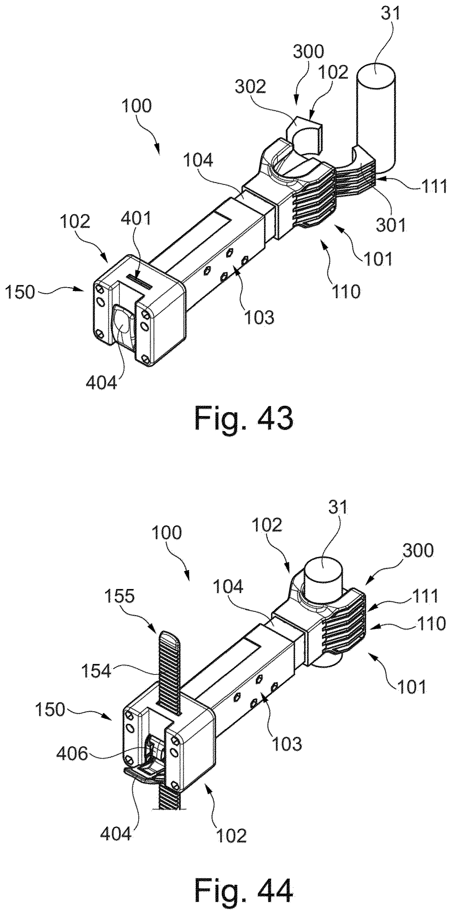

A further embodiment of the spacer 100 will be described with reference to Figs. 43 to 49. The spacer 100 comprises a carrier side fastening unit 110 configured to be put on and to be locked with a supporting portion 31 of the load carrier 1. The fastening unit 110 is configured to accommodate the supporting portion 31 and is configured transferable between a locking configuration in which the fastening unit 110 is non-detachably fixed on the supporting portion 31 and an unlocking configuration in which the fastening unit 110 is mountable to and detachable from the supporting portion 31.

The fastening unit 110 is configured transferable into the locking configuration by pushing the fastening unit 110 onto the supporting portion 31.

The fastening unit 110 comprises an arrangement for positively locking the supporting portion 31 between at least two locking members 111, 112. In this embodiment, the two locking members 111, 112 form part of a gripping arrangement 300. A first locking member 111 forms a first gripping member 301 and a second locking member 112 forms a second gripping member 302. The gripping arrangement 300 may be configured as a clamping arrangement in which each of the first gripping member and the second gripping member forms a clamping member. The first gripping member 301 and the second gripping member 302 are pivotably coupled to each other. The first gripping member 301 and the second gripping member 302 may be pivotably coupled to each other by means of a pivot portion 311. The pivot portion 311 may be attached to or operatively coupled with a force transfer member 106, for example to a rod 107. The pivot portion 311 may be integrally formed on the force transfer member 106.

An urging member 312 is configured and arranged to urge the first gripping member 301 and the second gripping member 302 away from each other. Accordingly, the gripping members are biased towards an opened position in which the supporting portion 31 may be received between the gripping members. The gripping members 301, 302 comprise a force receiving section which is configured to receive a pushing force from the supporting portion 31 when the fastening unit 110 is pushed on the supporting portion 31. The force receiving section is provided by the gripping members 301, 302 at a longitudinally inner portion of the gripping members 301, 302, for example adjacent to a portion at which the urging member is provided. The force receiving section may be configured to only receive a force acting in longitudinal direction of the spacer 100 and/or in longitudinal direction of the force transfer member 106. Accordingly, when the gripping arrangement is pushed against the supporting portion 31, the force receiving surface is contacted with an outer circumference of the supporting portion 31 such that no force is transferred on the gripping members 301, 302 urging them towards the opened position. The first gripping member 301 and the second gripping member 302 may be coupled to each other like the gripping jaws in a head section of pliers, for example by a pivot 311.

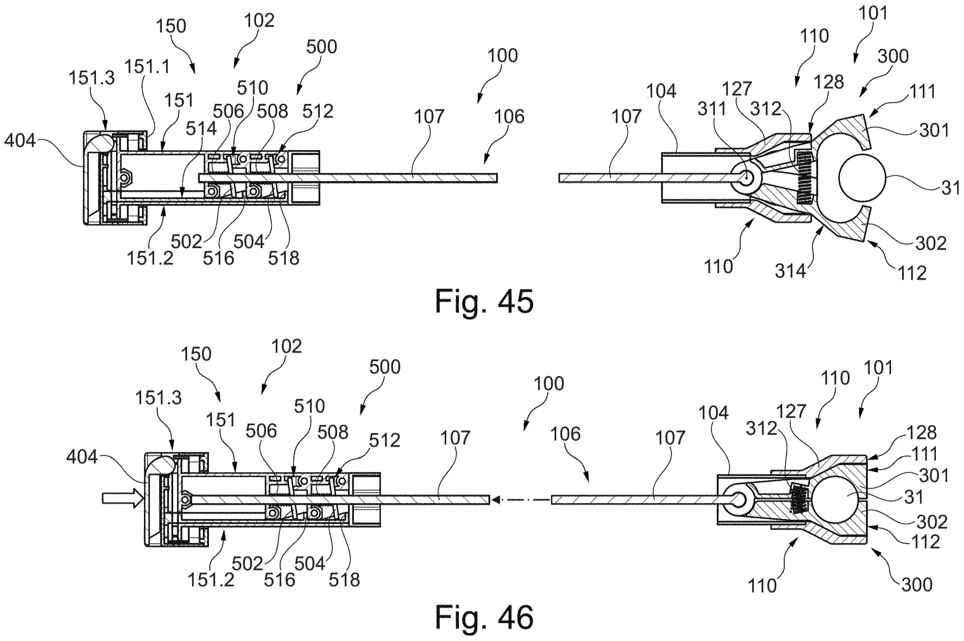

The fastening unit 110 comprises a housing 127. The first gripping member 301 and the second gripping member 302 are movably accommodated in the housing 127. The housing 127 comprises an inner dimension which corresponds to an outer dimension of the gripping members when they are in a closed position. Accordingly, the gripping members may only be accommodated in the housing 127 when they are in the closed position. The housing 127 and the gripping members 301, 302 are configured such that the gripping members 301, 302 are automatically moved from the open position to the closed position when the gripping members are moved into the housing 127 or the housing is moved over the gripping members. Each gripping member 301, 302 comprises an outer inclined sliding surface 314 configured to contact a forward end portion 128 of the housing 127 (see Fig. 45).

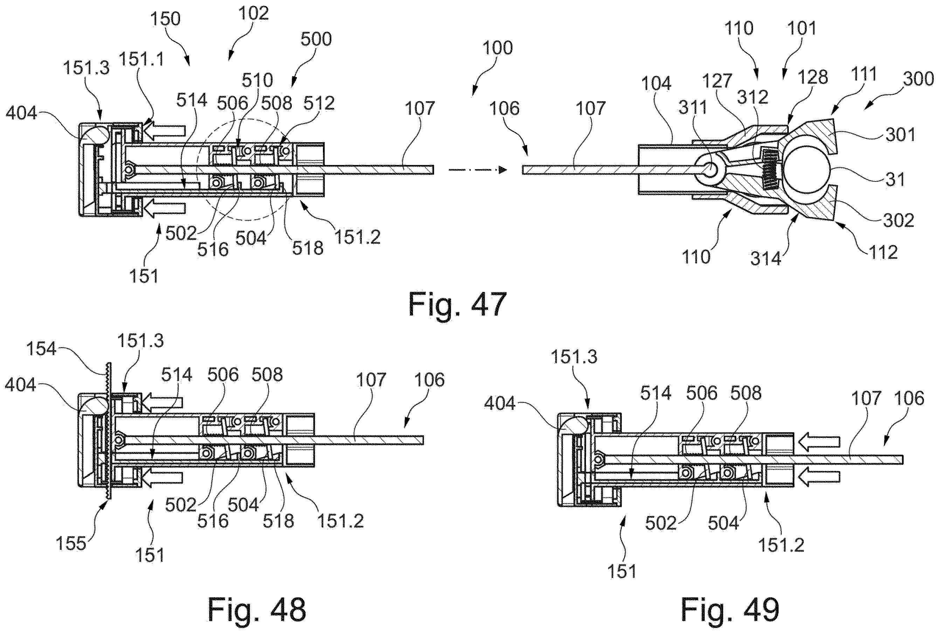

When inserting an open fastening unit 110 onto the supporting portion 31, the spacer 100 is moved such that the supporting portion 31 is positioned between the gripping members 301, 302 and in contact with the force receiving section (see Fig. 47). In this state, a further movement of the gripping members 301, 302 towards the supporting portion 31 is blocked by the supporting portion 31. When the spacer 100 is pushed further against the supporting portion 31, the housing 127 moves relative to the gripping members 301, 302 towards the supporting portion 31 (see Fig. 46). Along with a movement of the housing 127 relative to the gripping members, the forward end portion 128 of the housing 127 slides on the inclined sliding surfaces 314 and applies a clamping force moving the gripping members towards each other until they firmly grip the supporting portion 31. In other words, fastening the spacer 100 on the supporting portion 31 comprises two steps. In a first step, the spacer is moved relative to the supporting portion 31 for receiving the supporting portion 31 between the gripping members 301, 302. In a second step, the spacer is pushed on the supporting portion 31 leading to a relative movement of the housing 127 over the gripping members. In the second step, the gripping members only perform a pivoting motion towards each other. Since the rod 107 is coupled to the gripping members which rest on said supporting portion 31, the rod 107 remains stationary when the housing 127 is moved along the gripping members.

The housing 127 is coupled to a connecting structure 103 comprising a hollow profile 104. On an opposite side of the connecting structure 103, the load side attachment unit 150 is provided. The rod 104 may extend entirely through the hollow profile and into the load side attachment unit 150.

A securing mechanism for locking the rod 107 and the gripping members 301, 302 against movement towards the opened position is provided in the load side attachment unit 150. The securing mechanism is configured to frictionally lock the rod. The securing mechanism may comprise one or more tiltable locking members 502, 504 with an opening or cut-out for receiving a portion of the rod 107. The locking members 502, 504 may be plate shaped members and/or may be ring-shaped or rectangular. The locking members 502, 504 may be tiltably held in the housing 151, for example at supporting portions 510, 512. One side of the locking members may be supported on the housing 151. The rod 107 may be passed through an opening in the locking members. Each locking member is associated with an urging member 506, 508, such as springs arranged on the rod 107. The locking members are biased towards a tilted configuration (shown in Fig. 45) in which the locking members extend cross to a main extension direction of the rod 107 such that opposite inner sides defining the opening are contacted with the outer surface of the rod 107. This creates friction between the locking members and the rod 107 locking the rod in one direction, in particular in a direction in which the rod is pulled out from the housing 151 and allowing a movement of the rod in a second direction, in particular a direction in which the rod is moved further into the housing 151.

The spacer 100 further comprises an operating portion movable relative to the housing 151. The operating portion comprises a finger support portion 151.1 for grasping the same and pulling the same in longitudinal direction of the spacer 100 and in a direction away from the carrier side fastening unit 110. The operating portion may be provided on an end portion of the housing 151 and may form an end cap on the housing 151. The strap receiver 157 may be provided on the operating portion.

The operating portion comprises or is coupled to a release portion 516, 518 having abutment portions and being shiftably received in the housing 151 by means of a force transfer portion 514. The operating portion comprises a strap passage into which a strap may be inserted via an access opening 151.3. The operating portion is configured to be only movable when no strap is present in the strap passage. A strap 154 inserted in the strap passage blocks a movement of the operating portion relative to housing 151 (see Fig. 48). Unlocking the rod 107 and pulling out the rod 107 from the housing 151 is only possible when the operating portion is pulled in a direction away from the carrier side fastening unit 110 with the strap being removed from the strap receiver 157 and removed from the strap passage (see Fig. 47). Unlocking the rod 107 and pulling out the rod 107 from the housing 151 is not possible when the housing 151 is pulled in a direction away from the carrier side fastening unit 110 even if the strap is removed (see Fig. 49). Pulling the operating member moves the one or more release portions 516, 518 such that they contact the locking members 502, 504 and apply a force on them moving them towards a position in which the frictional clamping is released, for example towards a position in which the locking members 502, 504 are positioned such that a middle axis of the opening is substantially aligned with the longitudinal axis of the rod (see Fig. 47). In this way, the rod is released and the housing 151 may be moved relative to the rod 107 and allows pulling the housing 127 from the gripping members 301, 302 which may then move in opening direction.

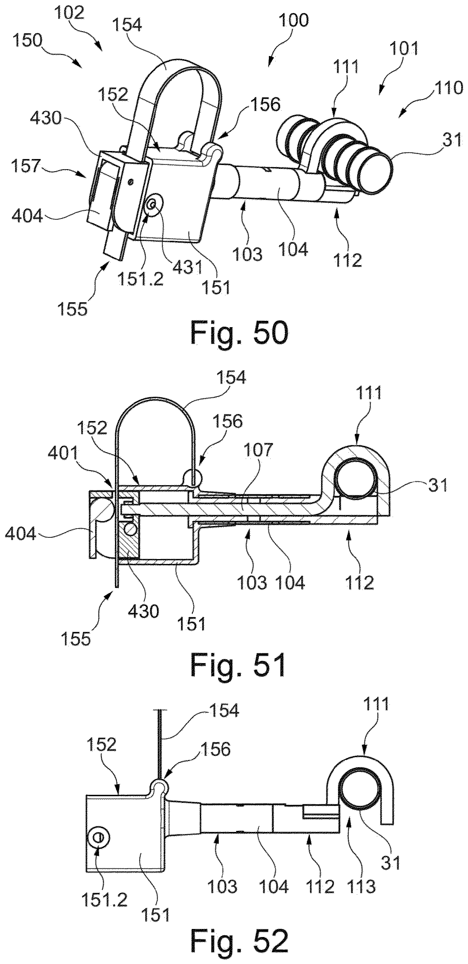

A further embodiment of a spacer 100 is shown in Figs. 50 to 52. Fig. 50 shows a perspective view of a spacer according to an embodiment. Fig. 51 shows a perspective view of the spacer of Fig. 50 in a sectional view along a longitudinal middle plane of the spacer. Fig. 52 shows a side view of the spacer of Figs. 50 and 51.

The spacer 100 comprises a first attachment portion 101 and a second attachment portion 102. The first attachment portion 101 is configured as a carrier side fastening unit 110. The second attachment portion 102 is configured as a load side attachment unit 150. The carrier side fastening unit 110 is coupled to the load side attachment unit 150 by means of a connecting structure 103. The connecting structure 103 may comprise a hollow profile 104. The carrier side fastening unit 110 comprises a locking mechanism which is configured to positively accommodate a supporting portion 31 of a load carrier 1. The locking mechanism comprises a first locking portion 111 which is configured to at least partially receive the supporting portion 31. The locking mechanism comprises a second locking portion 112. The first locking portion 111 is movable relative to the second locking portion 112. In particular, the first locking portion 111 is movable between a locking position in which a supporting portion 31 received in the locking portion 111 is blocked by the second locking portion 112 such that it cannot get out of the first locking portion 111 and an unlocking position in which the supporting portion 31 may be received in or removed from the locking portion 111. The locking portion 111 may be formed like a hook defining a receiving section 113, for example an accommodating recess, for receiving the supporting portion 31. Figs. 50 and 51 show configurations in which the locking portion 111 is moved to the locking position and Fig. 52 shows a configuration in which the locking portion 111 is moved to the unlocking position.

The first locking portion 111 is coupled to a force transfer portion. As is shown in the embodiment, the force transfer portion may be a rod like portion 107. The force transfer portion may be formed as a separate member or may be integrally formed with the first locking portion 111. The force transfer portion is arranged such that it extends through the connecting structure 103 from the first locking portion 111 into the housing 151 of the load side attachment unit 150. The load side attachment unit 150 comprises a strap 154 and a strap receiver 157. Furthermore, the load side attachment unit 152 comprises a contact portion 152 which is configured to get in contact with a portion of a bike to be transported, for example with a portion of a frame of the bike. The strap 154 is coupled to the housing 151 at a fixed end portion 156 and on one side of the contact portion 152. A free end portion 155 of the strap 154 is insertable into and lockable in the strap receiver 157. The strap receiver 157 can be provided on the opposite side of the contact portion 152. Accordingly, a fixation loop may be formed by the strap 154 for fixing the portion of the bike on the contact portion 152. The strap receiver 157 may comprise a pump buckle mechanism. The strap receiver 157 may comprise a strap passage 401 for receiving the strap 154 and may comprise a tightening lever 404 for tightening the strap 154 inserted into the strap passage 401. As is shown in Fig. 51, the strap receiver 157 is in this embodiment arranged on a movable support 430. The movable support 430 is translatory movably received in the housing 151 and coupled to an end portion of the force transfer portion 107. Accordingly, the movable support 430 is integrally movable together with the force transfer portion 107. The movable support 430 is movable between a retracted position in which the movable support and the strap receiver 157 are retracted into the housing 151 and an extended position in which the movable support and the strap receiver 157 are positioned on the housing 151 such that the strap receiver 157 is available for the insertion of the strap 154. The extended position is shown in Figs. 50 and 51. The retracted position as shown in Fig. 52. Accordingly, the strap receiver 157 is moved to a position in which it is inactive and not available for inserting the strap when the carrier side fastening unit 110 is in an opened configuration as shown in Fig. 52. Furthermore, the strap receiver 157 is moved to a position in which it is active and available for inserting the strap. The spacer 100 may be configured such that the carrier side fastening unit 110 is automatically locked when it is in the closed configuration or when the first locking portion 111 reaches the locking position. For that, a biased locking member 431 may be provided on the movable support 430. An opening 151.2 may be provided on the housing 151 at a position at which the biased locking member 431 is positioned when the first locking portion 111 reaches the locking position. The biased locking member 431 automatically engages with the opening 151.2 as soon as the first locking portion 111 is positioned in the locking position. The arrangement may be configured such that a user may push the locking member 431 inwardly from outside of the housing 151 for unlocking the movable support 430 from the housing 151. A user may then pull the load side attachment unit 150 away from the supporting portion 31 to pull the first locking portion 111 out from the carrier side attachment unit 110 into the open position.

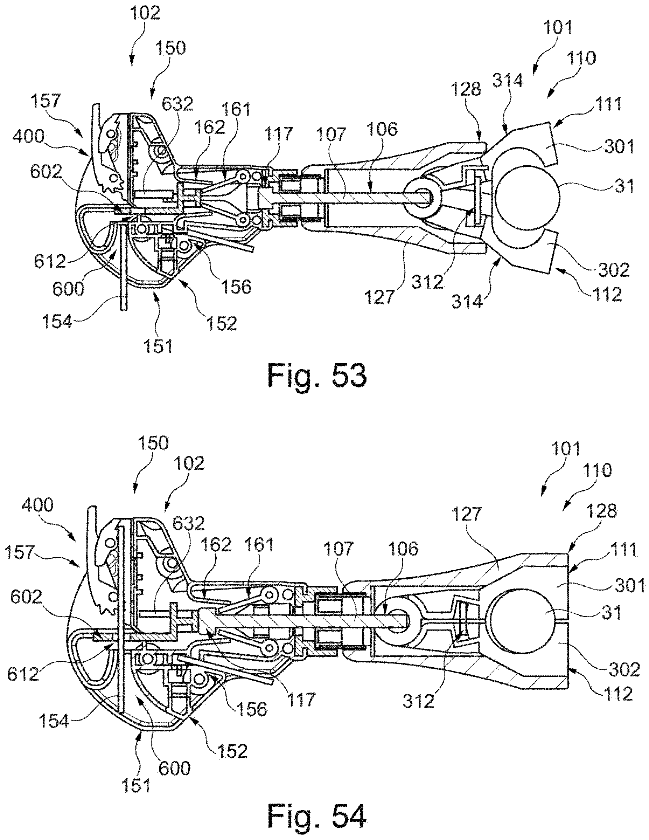

A further embodiment of the spacer 100 will be described with reference to Figs. 53 to 56. The spacer 100 comprises a carrier side fastening unit 110 configured to be put on and to be locked with a supporting portion 31 of the load carrier 1. The fastening unit 110 is configured to accommodate the supporting portion 31 and is configured transferable between a locking configuration in which the fastening unit 110 is non-detachably fixed on the supporting portion 31 and an unlocking configuration in which the fastening unit 110 is mountable to and detachable from the supporting portion 31.

The fastening unit 110 is configured transferable into the locking configuration by pushing the fastening unit 110 onto the supporting portion 31. The fastening unit 110 may comprise an arrangement for positively locking the supporting portion 31 between at least two locking members 111, 112. The configuration of such an arrangement may be identical to the configuration of the fastening unit 110 as described with reference to Figs. 43 to 47. Again, two locking members 111, 112 form part of a gripping arrangement 300. Again, the housing 127 is coupled to a connecting structure 103 comprising a hollow profile 104. On an opposite side of the connecting structure 103, the load side attachment unit 150 is provided. The rod 107 may extend through the hollow profile and into the load side attachment unit 150.

The configuration of Figs. 53 to Fig. 56 differs from the configuration of the spacer of Figs. 43 to 47 in the load side attachment unit 150 and in the way the force transfer member 106, for example the rod 107, is locked in the load side attachment unit 150.

In the configuration of Fig. 53 to Fig. 56, the load side attachment unit 150 comprises a locking mechanism or locking unit 160 for blocking a movement of the force transfer member 106 and, thus, a movement of the locking members or locking portions 111, 112 relative to the housing 127. The locking mechanism or locking unit 160 is configured as a snap-in locking mechanism which automatically engages when the load side attachment unit 110 is in the locking configuration, in other words when the locking members are in the clamping position or closed position, for example when they are accommodated in the housing 127 or the housing was shifted over them. It is however noted that the such locking mechanism may be used in combination with other configurations of carrier side fastening units 110 as described herein in which a locking portion is moved relative to another locking portion for positively locking the supporting portion 31 in the carrier side fastening unit 110, and in which a force transfer member 106 is integrally moved together with the locking portion 111, such as with the configurations of the carrier side fastening unit 110 as shown in Figs. 50 to 52, Figs. 57 to 60, or Figs. 69 to 72.

The locking unit 160 comprises a blocking portion or locking member 161. The force transfer member 106 may be operatively coupled to or may comprise an engaging section 117. The engaging section 117 is movable between a first position corresponding to an opened configuration of the carrier side fastening unit 110 and a second position corresponding to a closed configuration of the carrier side fastening unit 110. The locking unit 160 is configured to lock a movement of the force transfer member 106 relative to the housing 151 of the load side attachment unit 150 when the force transfer member 106 is in a second position corresponding to a position in which the carrier side fastening unit 110 is closed. The blocking portion 161 may be configured to engage with the engaging section 117. For that, the blocking portion 161 is movable between a locking position in which it engages with the engaging section or blocks a movement of the engaging section and an unlocking position in which it is disengaged from the engaging section and/or does not block a movement of the engaging section. The engaging section 117 may be a recess, an opening or a protrusion or protruding portion on the force transfer member 106. The blocking portion 161 may be configured to engage behind the engaging section 117 as soon as the engaging section 117 was moved to the second position.

The blocking portion 161 may be configured as a rotatably movable member as is shown in Figs. 53 to 58. In this configuration, the blocking portion 161 is configured as a rotatable member which is pivotable towards and away from the force transfer member 106, for example the rod 107, to be able to engage behind an engaging section 117. Two blocking portions may be arranged on laterally opposite sides of the force transfer member 106. Fig. 54 shows a state in which the blocking portion 161, more precisely two blocking portions 161, are moved to a locking position in which portions thereof are positioned in a movement path of the engaging section 117. In this state, each blocking portion 161 forms an abutment for the engaging section 117 on a load carrier fastening unit side of the engaging section 117 blocking a movement of the engaging section 117 in an opening direction of the engaging section.

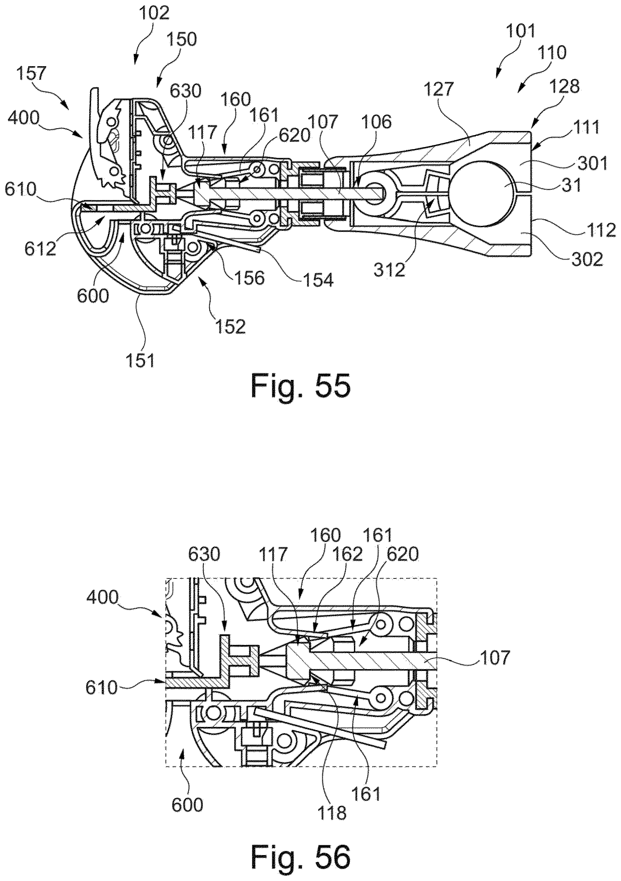

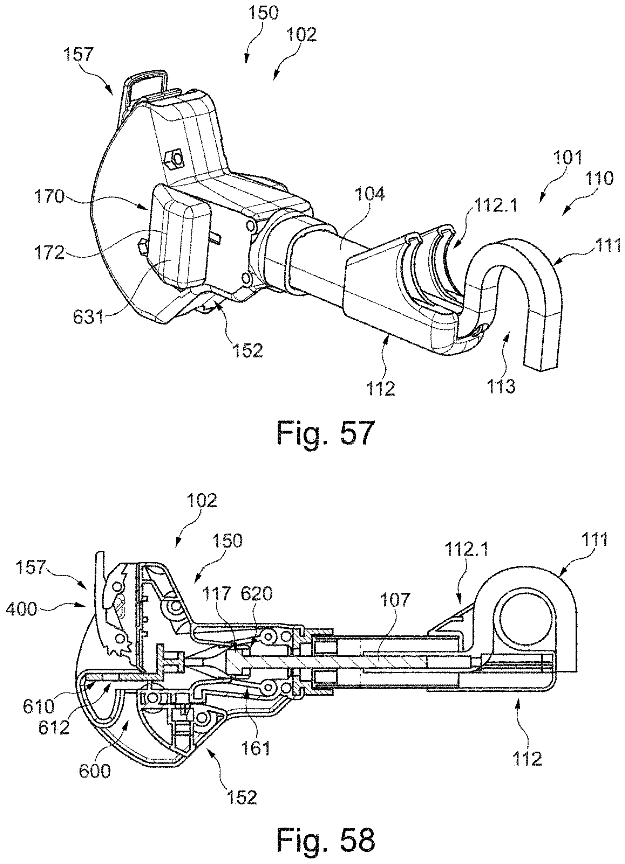

The locking unit 160 may further comprise a release mechanism for releasing the engaging section 117. The release mechanism is configured to move the blocking portion 161 to the unlocking position. The release mechanism may comprise an actuating portion 630, for example coupled to an actuator 631 or operating portion 170 operable by a user as shown in Fig. 57. The operating portion 170 may be a portion which is accessible by a user from outside of the housing 151 of the load side attachment unit 150. The operating portion 170 may be or may comprise a pull member 172. Pulling the pull member releases the locking in the locking unit 160. The release mechanism further comprises a release portion 620 operatively coupled to the actuating portion 630, for example integrally formed with the actuating portion 630. The release portion 620 is movable between a non-release position (as in Figs. 53 and 54) to a release position (shown in Figs. 55 and 56) in which the release portion has moved or urged the one or more blocking portions 161 to an unblocking position. The release portion may be biased towards the non-release position by an urging member 632, for example by a spring.

As is shown in the embodiment, the actuating portion 630 may be operatively coupled to a strap passage blocking portion 610. The strap passage blocking portion 610 is shiftable between a blocking position (see Fig. 53) in which it blocks the strap passage 602 and an unblocking position (see Fig. 54) in which an insertion of a strap into the strap passage is possible. The strap passage blocking member 610 is translatory movable. The strap passage blocking member 610 comprises an opening or passage 612 for passing the strap therethrough. In the unblocking position, the passage 612 is aligned with the strap passage 602 and in the blocking position, the passage 612 is offset to the strap passage 602. The actuating portion 630 comprises an abutment section configured to be contacted by the longitudinal end or the force transfer member 106 and to receive a pushing force exerted thereon by the force transfer member. The force transfer member 106 is configured such that the actuating portion 630 is moved to an intermediate position when the force transfer member 106 is at a position in which the carrier side fastening unit 110 is in the closed configuration and the force transfer member automatically locked. In this intermediate position, the blocking member 610 is at a position in which the passage 612 is aligned with the strap passage 602. For unlocking the actuating portion 630 needs to be moved such that the abutment section is moved away from the end of the force transfer member 106 which in turn moves the release portion 620 to the release position. It is self-explaining that moving the actuating portion 630 will only be possible if the strap is removed from the passage 612. As soon as the force transfer member 106 is unblocked, the carrier side fastening unit 110 may be transferred to the opened configuration by pulling the load side attachment unit in a direction away from the carrier side fastening unit when mounted on a supporting portion or by pulling the clamping arrangement 300 out of housing 127.

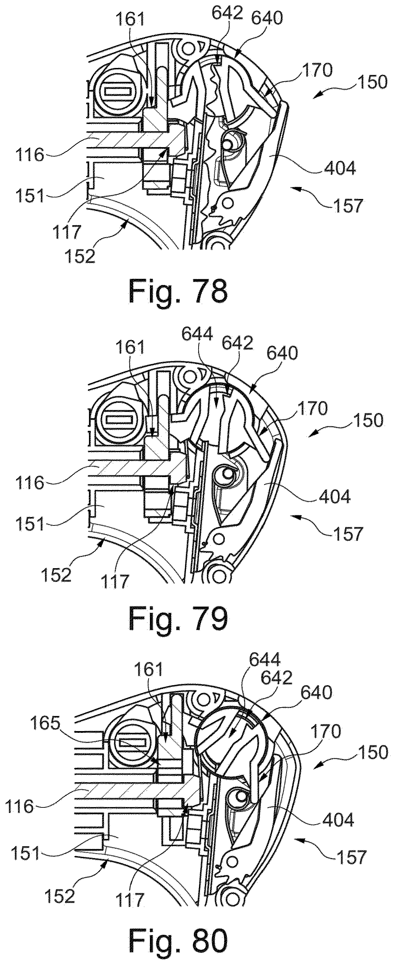

In Figs. 80 to 83, a modification of the spacer 100 of Figs. 53 to 56 is shown. The spacer 100 differs from the configuration of the spacer according to Figs. 53 to 56 in that the carrier side fastening unit 110 has a different construction. The load side attachment unit 150 may be configured identical or functionally similar, in particular regarding the locking unit. Instead of a clamping mechanism 300 in which two clamping members 301, 302 are arranged pivotably movable towards and away from each other, the spacer 100 comprises a carrier side fastening unit 110 which is similar to the carrier side fastening unit 110 as shown in Figs. 50 to 52 or may be identical to this carrier side fastening unit. The first locking member 111 comprises a hook-like configuration with a hook-like free end portion defining a first receiving section. The locking member 111 is movable relative to a second locking portion between a locking position and an unlocking position. In the locking position, the locking member 111 is positioned such that a supporting portion 31 received in the receiving section is positively locked therein.

In the embodiment, the locking member 111 is translatory movable and operatively coupled with the force transfer member 106 comprising the engaging section.

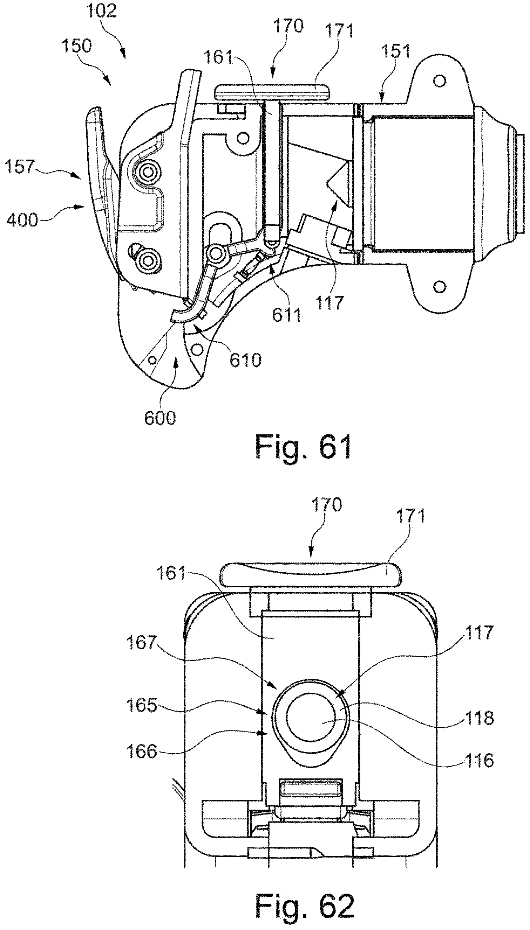

Figs. 61 to 64 show a possible configuration of the load side attachment unit 150 according to an embodiment. The load side attachment unit 150 comprises a strap receiver 157 for receiving and fixing an end portion of a strap 154. The strap receiver may be a pump buckle mechanism 400, for example a pump buckle mechanism as described in other portions of the specification. The strap receiver 157 is accessible by a strap through an insertion portion 600 leading into a strap passage which in turn extends to the strap receiver 157.

The load side attachment unit 150 according to this embodiment also comprises a locking unit 160. The locking unit 160 is again configured to engage behind an engaging section 117 of a force transfer member, for example a rod, to block a movement of the force transfer member. The function of locking and unlocking a movement of the force transfer member is similar to the function of the locking unit 160 of the embodiment described with reference to Figs. 53 to 56. However, in the configuration according to Figs. 61 to 64, the locking unit 160 comprises a blocking portion 161 which is configured as a translatory movable portion or member movable between the locking position and the unlocking position.

The blocking portion 161 may be movable in a direction perpendicular to a movement direction of the engaging section 117. The blocking portion 161 may comprise a platelike portion. The blocking portion 161 may comprise an opening 165 for passing the engaging section 117 therethrough. The blocking portion 161 may be configured as shown in Fig. 62. For example, the blocking portion 161 may comprise an opening 165 with a narrow section 166 and a wide section 167. The wide section 167 is large enough to allow the engaging section 117 to pass therethrough. The narrow section 166 comprises a dimension which is smaller than an outer dimension of the engaging section 117. Accordingly, when the engaging section 117 is passed through the wide section 167, the blocking portion 161 may be shifted such that the narrow section 166 is arranged behind the engaging section 117 and blocks a movement of the engaging section 117 in opposite direction. The blocking portion 161 may be biased towards a blocking position in which passing of the engaging section 117 through the blocking portion 161 is blocked, for example by means of a biasing member or urging member 613, for example a spring.

The locking unit 160 may further comprise a release mechanism for releasing the engaging section 117. The release mechanism is configured to move the blocking portion 161 to the unlocking position. The release mechanism may comprise an operating portion 170 operable by a user. The operating portion 170 may be a portion which is accessible by a user from outside of the housing 151 of the load side attachment unit 150. The operating portion 170 may be or may comprise a push member 171. In this embodiment, the operating portion 170 and the blocking portion 161 are integrally formed.

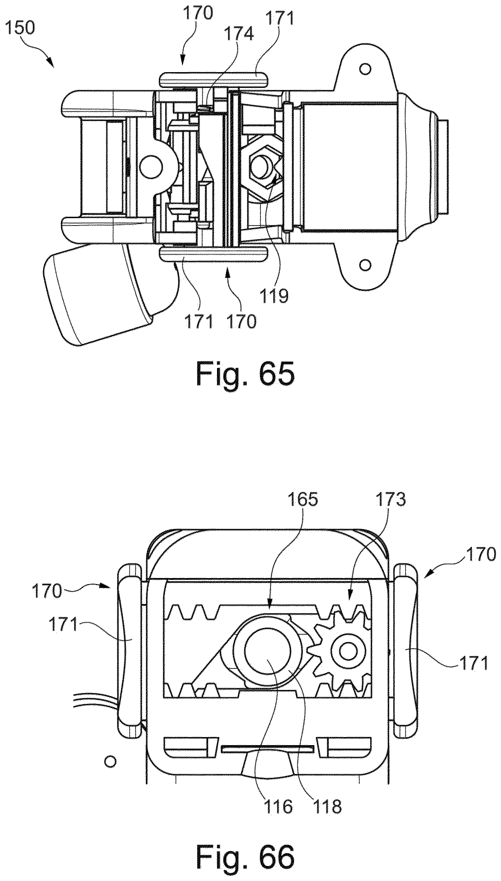

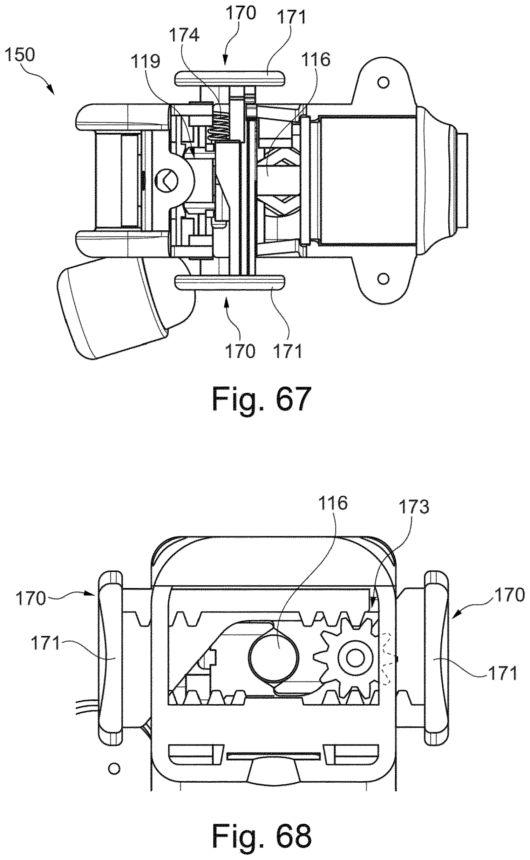

Instead of comprising a single blocking portion 161 with an opening through which the engaging section is passed, it is possible to provide configurations with multiple blocking portions 161, for example two blocking portions, wherein each blocking portion is configured to engage with or behind the engaging section 117 (see Figs. 65 to 68). The above-mentioned opening 165 may thus be replaced by providing two blocking portions each enclosing the force transfer member partially and from different sides, for example from opposite sides such that a size variable receiving space for the force transfer member 106 is created between the two blocking portions. Each of the two blocking portions may comprise an operating portion 170, for example a push member 171. The push members may be arranged on opposite sides of the housing. As is shown in Figs. 66 and 68, the blocking portions may be operatively coupled by a gear mechanism 173 coupling the blocking portions to each other so that a movement of one locking portion in locking direction also moves the other locking portion in locking direction and vice versa. Accordingly, the locking unit 160 is then operable by pushing only one push member 171 and/or the movement of the locking portions is synchronized. When the operating portions 170 are pushed as shown in Figs. 65 and 66, the variable receiving space is enlarged to a size that allows passing of the force transfer member 106 and of the engaging section 117 therethrough. When the operating portions 170 are released, the blocking portions are moved to the blocking position. For that, the operating portions 170 and/or the blocking portions are biased by an urging member 174.

In all embodiments in which the engaging section is passed through an opening or receiving space in or between locking portions, the force transfer member 106 may comprise a tapered end portion 119 tapering towards the end of the force transfer member which is configured such that it can enter into the opening or receiving space when the locking portions are in the locking position and apply a force on an inner portion of the locking portions such that the blocking portion or portions is/are moved to the open or unlocking position through contact with the tapered end portion. This allows an automatic insertion and locking of the engaging section 117 without having to push an operating portion.

The embodiment may comprise a snap mechanism configured to lock the blocking portions 161 in an unlocking position and/or the operating portions 170 in a depressed state. Accordingly, the configuration may be such that the blocking portions remain in the unlocking configuration once operated. The end portion of the force transfer member may then be passed through the opening or receiving space to a position where it hits the snap and releases the blocking portions and operating portions which then move to the locking position by means of an urging force.

The load side attachment unit 150 in this embodiment may in addition or alternatively comprise a strap insertion blocking mechanism with a blocking portion 610 that is movable into and out of the strap passage. The blocking portion 610 may be rotatably movable and may be provided on a locking lever, in particular may form an end portion of one arm of the locking lever. The locking lever is operatively coupled to the operating member 170 and/or a blocking portion 161 such that the locking lever is in an unblocking position in which the blocking portion is removed from the strap passage when the blocking portion is in a locking position and engaged behind the engaging section.

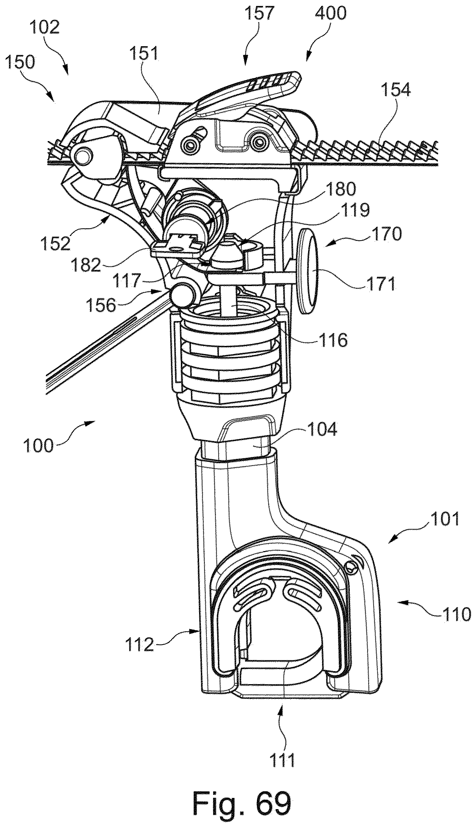

Fig. 69 shows an embodiment of a spacer 100. The spacer 100 is configured as a bike to frame arm. The spacer 100 comprises a carrier side fastening unit 110 and a load side attachment unit 150. The carrier side fastening unit 110 and the load side attachment unit 150 are coupled to each other by a connecting structure 103. The connecting structure 103 comprises a hollow profile 104. The carrier side fastening unit 110 and the load side attachment unit 150 may be coupled to each other such that forces acting in longitudinal direction of the spacer 100 may be transferred from the carrier side fastening unit to the load side attachment unit without changing a distance between the carrier side fastening unit 110 and the load side attachment unit 150.

Accordingly, the connecting structure 103 may be configured to maintain the carrier side fastening unit 110 and the load side attachment unit 150 at a predefined distance.

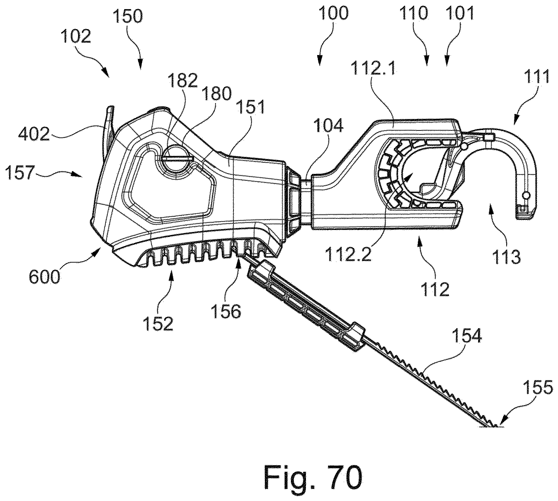

The carrier side fastening unit 110 comprises a first locking portion 111 and a second locking portion 112. The first locking portion 111 is movable relative to the second locking portion 112. In the embodiment, the first locking portion 111 is translatory movable with respect to the second locking portion 112. More precisely, the first locking portion 111 is translatory movable along a main extension direction or longitudinal direction of the spacer 100. The first locking portion 111 is movable between a first position and a second position. When the first locking portion 111 is positioned in the first position, the carrier side fastening unit 110 is in an opened configuration in which the carrier side fastening unit 110 can be put on or detached from a supporting portion 31 of the load carrier 1. When the first locking portion 111 is in a second position as in Fig. 69, the carrier side fastening unit 110 is in a closed configuration in which the carrier side fastening unit 110 is positively interlocked with the supporting portion 31. The carrier side fastening unit 110 may be configured identical to embodiments described with reference to Figs. 70 to 72.

The spacer comprises a load side attachment unit 150. The load side attachment unit 150 comprises a locking unit, which may be functionally similar to the locking unit 160 of Figs. 61 to 64. The locking unit 160 may comprise a blocking portion 161. The blocking portion 161 may be movable in a direction perpendicular to a movement direction of the engaging section 117. The blocking portion 161 may comprise a platelike portion. The blocking portion 161 may comprise an opening 165 for passing the engaging section 117 therethrough. The blocking portion 161 may be configured as shown in Fig. 62. For example, the blocking portion 161 may comprise an opening 165 with a narrow section 166 and a wide section 167. The wide section 167 is large enough to allow the engaging section 117 to pass therethrough. The narrow section 166 comprises a dimension which is smaller than an outer dimension of the engaging section 117. Accordingly, when the engaging section 117 is passed through the wide section 167, the blocking portion 161 may be shifted such that the narrow section 166 is arranged behind the engaging section 117 and blocks a movement of the engaging section 117 in opposite direction. The blocking portion 161 may be biased towards a blocking position in which passing of the engaging section 117 through the blocking portion 161 is blocked, for example by means of a biasing member or urging member 613, for example a spring.

The load side attachment unit 150 in this embodiment may in addition or alternatively comprise a strap insertion blocking mechanism with a blocking portion that is movable into and out of the strap passage. The blocking portion may be a free end portion of a metal band or plate which is operatively coupled to the blocking portion 161 and/or operating member 170.

The load side attachment unit further comprises a locking mechanism. The locking mechanism comprises an operating portion, for example a locking cylinder 180 operable by a key 182. The locking portion is rotatable about a rotation axis. The locking portion is operatively coupled to a blocking portion, for example a tab, and is operatively coupled to a strap locking mechanism. The locking portion is movable between a locking position and an unlocking position. The blocking portion and the strap locking mechanism are correspondingly moved to a blocking or locking position and to an unblocking or unlocking position.

The strap locking mechanism comprises a rotating locking member having a strap passage or strap opening. The rotating locking member is movable between a locking position and an unlocking position. When the locking portion of the locking mechanism is in the locking position, the locking member is rotated into the locking position in which it engages with an inserted strap. When the locking portion of the locking mechanism is in the unlocking position, the locking member is rotated into the unlocking position in which it is out of engagement with an inserted strap. The rotatable locking member and the locking portion are coupled to each other by means of a force transfer mechanism which is configured to transfer a rotation of the locking portion into a rotation of the rotatable locking member. The force transfer mechanism comprises a force transfer member coupled to the locking portion at a first portion and coupled to the rotatable locking member at a second portion. The first portion comprises a circular opening. The locking portion comprises an eccentric cam surface received in the circular opening. A rotation of the locking portion is transferred into a translatory movement of the force transfer member via the combination of the eccentric cam and the opening in the first portion. The second portion is coupled to the rotatable locking member by means of a pivot, such that a translatory movement of the force transfer member is transferred into a rotational movement of the rotatable locking member.

The blocking portion, for example the tab, is movable between a blocking position in which it blocks a movement of the operating member 170 towards an unlocking or release position. Accordingly, the configuration may be such that a rotation of the operating member from the closed position to the open position unblocks a movement of the operating member 170 and unlocks an inserted strap.

Fig. 70 shows a side view of a spacer 100 according to an embodiment. The spacer 100 is configured as a bike to frame arm. In other words, the space 100 is configured to couple a portion of the bike with a supporting portion of the load carrier. The spacer 100 comprises a first attachment portion 101 and the second attachment portion 102. The first attachment portion 101 comprises a carrier side fastening unit 110. The second attachment portion 102 comprises a load side attachment unit 150. The carrier side fastening unit 110 and the load side attachment unit 150 are coupled to each other by a connecting structure 103. The connecting structure 103 comprises a hollow profile 104. The carrier side fastening unit 110 and the load side attachment unit 150 may be coupled to each other such that forces acting in longitudinal direction of the spacer 100 may be transferred from the carrier side fastening unit to the load side attachment unit without changing a distance between the carrier side fastening unit 110 and the load side attachment unit 150. Accordingly, the connecting structure 103 may be configured to maintain the carrier side fastening unit 110 and the load side attachment unit 150 at a predefined distance.

The carrier side fastening unit 110 comprises a first locking portion 111 and a second locking portion 112. The first locking portion 111 is movable relative to the second locking portion 112. In the embodiment, the first locking portion 111 is translatory movable with respect to the second locking portion 112. More precisely, the first locking portion 111 is translatory movable along a main extension direction or longitudinal direction of the spacer 100. The first locking portion 111 is movable between a first position and a second position. When the first locking portion 111 is positioned in the first position, the carrier side fastening unit 110 is in an opened configuration in which the carrier side fastening unit 110 can be put on or detached from a supporting portion 31 of the load carrier 1. When the first locking portion 111 is in a second position, the carrier side fastening unit 110 is in a closed configuration in which the carrier side fastening unit 110 is positively interlocked with the supporting portion 31. The first position may be a position in which the first locking portion 111 is arranged at a greater distance from the load side attachment unit 150 and the connecting structure 103 than in the second position. In other words, when the first locking portion 111 is moved towards the first position, the first locking portion 111 is moved away from the load side attachment unit 150 and the connecting structure 103. On the other hand, when the first locking portion 111 is moved towards the second position, the first locking portion 111 is moved towards the load side attachment unit 150 and the connecting structure 103.

The first locking portion 111 comprises or defines a receiving section 113 for receiving the supporting portion 31. The receiving section 113 may be configured to partially receive the supporting portion 31 or to fully receive the supporting portion 31. In the embodiment as shown in Fig. 70, the receiving section 113 is configured to fully accommodate the supporting portion 31 therein. The first locking portion 111 may comprise a recess for accommodating the supporting portion 31. The first locking portion 111 may be configured as a hook defining the recess.

The second locking portion 112 is provided stationary on the spacer 100. The second locking portion 112 comprises a receiving section 112.2 for receiving the first locking portion 111 and blocking access to the receiving section 113 of the first locking portion 111. For example, the second locking portion 112 may be configured to close an access opening into the recess of the first locking portion 111 when the first locking portion 111 is moved to the second position. The first locking portion 111 may be configured such that the opening of the recess faces in a direction cross to the movement direction of the first locking portion 111. For example, the recess may extend in a direction perpendicular to the movement direction of the first locking portion 111. In the embodiment of Fig. 70, the access opening of the receiving section 113 is arranged on a lower side of the first locking portion 111. With this configuration, the first locking portion 111 may be put on the supporting portion 31 from above.

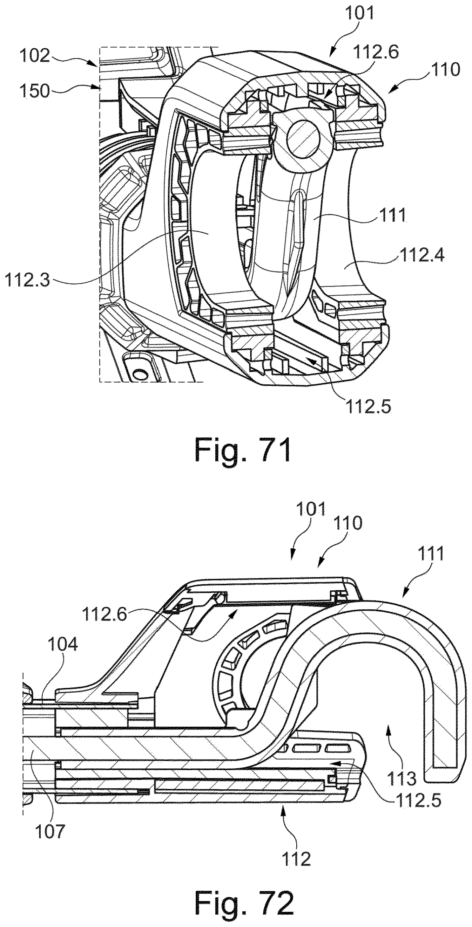

The second locking portion 112 may be defined in a housing 112.1 of carrier side fastening unit 110. The carrier side fastening unit 110 may further be configured to guide the first locking portion 111. In particular, the carrier side fastening unit 110 may guide the first locking portion 111 to allow a translating movement and prevent a rotating movement. The carrier side fastening unit 110 may comprise a guiding recess formed in the housing 112.1. For example, the carrier side fastening unit 110 may comprise a lower guiding recess 112.5 and an upper guiding recess 112.6. The lower guiding recess 112.5 may be configured to support a lower portion of the first locking portion 111 and the upper guiding recess 112.6 may be configured to support an upper portion of the first locking portion 111, wherein the upper portion of the first locking portion 111 may be a portion defining the bottom portion of the recess. Figs. 71 and 72 show an exemplary configuration in which the carrier side fastening unit 110 comprises a lower guiding recess 112.5 and an upper guiding recess 112.6. It is noted that both guiding recesses may be provided in an integral housing of the carrier side fastening unit 110.

The first locking portion 111 may be coupled to a force transfer member 106, for example a rod 107, 116. The rod 107, 116 may be integrally formed with the first locking portion 111. The force transfer member 106 may be operatively coupled to or may comprise an engaging section 117 as described in other portions of this specification. The engaging section 117 may be configured to be received in a locking unit or engaging unit provided in the spacer 100 for locking the first locking portion 111 and, in some configurations additionally the second locking portion 112, in a locking position.

As is further shown in Fig. 70, the first receiving section 113 and a second receiving section 112.2 may each be U-shaped. The first receiving section 113 may be turned with respect to the second receiving section 112.2 by 90 degrees. The first receiving section 130 may be configured retractable into the second receiving section 112.2. The second receiving section 112.2 may comprise deformable receiving structures 112.3, 112.4 for contacting the supporting portion 31.

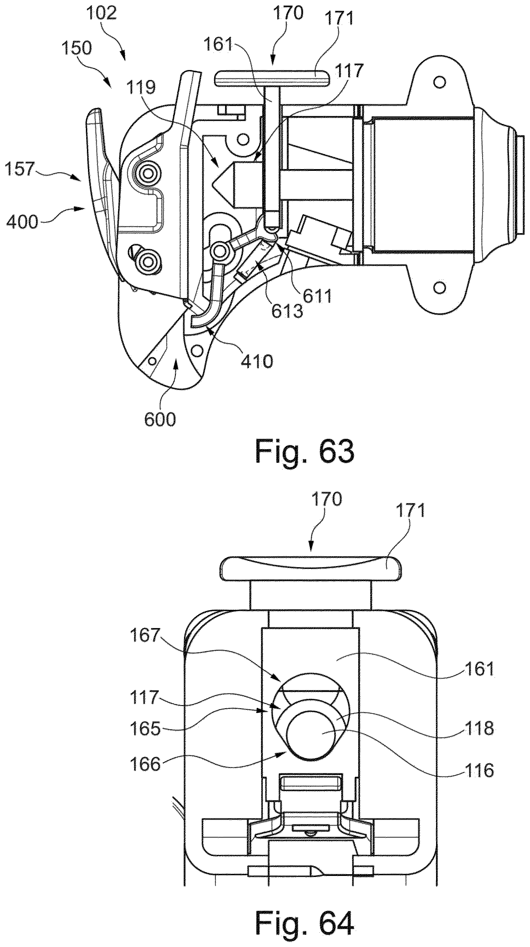

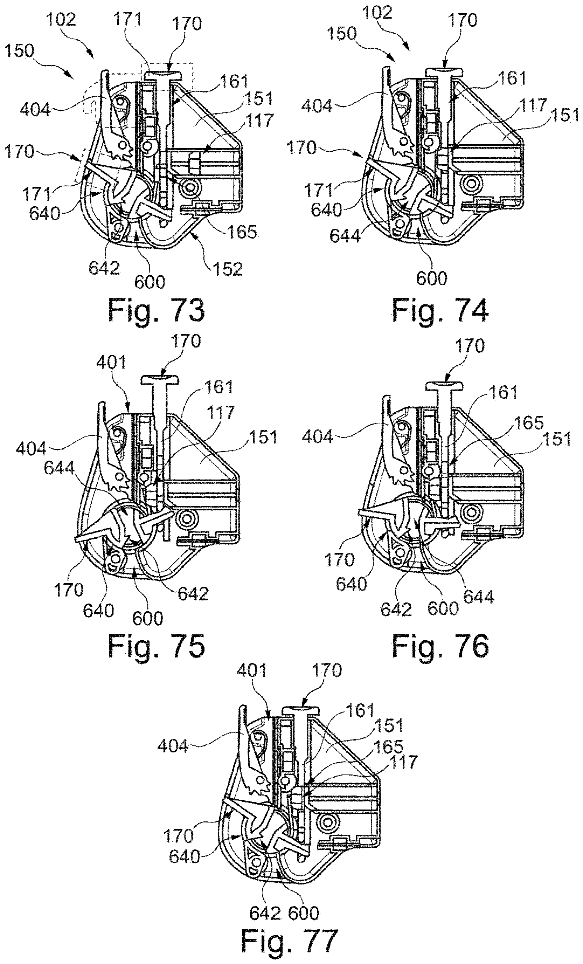

Figs. 73 to 77 show possible configurations of the load side attachment unit 150. All of the shown configurations are designed to arrest the engaging section 117 or to block a movement of the engaging section 117. The engaging section 117 is movable between a first position corresponding to an opened configuration of the carrier side fastening unit 110 and a second position corresponding to a closed configuration of the carrier side fastening unit 110. The shown configurations are configured to arrest the engaging section 117 in the second position. Furthermore, the shown configurations are configured to release the engaging section 117 from the second position by means of a release mechanism. The general principle how the engaging section 117 is locked in the load side attachment unit 150 follows the same principle as shown in the embodiments of Fig. 69 and Fig. 63.

The locking unit 160 is configured to lock a movement of the force transfer member 106 relative to the housing 151 of the load side attachment unit 150 when the force transfer member 106 is in a second position corresponding to a position in which the carrier side fastening unit 110 is closed.

The locking unit 160 comprises a blocking portion or locking member 161, 431. The blocking portion 161 may be defined as a catch or as a locking pin.

The blocking portion or locking member 161, 431 may be provided integrally movable with the force transfer member 106, for example on the force transfer member 106, and may be configured to engage with a stationary portion of the spacer 100, for example with the housing 151. An example is shown in Figs. 50 to 52 in which the locking member 431 is integrally movable with the force transfer member 107 and configured to engage with an engaging portion in the housing 151, in the shown example from inside and into an opening 151.2 in the housing 151. The locking member 431 may be provided on a movable support 430 coupled to an end portion of the force transfer member 106, for example of the rod 107.

The blocking portion 161 may be supported on the housing 151. The blocking portion 161 may be configured to engage with the engaging section 117. For that, the blocking portion 161 is movable between a locking position in which it engages with the engaging section or blocks a movement of the engaging section and an unlocking position in which it is disengaged from the engaging section and/or does not block a movement of the engaging section. The engaging section 117 may be a recess, an opening or a protrusion or protruding portion on the force transfer member 106. The blocking portion 161 may be configured to engage behind the engaging section 117 as soon as the engaging section 117 was moved to the second position.

The blocking portion 161 may be configured as a translatory movable member. The blocking portion 161 may be movable in a direction perpendicular to a movement direction of the engaging section 117. The blocking portion 161 may comprise a platelike portion. The blocking portion 161 may comprise an opening 165 for passing the engaging section 117 therethrough. The blocking portion 161 may be configured as shown in Fig. 62. For example, the blocking portion 161 may comprise an opening 165 with a narrow section 166 and a wide section 167. The wide section 167 is large enough to allow the engaging section 117 to pass therethrough. The narrow section 166 comprises a dimension which is smaller than an outer dimension of the engaging section 117. Accordingly, when the engaging section 117 is passed through the wide section 167, the blocking portion 161 may be shifted such that the narrow section 166 is arranged behind the engaging section 117 and blocks a movement of the engaging section 117 in opposite direction. The blocking portion 161 may be biased towards a blocking position in which passing of the engaging section 117 through the blocking portion 161 is blocked, for example by means of a biasing member or urging member 162, 613, for example a spring.

The locking unit 160 may further comprise a release mechanism for releasing the engaging section 117. The release mechanism is configured to move the blocking portion 161 to the unlocking position. The release mechanism may comprise an operating portion 170 operable by a user. The operating portion 170 may be a portion which is accessible by a user from outside of the housing 151 of the load side attachment unit 150. The operating portion 170 may be or may comprise a push member 171 or may be or may comprise a pull member 172.

For example, in the configuration of the spacer 100 as shown in Fig. 57, the operating portion 170 is configured as a pull member 172 which is movable along the housing 151 of the load side attachment unit 150. In the shown configuration, pulling the pulling member 172 in a direction away from the carrier side fastening unit 110 moves the blocking portion 161 to the unlocking position.

Examples of an operating portion 170 which is configured as a push member 171 can be found in the configurations shown in Figs. 50, 59 to 69, 73 to 85. It is noted that in the example configuration of Figs. 73 to 77, two possible configurations of the operating portion 170 are shown but in some configurations, only one of the two operating portions 170 is provided, for example the translatory movable operating portion 170 shown in the upper part of the figures or the rotatably movable operating portion 170 shown on the lower left side of the figures.

The operating portion 170 and/or the blocking portion 161 may be biased towards the locking position. The configuration may comprise a snap or catch which temporarily holds the operating portion 170 and/or the blocking portion 161 in the unlocking position. If the operating portion 170 is configured as a push member or button, the unlocking position may correspond to a depressed position of the push member. The snap or catch may be configured to be operated and released by the force transfer member 106, for example by an end portion of the force transfer member 106 and/or by the engaging section 117. With such a configuration, the operating portion 170 and/or the blocking portion 161 remain in the unlocking position until the force transfer member is correctly locked by the blocking portion 161. The snap or catch may thus be configured to be triggered by the force transfer member to initiate a locking process or movement of the blocking portion 161. Accordingly, the operating portion 170 may in some embodiments only be able to move to the locking position if the engaging section 117 is locked by the blocking portion 161.

The operating portion may be provided on a rotatable strap passage blocking member which is operatively coupled to the blocking portion 161. Accordingly, the blocking portion 161 may be operated by an operation of the strap passage blocking member. In this configuration, the operating portion may be integrally formed with the strap passage blocking member.

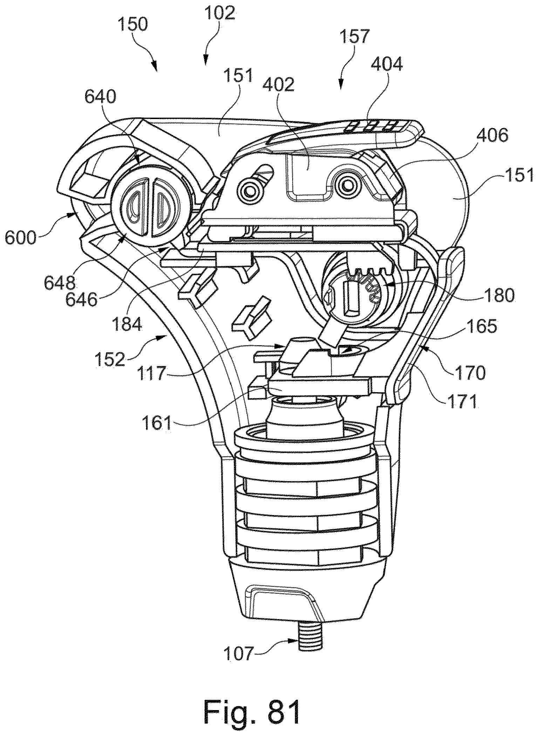

Figs. 78 to 80 show a modification in which the rotatable operating portion is designed and configured to be operated by an operating lever 404 of a strap receiver 157. The operating lever 404 is in contact with the rotatable operating portion 170 such that pushing the operating lever 404 inwardly into the housing 151 results in a rotation of the strap passage blocking member in a strap blocking direction and/or of a strap engaging portion 642 that may be formed on the strap passage blocking member in an unlocking direction. Accordingly, when the operating lever 404 is slightly pushed inwardly, an engagement between the engaging portion 642 and an inserted strap is released allowing to remove the inserted strap from the strap passage. After the strap is removed, the operating lever may be further pushed inwardly which leads to a movement of the blocking portion 161 to an unblocking position and releases the engaging section 117 and which rotates the strap passage blocking member 640 to the blocking position, namely a position in which a passage formed in the strap passage blocking portion is misaligned or offset with respect to the strap passage in the housing 151. It is noted that in this embodiment, the strap passage blocking member 640 comprises engaging portion 642 configured to engage with the inserted strap. The strap passage blocking member 640 may thus have a double function in blocking an insertion of a strap and locking the strap. It is also possible to separate those two functions, as is for example done in the configurations shown in Figs. 81 to 85 where the locking function is provided by a separate locking sleeve or strap locking member 648 coaxially arranged on an outer circumference of the strap passage blocking member 640. The locking sleeve 648 may be operated by a locking mechanism and the strap passage blocking member may be operatively coupled to the operating portion 170.

An embodiment of a load side attachment unit 150 will be described with reference to Figs. 81 to 85. The load side attachment unit 150 comprises a fastening mechanism with a strap 154 and a strap receiver 157. The load side attachment unit 150 further comprises a strap passage 602 which is accessible via an insertion portion 600 on the load side attachment unit 150. The insertion portion 600 comprises an opening. The strap receiver 157 is arranged on the load side attachment unit 150 such that the strap 154 is passable into the strap receiver 157 via the strap passage 602. The load side attachment unit 150 further comprises a strap locking member 648 configured to move between an unlocking position in which it does not lock an inserted strap in the strap passage and a locking position in which it locks the strap 154 in the strap passage. The strap locking member 648 may be rotatable between said unlocking position and said locking position. The strap locking member 648 may be rotatable about a rotation axis which is perpendicular to a strap passage extension path and/or parallel to a strap passage extension surface. The strap locking member 648 may be arranged such that the rotation axis is located in the strap passage.

The strap locking member 648 may define a passageway for receiving the strap 154 and may be configured engageable with an inserted strap. The strap locking member 648 is engageable with an inserted strap 154. The strap locking member 648 comprises an engaging portion 652 engageable with the strap. In the embodiment, said strap locking member 648 comprises or is configured as a sleeve.

The load side attachment unit 150 further comprises a strap locking mechanism. The strap locking mechanism comprises an operating member, for example embodied as a locking cylinder 180 operable by a key 182. The operating member is operatively coupled to the strap locking member 648 by means of a force transfer portion 184 such that a movement of the operating member to a locking position moves the strap locking member 648 to the locking position and a movement of the operating member to an unlocking position moves the strap locking member 648 to the unlocking position. The force transfer portion 184 may be coupled to the strap locking member 648 by means of a pivot and may be engaged with the locking cylinder 180 by a gear mechanism.

The attachment unit 150 may be a part of a spacer 100. The spacer may further comprise a carrier side fastening unit 110 for attaching to a supporting portion 31 of a load carrier. The carrier side fastening unit 110 is configured transferable between a locking configuration in which said fastening unit 110 is non-detachably fixed on the supporting portion 31 and an unlocking configuration in which the fastening unit 110 is mountable to and detachable from the supporting portion 31. The spacer may further comprise an attachment portion locking mechanism 160 configured to lock the further carrier side fastening unit 110 in the locking configuration. The spacer may further comprise a release mechanism for unlocking the carrier side fastening unit 110. The strap locking mechanism is operatively coupled to the release mechanism such that when the operating portion is in a locking position, the release mechanism is blocked, for example by blocking a movement of an operating portion 170 of the release mechanism, for example a push member or a pull member. The operating member 180 of the strap locking mechanism may be operatively coupled to a blocking section 186, for example a tab or protrusion coupled to the operating member 180, for blocking a movement of the operating portion 170 towards an unlocking position or maintaining the operating portion 170 in the locking position. Accordingly, operating the operating member 180 can simultaneously unblock the operating portion 170 by moving the blocking section 186 to an unlocking position and unlock an inserted strap by moving the locking sleeve 648.

The spacer may further comprise a strap passage blocking portion 640 provided in the strap passage 602 and configured to move between an unblocking position in which it does not block the strap passage and a blocking position in which it blocks the strap passage. The strap passage blocking portion 640 is rotatable between the mentioned positions.

The strap passage blocking portion 640 is rotatable about an axis which is perpendicular to a strap passage extension path and parallel to a strap passage extension surface. The strap passage blocking portion 640 comprises a through opening for receiving the strap wherein the through opening is aligned with the strap passage when the strap passage blocking portion 640 is in the unblocking position and is unaligned with the strap passage when the strap passage blocking portion 640 is in the blocking position. The strap passage blocking portion 640 is operatively coupled to the operating member 170 by a force transfer portion 650. The force transfer portion 650 may be translatory movable.

The strap passage blocking member 640 and the locking sleeve 648 can be arranged rotatable about a common rotation axis. The locking sleeve 648 may be slidably mounted on the strap passage blocking member 640 so as to be rotatable independently of the strap passage blocking member 640.

According to a further aspect, a spacer 100 with a carrier side fastening unit 110 and a load side attachment unit 150 is provided. The carrier side fastening unit 110 is configured transferable between an opened configuration and a closed configuration. In the opened configuration, the carrier side fastening unit 110 can be put on or detached from a supporting portion 31 of the load carrier 1. In the closed configuration, the carrier side fastening unit 110 is positively locked with an inserted supporting portion 31. The carrier side fastening unit 110 comprises a first locking portion 111 which is moved relative to a second locking portion 112 from an unlocking position to a locking position when the carrier side fastening unit 110 is transferred from the opened configuration to the closed configuration. The first locking portion 111 is operatively coupled to an engaging section 117. Corresponding to the movement of the first locking portion 111, the engaging section 117 is movable between an unlocking position and a locking position. In the locking position, the engaging section 117 may be positioned in the load side attachment unit 150. The load side attachment unit 150 may comprise a locking unit 160 configured to automatically block a movement of the engaging section 117 from the locking position to the unlocking position when the engaging section 117 is positioned in the locking position. Accordingly, the locking unit 160 is configured to lock the carrier side fastening unit 110 in the closed configuration as soon as the first locking portion 111 is positioned in the locking position. The locking unit 160 may be configured as described in other aspects, embodiments, and configurations of this specification. The spacer 100 comprises an adjusting mechanism 670.

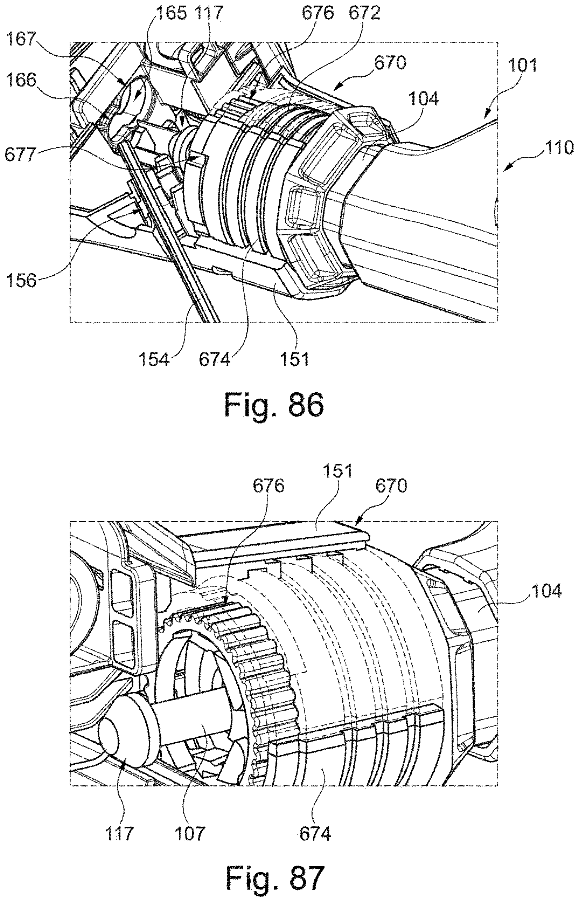

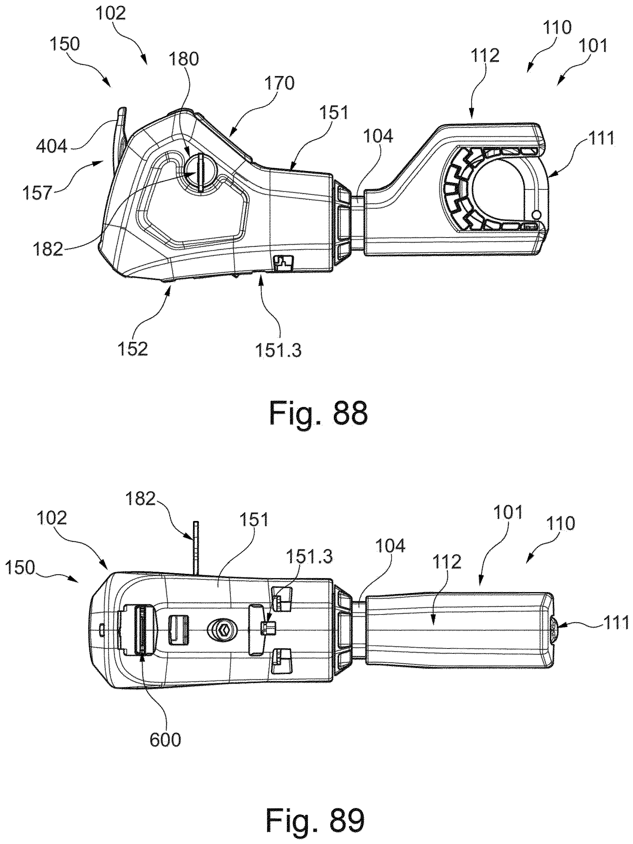

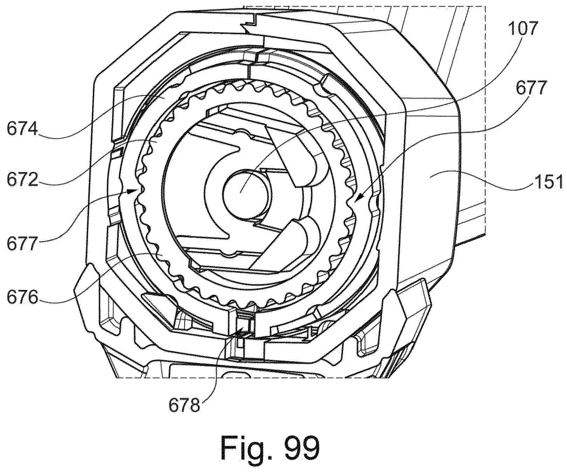

Fig. 86 shows a perspective view on an adjusting mechanism for adjusting a locking unit for locking the carrier side fastening unit in a closed configuration. Fig. 87 shows a further perspective view on the adjusting mechanism. Fig. 88 shows a side view on a spacer comprising the adjusting mechanism. Fig. 89 shows the spacer of Fig. 88 from below. Fig. 99 shows a cross sectional view through the adjusting mechanism.

The adjusting mechanism is configured to allow a change of the position of the locking unit 160 relative to the connecting structure 103 and the carrier side fastening unit 110. In other words, the adjusting mechanism is configured to change a position of the blocking portion or catch 161 relative to the engaging section 117. In this way, manufacturing tolerances may be removed.

The adjusting mechanism 670 may comprise an inner sleeve portion 672 fixedly coupled to an end portion of the connecting structure 103, for example to an end portion of the hollow profile 104. The adjusting mechanism 670 may further comprise an outer sleeve portion 674. The outer sleeve portion 674 is positioned co-axial around the inner sleeve portion 672. Furthermore, the outer sleeve portion 674 is in threaded engagement with the inner sleeve portion 672. Accordingly, a rotation of the inner sleeve portion 672 relative to the outer sleeve portion 674 offsets the inner sleeve portion 672 relative to the outer sleeve portion 674 in axial direction. In other words, the outer sleeve portion 674 is moved in axial direction relative to the inner sleeve portion 672 when the sleeve portions are rotated relative to each other. The outer sleeve portion 674 may be slidably received in the housing 151 of the load side attachment unit 150 such that the housing 151 is rotatable relative to the outer sleeve portion 674 about an extension axis of the sleeve portion 674. The outer sleeve portion 674 and the inner sleeve portion 672 are coupled to each other such that a predetermined rotational force may be transferred between the sleeve portions. The predetermined rotational force is higher than a force exerted on the outer sleeve portion 674 when the housing 151 is rotated on the outer sleeve portion 674. The inner sleeve portion 672 may comprise an engaging portion 676, for example a ring like portion with teeth protruding radially outward, at which the inner sleeve portion 672 is engaged with the outer sleeve portion 672. The engagement may be configured such that the engagement is released when the predetermined force is exceeded. For example, the engaging portion 676 may comprise teeth or other engaging members.

The outer sleeve portion 674 comprises an engaging section 677, for example a protrusion, configured to engage with the engaging portion 676 on the inner sleeve portion to block a rotation of the inner sleeve portion relative to the outer sleeve portion, in other words, to couple the inner sleeve and outer sleeve together such that they integrally rotate. The engaging section 677 may be configured such that an engagement with the engaging portion 676 is released when a predetermined force acting thereon is exceeded. For example, the engaging section 677 may be deformable.

The outer sleeve portion 674 may comprise a tool engaging portion 678 provided for temporarily blocking a rotation of the outer sleeve portion 674 and configured for an engagement with a tool. The engaging portion 678 may be a recess or opening formed in the outer circumference of the outer sleeve portion 674. As is shown in Figs. 88 and 89, an access opening 151.3 may be provided in the housing 151 at positions allowing to pass a tool through the access opening 151.3 and to engage the same with the engaging portion 678. A user may thus lock a rotation of the outer sleeve portion 674, for example with respect to the housing 151, and rotate the inner sleeve portion 672 relative to the outer sleeve portion 674 by rotating the force transfer structure, for example the hollow profile 104, relative to the housing or rotating the housing 151 relative to the force transfer structure in order to adjust a position of the inner sleeve portion 672 relative to the outer sleeve portion 674. In this way, the position of the housing 151 relative to the hollow profile 104 is changed. Therefore, the position of the locking unit 160 relative to the engaging section 117 is also changed allowing to adjust the position of the locking unit 160 such that a proper engagement with the engaging section 117 can be achieved.

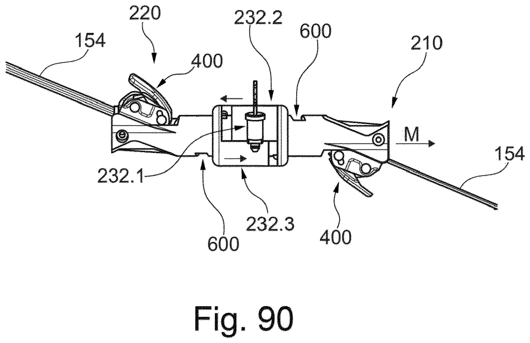

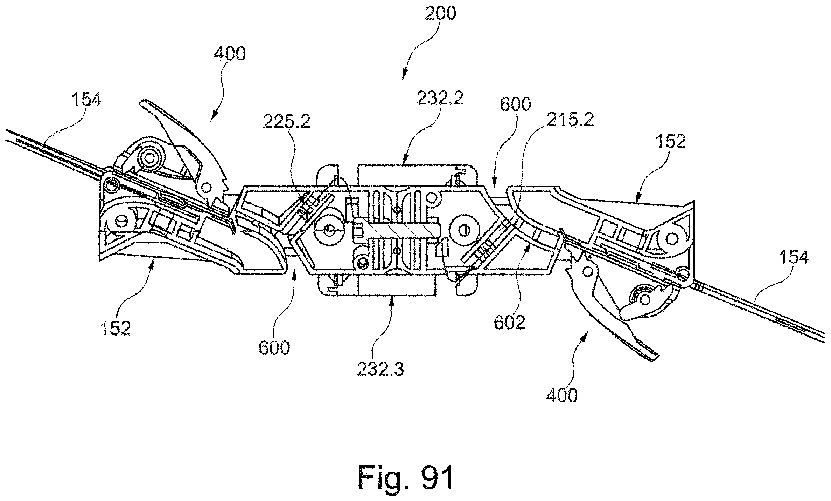

An embodiment of a spacer 200 for coupling two bikes to each other will be described with reference to Figs. 90 and 91. Fig. 90 shows a side view of a spacer according to an embodiment. Fig. 91 shows a sectional view of the spacer of Fig. 90.

The spacer 200 comprises a first attachment portion 210 and a second attachment portion 220. The first attachment portion 210 and the second attachment portion may comprise an identical configuration. The first attachment portion 210 and the second attachment portion 220 are coupled to each other by means of a connecting structure. Each of the first attachment portion and the second attachment portion may be rotatably coupled to each other by means of the connecting structure. Each attachment portion is configured for being laterally supported against a portion of the bike to be coupled. Each attachment portion comprises a contact portion 152 facing in a direction radially away from a middle main extension axis of the spacer. The contact portions 152 are provided inside portions of the attachment portions.

Each attachment portion comprises a fastening mechanism comprising a strap and a strap receiver. A fixation strap 154 is at one end fixedly coupled to a housing of the attachment portion. A strap receiver is provided on the housing. The strap receiver is configured to receive and lock and/or tighten a free end portion of the strap 154. When the strap 154 is received in the strap receiver and or tightened in the strap receiver, the fastening mechanism is in a closed configuration. A strap passage 602 is defined in each attachment portion which is accessible through an opening 600. The strap 154 may be inserted into the strap passage 602 through the opening 600 and may be moved along the strap passage 602 into the strap receiver 157. In the present configuration, the strap receiver 157 comprises a pump buckle mechanism 400. The pump buckle mechanism 400 may be configured in the same manner as described with respect to other embodiments, aspects and configurations using a pump buckle mechanism 400.

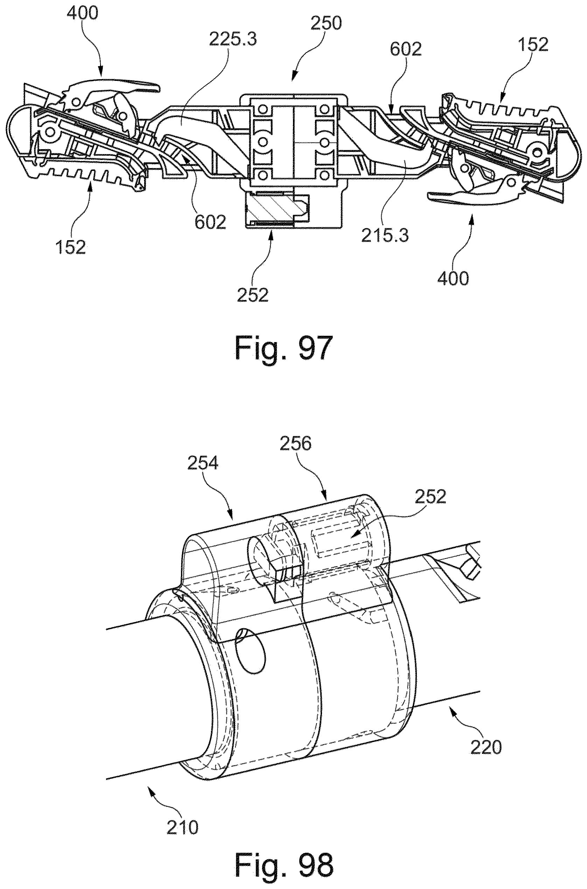

The spacer 200 comprises a locking mechanism which is configured to lock the fastening mechanisms in closed configuration. Each attachment portion 210, 220 comprises an engaging portion 215.2, 225.2 which is movable between a blocking position and an unblocking position. In the blocking position, the engaging portion 215.2, 225.2 protrudes into the strap passage 602 in a manner that the engaging portion engages with an inserted strap. In the unlocking position, the engaging portion 215.2, 225.2 is moved out of the strap passage 602 for releasing an engagement with an inserted strap. The engaging portion may be provided on a translatory movable member (see for example the configuration as shown in Fig. 91) or on a rotatably movable member such as a pivoting lever (see for example the configuration as shown in Fig. 97).

The spacer 200 further comprises an operating unit with one or more movable operating members. Some of the movable operating members are operatively coupled to the engaging portions such that a movement of the operating members is transferred into a movement of the engaging portions. The movable operating members are movable between an unlocking position and a locking position corresponding to an unblocking position and the blocking position of the engaging portions, respectively. The operating unit may comprise two movable operating members. For example, in the configuration according to Figs. 90 and 91, a first translatory movable portion 232.2 and a second translatory movable portion 232.3 are provided on an outer circumferential portion of the spacer 200 and are translatable along the main extension direction M of the spacer 200. In an alternative configuration as shown in Fig. 98, the movable portions may be rotatably movable about the main extension direction M or a main extension axis of the spacer 200. The movable operating members are lockable in the locking position by a lock 232.1, for example comprising a locking cylinder which is operable by a key. The lock may be configured to lock the movable operating members to each other. The movable operating members may be formed such that they commonly form an outer sleeve portion. Each movable operating member may form a half of the outer sleeve portion. The halves are movable with respect to each other. Each half may form an operating member. By pressing the halves together or shifting them towards each other, both fastening mechanisms may be simultaneously locked by simultaneously locking both inserted straps.

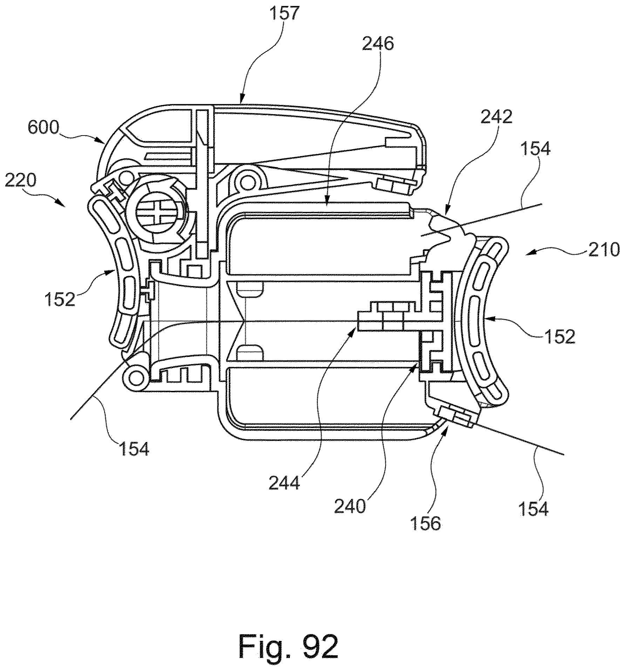

An embodiment of a spacer 200 is shown in Fig. 92. Fig. 92 shows a sectional side view on a spacer according to an embodiment.

The spacer comprises a first attachment portion 210 and a second attachment portion 220. The first attachment portion 210 and the second attachment portion 220 are coupled to each other so as to be rotatable relative to each other, for example by 360 degrees, about a common rotation axis. Each of the first attachment portion 210 and the second attachment portion 220 is configured to be coupled to coupling portions of a respective bike. Each of the first attachment portion 210 and the second attachment portion comprises a supporting portion 152 four contacting the bike. The first attachment portion 210 comprises a first fastening mechanism comprising a first strap 154 and a first strap receiver 242. A fixed end portion 156 of the first strap 154 is coupled to the movable support 240. The movable support 240 is arranged behind the supporting portion 152 of the first attachment portion 210. In the embodiment, the movable support 240 is arranged between the supporting portion 152 of the first attachment portion 210 and the supporting portion 152 of the second attachment portion 220. The movable support 240 is movable towards and away from the supporting portion 152 of the first attachment portion. The movable support 240 may be arranged in a housing 246. The movable support 240 comprises a first strap receiving portion 242 which may be configured as a hook. The movable support 248 may be movable between a first position in which the movable support 240 is positioned with respect to the housing 246 to allow to hook the free end portion 155 of the strap 154 onto the strap receiving portion 242 and a second position in which the movable support 248 is retracted into the housing 246 such that a detachment of the free end portion 155 of the strap 154 from the strap receiving portion 242 is blocked. The housing 246 may comprise an opening for accessing the strap receiving portion 242 when the movable support 240 is in the first position.

The second attachment portion 220 comprises a second strap 154 and a second strap receiver 157. The strap comprises a fixed end portion which in this configuration is operatively coupled to a coupling portion 244 of the movable support 240. Accordingly, tightening the second strap 154 of the second attachment portion 220 leads to a movement of the movable support 240 from the first position to the second position. Accordingly, tightening the second strap 154 of the second attachment portion 220 leads to a movement of the formed strap loop in the first attachment portion relative to the supporting portion 152 of the first attachment portion 210 and may apply a tightening force on the bike portion contacted to the supporting portion 152. The coupling portion 244 may be rotatable on the movable support such that a rotation of the movable support is not transferred to the fixed end portion of the second strap. In this way, the first attachment portion 210 and the second attachment portion 220 can be configured rotatable with respect to each other without twisting the second strap on the second attachment portion.

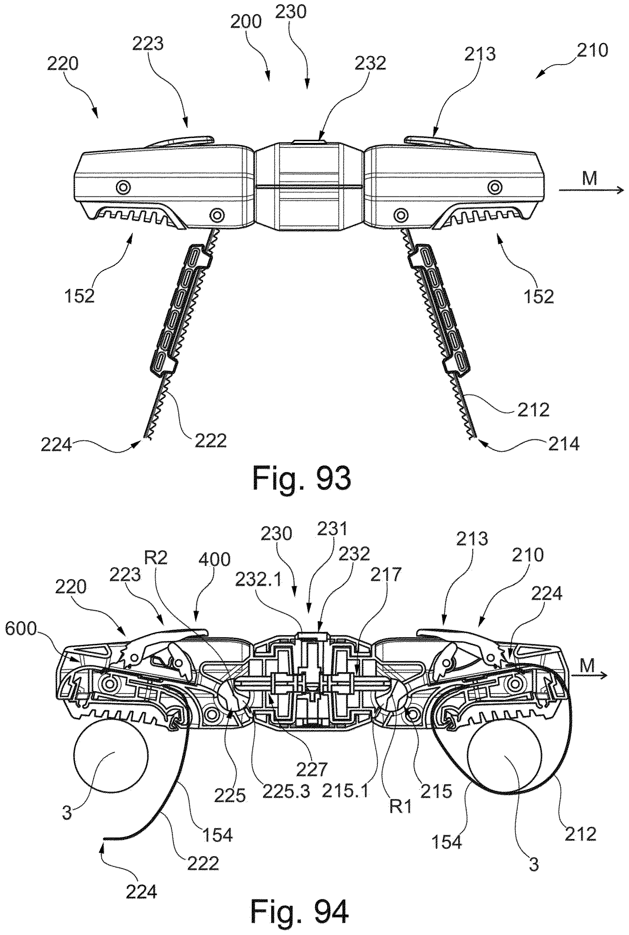

Further embodiments of a spacer 200 will be described with reference to Figs. 93 to 96.

The spacer comprises a first attachment portion 210 and a second attachment portion 220. Both attachment portions 210, 220 are coupled to each other by means of an intermediate portion arranged between them. Each of the attachment portions 210, 220 may be rotatably coupled to the intermediate portion. Both attachment portions 210, 220 may be rotatable about a common rotation axis.

Each attachment portion 210, 220 may comprise a contact portion 152 for contacting a bike portion, for example a frame portion. The contact portion 152 may be provided on an outer circumference of the attachment portions 210, 220. Accordingly, each attachment portion 210, 220 may be configured for a sideways support.

Each attachment portion 210, 220 may comprise a fastening mechanism transferable between a closed configuration in which the fastening mechanism is capable of firmly attaching to a bike and an opened configuration in which the fastening mechanism can be put on and detached from a respective bike. Each fastening mechanism may comprise a strap 212, 222 fixedly mounted on the attachment portions at a portion adjacent to the contact portions 152. Each strap comprises a free end 214, 224. Each fastening mechanism further comprises a strap receiver 213, 223. The free end 214, 224 of each strap is insertable and lockable in a respective strap receiver 213, 223 for forming a fixation loop. The strap receivers may be configured as the strap receivers as described in other portions of this specification. The strap receivers 213, 223 are arranged on the attachment portions on a side which is opposite to the side where the contact portions 152 are provided. Strap passages for passing the free end portions through the attachment portions may extend substantially parallel to an extension direction of the contact portions 152.

The spacer 200 may further comprise a locking mechanism configured to lock the fastening mechanisms in the closed configuration. The locking mechanism 180, 230 may comprise an operating unit 231. The operating unit may comprise a movable operating member 232 such as a locking cylinder of a key operable lock. The operating unit may be operable by a user and may be configured such that the user can lock the fastening mechanisms in the closed configuration by performing a single operating step, in particular by moving the locking cylinder from an open position to a closed position. The locking mechanism may be configured to simultaneously lock the fastening mechanisms in the closed configuration. In the shown embodiment, the locking mechanism 230 is configured to block a detachment of the free end portions 214, 224 from the strap receivers 213, 223 after the free end portions 214, 224 has been received in the strap receivers 213, 223.

The locking mechanism comprises a first locking portion 215 associated with the first attachment portion 210 and a second locking portion 225 associated with the second attachment portion 220. The movable operating member 232 is operatively coupled with the first locking portion 215 and the second locking portion 225 to transfer each of the first locking portion 215 and the second locking portion 225 between an unlocking configuration and a locking configuration. The operating member 232 may be operatively coupled with the first locking portion 215 by means of the first force transfer portion 217. The operating member 232 may be operatively coupled with the second locking portion 225 by means of a second force transfer portion 227. The force transfer portions 217, 227 may be provided on separate force transfer members, for example rods or other elongate members, or may be provided on a single force transfer member centrally passing through the intermediate member or portion. According to the shown embodiment, the force transfer portions 217, 227 are configured to move translatory and along their respective longitudinal axes. The movable operating member 232 may be rotatable about an axis which is perpendicular to the longitudinal axis of the force transfer members. Each locking portion is rotatable about a rotation axis wherein each rotation axis extends perpendicular to the longitudinal axis of the force transfer members. The attachment portions are configured rotatable about the force transfer members so that in some embodiments, the longitudinal axis of the force transfer members coincides with a rotation axis of the attachment portions. End portions of the force transfer members may be in contact with respective locking portions. The locking portions may be biased such that an urging force is applied on the force transfer members.

As is shown in Fig. 94, the first locking portion 215 comprises a first engaging member 215.1 configured to engage with a first strap 212. The second locking portion 225 comprises a second engaging member 225.1 configured to engage with a second strap 222. The first engaging member 215.1 and the second engaging member 225.1 are each rotatable about a respective rotation axis R1, R2. The rotation axes may extend perpendicular to the main extension direction M of the spacer 200.

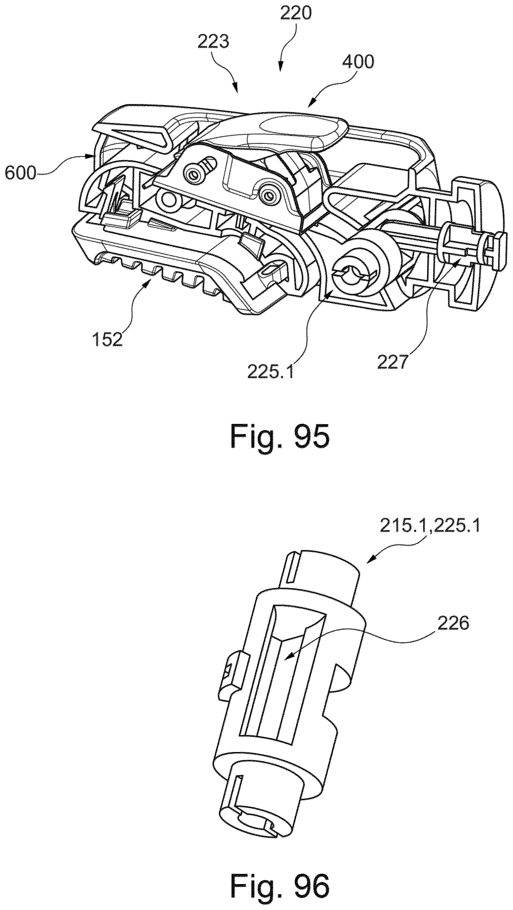

As is shown in Fig. 96, the first engaging member 215.1 and the second engaging member 225.1 comprise a through opening 226 for receiving a respective strap therein. The first and second engaging members are configured to engage with an inserted strap extending through the through opening 226. Each engaging member may comprise an engaging portion for engaging with teeth on the straps. Each engaging portion may be biased towards a disengagement position. The operating member 232 may be operatively coupled to each engaging member such that each engaging member can be moved towards and away from the disengagement position upon operating the operating member.

The engaging members may be provided in the strap passage between the strap receiver and an outlet of the strap passage. The outlets may be provided between the contact portions 152. As is further shown in Fig. 94, the strap paths in the attachment portions are configured such that insertion openings into the strap paths are provided in opposite longitudinal end faces of the spacer.

In Figs. 97 and 98, a modification of the spacer 200 of Fig. 91 is shown. Instead of translatory movable engaging members, the attachment portions comprise rotatably movable engaging members rotatable between a locking position in which a portion thereof protrudes into the strap passage to engage with an inserted strap and an unlocking position in which the portion is retracted from the strap passage. The spacer 200 according to this embodiment further comprises rotatably movable portions for operating the engaging members. The rotatably movable portions are rotatable about a rotation axis which is perpendicular to a pivot axis of the rotatably movable engaging members 215.3, 225.3. Again, the attachment portions are configured rotatable about a common rotation axis. The common rotation axis may be coaxial with the rotation axis of the rotatably movable portions. The rotatably movable portions may be sleeve portions provided on an outer circumference of a central portion of the spacer 200. The sleeve portions 254, 256 may be twisted relative to each other by rotating them in opposite directions between a locking position and an unlocking position. In the locking position, a locking section in one of the sleeve portions is aligned with a lock 252 in the other sleeve portion allowing to lock the sleeve portions in the locking position. Each sleeve portion is operatively coupled to a rotatably movable locking member 215.3, 225.3, for example via a guiding track as indicated in Fig. 98. The guiding track is configured to cooperate with a guiding member which is operatively coupled with a locking member. Accordingly, a rotation of the sleeve portions is transferred into a rotation of the locking members. When the sleeve portions are in the locking position, the locking members are in the locking position. When the sleeve portions are twisted with respect to each other, the locking members are in the unlocking position and allow a detachment of an inserted strap.

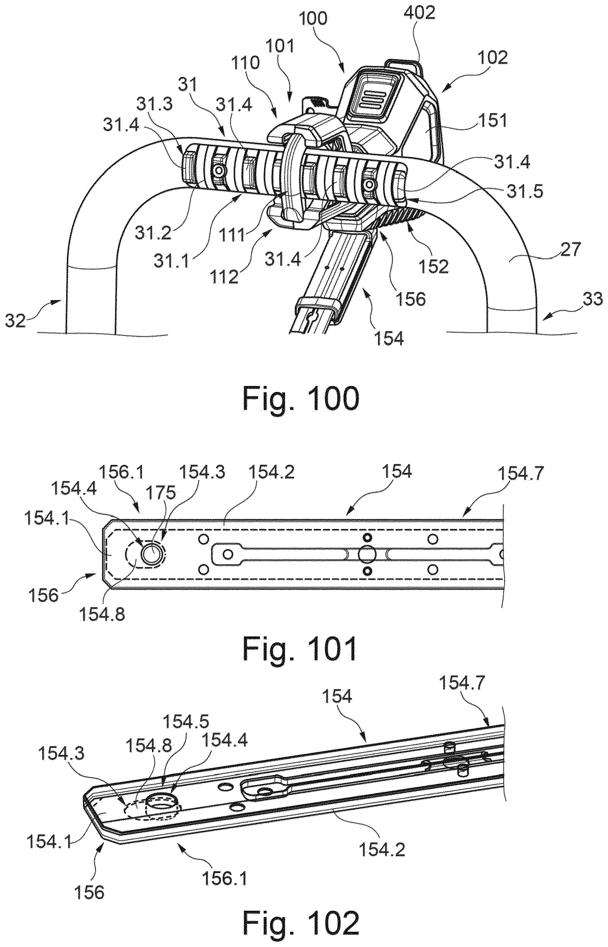

Fig. 100 shows a possible configuration of a supporting frame 27 of a load carrier 1. The supporting frame 27 may be configured as described in connection with other configurations as disclosed in this specification. The supporting frame 27 may comprise a base portion 31 extending in cross direction of the load carrier 1. The base portion 31 may be straight. In the configuration as shown in Fig. 100, the supporting frame 27 comprises two legs 32, 33. The base portion 31 and the legs 32, 33 form a U-shape. The base portion 31 forms a supporting portion for supporting a spacer 100. The spacer 100 may be a spacer as described in Figs. 50 to 52 and 57 to 89. A movement prevention portion 31.1 for preventing a sideways movement of the attachment portion 101 is mounted on the supporting portion 31. The movement prevention portion 31.1 is configured to geometrically prevent the movement of the attachment portion 101 relative to the base portion 31. The movement prevention portion 31.1 comprises several stop portions 31.3. Each stop portion 31.3 comprises a protrusion 31.4. Two adjacent stop portions 31.3 limit a supporting section 31.2 on which the attachment portion 101 can be supported. Several supporting sections 31.2 are provided on the movement prevention portion 31.1. The supporting sections 31.2 and the protrusions 31.4 are configured such that a clamping part or locking member 111 of the attachment portion 101 can only be supported on the supporting sections 31.2. In some configurations, the stop portions 31.3 may be configured to guide the attachment portion 101 into the supporting section 31.2. In some configurations, the stop portions 31.3 may be configured to guide the clamping part or locking member 111 into the supporting section 31.2. The stop portions may be configured such that a distance between them is enlarged towards free edge portions of the stop portions 31.3. The stop portions 31.3 may be formed tapering towards a free end portion in radial direction away from the supporting portion 31. In some embodiments, the stop portions 31.3 may be at least partially formed tapering in circumferential direction about the supporting portion 31. In this way, finding the right position on the supporting portion 31 for mounting the attachment portion 101 is simplified for a user. A free end portion of a clamping part of a locking member 111 can thus be easier received between two adjacent stop portions 31.3. In the shown configuration, the stop portions 31.3 are only provided on the supporting portion 31 such that they protrude in rearward direction of the load carrier away from the supporting frame 27 and such that they protrude away from a loading area for two wheelers. In the embodiment, the stop portions 31.3 and the supporting sections 31.2 are provided on a movement blocking member 31.5 which is mounted on the supporting portion 31 by fastening members. Accordingly, existing supporting frames 27 can be retrofitted by fixing such a blocking member 31.5 on the supporting portion 31 of the existing supporting frame.

Fig. 100 shows a state in which a spacer 100 is fixedly mounted on the movement prevention portion 31.1. A free end portion of the locking member 111 is received between two stop portions of 31.3 or protrusions 31.4. The base portion 31 and one supporting section 31.2 are received in a receiving section 113 of the attachment portion 101. The receiving section 113 can be configured as described in connection with other configurations in this specification and may be configured as shown in Fig. 70. The width of the receiving section 113 substantially corresponds to a width of the supporting portion 31 at a supporting section 31.2. Since the total outer dimension of the supporting portion 31 at a position where a stop portion 31.3 is provided is larger than an inner diameter of the receiving section 113, a sideways or lateral movement of the attachment portion 101 along the supporting frame 27 is prevented. Further configurations are disclosed in the below mentioned aspects.

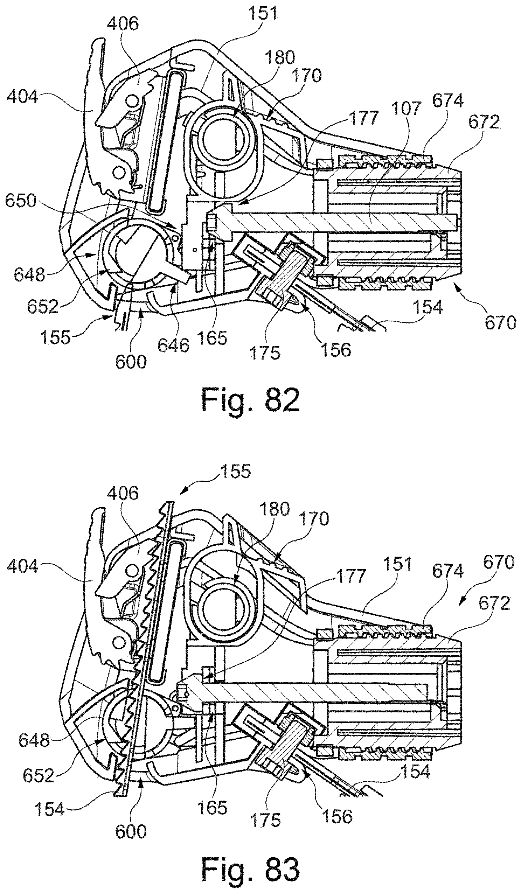

Figs. 101 and 102 show a specific configuration of the fixation strap 154 that can be used as a strap in attachment portions of spacers, for example in a spacer of the before described types and may form part of fastening mechanism. For example, the strap 154 may be fixedly coupled to a housing 151 of a spacer at a fixed end portion 156 thereof and may comprise a free end portion 155 which is configured to be received in a strap receiver 157. The fixation strap 154 comprises an engaging portion 154.7, for example a toothed portion, engageable with the strap receiver 157. An example of a configuration in which the fixed end portion 156 is coupled to the housing 151 of a spacer 100 is for example shown in Fig. 70. The fixed end portion 156 may comprise a coupling portion 154.1 for fixedly attaching the fixation strap 154 on the attachment portion 102 of the spacer 100 as best seen in Figs. 101 and 102. A fixation member 175 such as a screw (see for example Figs. 82 to 84) may be used for attaching the coupling portion 154.1 the housing 151. The fixation member 175 is received in a receiving section 154.5 of the coupling portion 154.1.

The coupling portion 154.1 comprises an energy absorbing configuration which is configured to partially absorb a force transferred from the fixation strap 154 on the inserted fixation member 175 when a predetermined pulling force acting on the fixation strap 154 is exceeded. This may be the case during a crash in which a bike to which the spacer 100 is coupled applies a high force on the strap which is transferred onto the fixation member 175.

In the present configuration, the strap 154 comprises a multi-layer construction with a base portion 154.1 and a covering portion 154.2 at least partially covering the base portion 154.1. The covering portion 154.2 may be molded onto the base portion 154.1. The base portion 154.1 may be made from metal and the coupling portion 154.2 may be made from a plastics material. In general, the base portion 154.1 may comprise a higher rigidity than the covering portion 154.2. The base portion comprises a first opening 154.3 for receiving the fixation member 175. An inner dimension of the first opening 154.3 is larger than an outer dimension of the fixation member 175. In the configuration as shown in Figs. 101 and 102, the first opening 154.3 is a slotted opening that extends in longitudinal direction of the fixation strap 154. The covering portion 154.2 comprises a second opening 154.4. The forward end portion of the first opening 154.3 and the first opening 154.3 overlap each other and commonly define an insertion opening for the fixation member 175. A portion of the covering portion 154.2 extends into the first opening 154.3 so that a material of the covering portion 154.2 is provided in the first opening 154.3 between an inserted fixation member 175 and a longitudinal rear end wall of the slotted first opening 154.3. Such a material may form a resistance portion 154.8 for providing a resistance against a movement of the inserted fixation member 175 relative to the first opening or in other words against a movement of the strap relative to the fixation member. The fixation member 175 may be supported on the housing 151 such that no clamping force or substantially no clamping force is applied on the coupling portion 154.1. This ensures that a pulling force acting on the strap 154 is transferred entirely through the inserted fixation member 175 to the housing and not via friction between the strap and the housing. For example, the housing 151 may comprise a support section for a head of the fixation member 175 such that the head rests on the housing 151 and not on the strap 154 when the fixation member is tightened. In general, the covering portion of the configuration as shown in the drawings may be configured such that the inserted fixation member 175 tears up the second opening 154.4 in the covering portion 154.2 and moves along the slotted first opening while plastically deforming material of the covering portion 154.2. Further configurations of the fixation strap are disclosed in the below mentioned aspects.

In conclusion a, it is pointed out that the terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing summary and detailed description will provide those skilled in the art with a convenient roadmap for implementing an exemplary embodiment, it being understood that various changes may be made in the function and arrangement of elements described in an exemplary embodiment without departing from the scope as set forth in the appended claims and their legal equivalents.

### ASPECTS

In the following, different configurations and/or different aspects are represented in itemized structure in addition to the subject matter of claim 1 and the dependent claims and in addition to the explanations and configurations given in the introductory portion of this specification. It is to be noted that the below specific feature combinations are not intended to limit the disclosure to such specific feature combinations. By contrast, the below feature combinations merely provide different examples having improved capabilities. Features and embodiments as defined in the itemized configurations may be combined with other features and embodiments of other itemized configurations, as well as with one or more of the features of configurations described in the summary section and the detailed description section.

Aspect 1: Load carrier (1), for example configured to support a two-wheeler, mountable on a trailer coupling (5) of a vehicle, said load carrier (1) comprising
a load carrier coupling (14),
a carrying frame (20) extending in a first direction and configured to support a load to be transported, for example a bike, and
an asymmetric supporting frame (27) extending from said carrying frame (20) in a second direction cross to said first direction, for example perpendicular to said first direction, and configured to provide a side support for said load to be transported,
wherein said supporting frame (27) is configured to provide on a load side of said supporting frame (27) an enlarged loading space for a load to be transported and to provide on an opposite side of said supporting frame (27), for example on a load carrier coupling side, sufficient space for a user to access said load carrier coupling (14).

Aspect 2: Load carrier (1) according to aspect 1, wherein said supporting frame (27) comprises a bulging portion (42) bulged in said first direction, wherein said bulging portion (42) provides an accommodating space (43) configured to receive a portion of the load to be transported, for example a portion of a crank arrangement of a bike.

Aspect 3: Load carrier (1) according to aspect 2, wherein said bulging portion (42) is provided in a lower end portion of said supporting frame (27), for example such that a portion of said supporting frame (27) is offset with respect to an adjacent portion in said first direction, for example towards a load carrier coupling side end of said load carrier (1).

Aspect 4: Load carrier (1) according to item 1, wherein said supporting frame (27) is configured as an upright frame extending form said carrying frame (20) in upward direction, for example perpendicular to said carrying frame (20).

Aspect 5: Load carrier (1) according to one of the preceding aspects, wherein said supporting frame (27) comprises a base portion (31), for example configured to support spacers or bike arms, and two legs (32, 33) extending from said base portion (31), for example extending from opposite ends of said base portion (31), wherein said legs (32, 33) are coupled to or integrally formed with said base portion (31) at a first end portion thereof and coupled to said carrying frame (20) at a second end portion, for example by means of connecting portions (28, 29), wherein said base portion (31) and said legs (32, 33) may form a U-shape, wherein said base portion (31) may comprise a straight section, for example extending in cross direction of the load carrier (1).

Aspect 6: Load carrier (1) according to aspect 5,
wherein each leg (32, 33) comprises a first leg portion (34, 35) and a second leg portion (36, 37), wherein each first leg portion (34, 35) may be a lower portion of said leg (32, 33) and each second leg portion (36, 37) may be an upper portion of said leg (32, 33) and/or wherein said first leg portion may comprise a free end portion of said leg (32, 33) and/or may be coupled to the carrying frame (20),
wherein said first leg portion (34) of a first leg (32) of said legs (32, 33) may be at least partially offset to said first leg portion (35) of a second leg (33) of said legs (32, 33) in a direction cross to a main extension direction of said supporting frame (27) and/or in a longitudinal direction of said load carrier (1).

Aspect 7: Load carrier (1) according to aspect 6, wherein one first leg portion (34), said second leg portions (36, 37) and/or said base portion (31) extend in a first plane (P1) and wherein one first leg portion (35) may at least partially extend outside of said first plane (P1), for example at least partially in a second plane (P2) extending in parallel with said first plane (P1).

Aspect 8: Load carrier (1) according to aspect 6 or aspect 7, wherein said first leg portions (33, 34) and/or said second leg portions (35, 36) may comprise straight sections (38, 39, 40, 41), wherein said straight sections may extend in parallel with each other.

Aspect 9: Load carrier (1) according to one of the preceding aspects, wherein said supporting frame (27) is coupled to said carrying frame (20) by means of connecting portions (28, 29) coupled to said carrying frame (20), for example to a rear end of said carrying frame (20), wherein said connecting portions (28, 29) are configured to support said supporting frame (27) at different longitudinal positions of said load carrier (1) and/or are arranged offset to each other in longitudinal direction of said load carrier (1), and/or
wherein said carrying frame (20) comprises different attachment portions offset to each other in longitudinal direction of said load carrier (1), wherein said carrying frame (20) may comprise two longitudinally extending supporting members having different lengths,
wherein first end portions of said supporting members are provided at the same longitudinal position and the opposite ends are provided at different longitudinal positions such that they terminate offset to each other in longitudinal direction,
or wherein said carrying frame (20) may comprise a single supporting member, for example a single beam, having formed thereon said attachment portions in a longitudinally offset manner, wherein one attachment portion may be provided on an end of the single supporting member and the other attachment portion may be provided in a cut-out formed in said single supporting member.

Aspect 10: Load carrier (1) according to one of aspects 5 to 9, wherein one leg (32) is coupled to said carrying frame (20) at a first longitudinal position located between said carrying frame (20) and said load carrier coupling (14) or an operating region, in particular a movement region of an operating member (15), of said load carrier coupling (14) and said other leg (33) is coupled to said carrying frame at a second longitudinal position located in cross direction besides said load carrier coupling (14) or said operating region of said load carrier coupling (14).

Aspect 11: Add-on wheel tray (50) for a rear mounted carrier (1), said add-on wheel tray being configured to be mounted on said carrier (1) at a single designated position on said carrier (1) and being configured to increase the predefined maximum number of two-wheelers supportable on said carrier (1), said add-on wheel tray comprising
a supporting structure (60) configured to support wheels of a two-wheeler, for example a bike,
a coupling structure (80) configured to securely connect said supporting structure (60) with said bike carrier (1),
wherein said supporting structure (60) is transferable between a use configuration in which said supporting structure (60) has an enlarged dimension and a stowage configuration in which said supporting structure (60) has a reduced dimension.

Aspect 12: Wheel tray (50) according to aspect 11,
wherein said supporting structure (60) comprises a first supporting portion (61) and a second supporting portion (62) each configured to support a wheel of a bike,
wherein in said use configuration a distance between said first supporting portion (61) and said second supporting portion (62) is larger than in said stowage configuration.

Aspect 13: Wheel tray (50) according to aspect 12,
wherein said supporting structure (60) is foldable, for example in two parts or in three parts,
   and/or
wherein said first supporting portion (61) and said second supporting portion (62) are hingedly coupled, for example directly to each other or indirectly to each other via an intermediate portion (63),
   and/or
wherein said first supporting portion (61) and said second supporting portion (62) are configured to be foldable into a V-shape,
   and/or
wherein said first supporting portion (61) and said second supporting portion (62) are arranged pivotable about a pivot axis (S1), wherein said pivot axis (S1) may be offset from said first supporting portion (61) and said second supporting portion (62), for example offset in upward direction when said first supporting portion (61) and said second supporting portion (62) are in an unfolded configuration,
   and/or
wherein said supporting structure (60) comprises two or more folding sections, and/or
wherein said supporting structure (60) comprises a stop configuration defining a respective position of said first supporting portion (61) and said second supporting portion (62) in said use configuration,
wherein said stop configuration may limit a movement of said first supporting portion (61) and said second supporting portion (62) in an application direction of a force exerted on the first supporting portion (61) or the second supporting portion (62) by a wheel of a supported bike,
   and/or
wherein said supporting structure (60) comprises a fixation portion for holding said first supporting portion (61) and said second supporting portion (62) together in said stowage configuration,
   and/or
wherein said supporting structure (60) is configured foldable together with foldable wheel trays of said bike carrier (1) when said add-on wheel tray (50) is coupled to said bike carrier (1).

Aspect 14: Wheel tray (50) according to aspect 12 or aspect 13,
wherein said supporting structure (60) is telescopable,
   and/or
wherein at least one of said first supporting portion (61) and said second supporting portion (62) is translatory movable with respect to the other,
   and/or
wherein at least one of said first supporting portion (61) and said second supporting portion (62) is movably supported on an elongate guiding member (64).

Aspect 15: Wheel tray (50) according to one of aspects 11 to 14,
wherein said coupling structure (80) comprises at least one fixation arm (81, 82), for example two fixation arms,
wherein at least one or each fixation arm (81, 82) may comprise a tubular profile, and/or
wherein at least one or each fixation arm (81, 82) may comprise a coupling section (83, 84) and a supporting section (85, 86),
wherein said supporting section (85, 86) may be coupled to said supporting structure (60), and/or
wherein said coupling section (83, 84) may be configured detachably mountable to said bike carrier (1), preferably from vertically above when said bike carrier is mounted on a vehicle, and/or
wherein said coupling section (83, 84) may be configured for an engagement with said bike carrier (1), and/or
wherein said coupling section (83, 84) may be configured for a snap-in engagement, and/or
wherein said coupling section (83, 84) may be configured to be interlocked with an attachment portion (25, 26) of a bike carrier (1), for example directly with the attachment portion (25, 26) by direct engagement or indirectly via an adapter (30) mounted on the attachment portion (25, 26), and/or
wherein said coupling section (83, 84) may be formed as a first coupling partner of a plug and socket type coupling arrangement, and/or
wherein said coupling section (83, 84) may be configured to automatically engage with said attachment portion (25, 26) on said bike carrier (1) upon inserting said coupling section (83, 84) in said attachment portion (25, 26), and/or
wherein said coupling section (83, 84) may comprise an engaging portion (88), for example biased engaging portions, and/or
wherein said coupling section (83, 84) may be configured as a male part configured to be received in a female part, for example said adapter (30), or said coupling section (83, 84) may be configured as a female part to be slipped on said adapter (30) or to receive a portion of said adapter (30) therein, and/or
wherein said engaging portion (88) may be arranged in said coupling section (83, 84) such that it is movable between a protruding position in which it protrudes from an opening (89) in said coupling section (83, 84) and may engage with a recess (44) formed in said adapter (30) and a retracted position in which it does not protrude from said opening (89), and/or
wherein at least one of said first supporting portion (61) and said second supporting portion (62) comprises a support (61.1, 62.1) configured to support said supporting portion (61, 62) on an outermost wheel tray (19) of said bike carrier (1).

Aspect 16: Wheel tray (50) according to aspect 15, further comprising a release mechanism (90) for releasing an engagement of said coupling section (83, 84) with said attachment portion (25, 26) and/or said adapter (30),
wherein said release mechanism (90) comprises an operating member (91) operatively coupled to said coupling section (83, 84), for example operatively coupled with an engaging portion (88), wherein said operating member (91) is movable between a locking position and an unlocking position,
wherein said operating member (91) may be arranged on said fixation arm (81, 82), and/or
wherein said operating member (91) may be a lever, and/or
wherein said operating member (91) is provided on said fixation arm (81, 82) and configured to allow operation of said operating member (91) and gripping said fixation arm (81, 82) with a single hand, wherein said operating member (91) may be configured and arranged on said fixation arm (81, 82) such that it is operable by an index finger of a user's hand, for example like a pistol type trigger.

Aspect 17: Wheel tray (50) according to aspect 15 or aspect 16,
wherein at least one fixation arm (81, 82) may be transferable between a deployed configuration in which said fixation arm (81, 82) is positioned for coupling with said bike carrier (1) and a retracted configuration in which said fixation arm (81, 82) is folded towards said supporting structure (60),
wherein said at least one fixation arm (81, 82) may be pivotable about a pivot axis (F1, F2),
wherein said pivot axis (F1, F2) may extend in parallel with a pivot axis (S1, S2, S3) of said supporting structure (60) or may extend at an angle with respect to said pivot axis (S1, S2, S3) of said supporting structure (60) or may extend perpendicular to or at an angle with respect to a main extension direction (M) of said supporting structure (60),
wherein said fixation arm (81, 82) may comprise a tubular profile.

Aspect 18: Wheel tray (50) according to aspect 15, aspect 16 or aspect 17,
wherein said supporting section (85, 86) may be coupled to or may form part of a pivot of said supporting structure (60),
wherein at least a portion of said supporting structure (60), for example a first supporting portion (61) and a second supporting portion (62) each configured to support a wheel of a bike, may be rotatable about said supporting section (85, 86),
wherein said supporting section (85, 86) may form a hinge pin for said supporting portion (61, 62),
wherein two of said fixation arms (81, 82) may be provided, wherein free end portions of supporting sections (85, 86) of said fixation arms (81, 82) may be coupled to each other by means of a fixation arm coupling portion (87), for example such that said fixation arms (81, 82) form part of an integral supporting unit, wherein said integral supporting unit may be configured with the fixation arm coupling portion (87) forming a base and said fixation arms (81, 82) forming legs protruding from said base, for example from opposite end portions or opposite ends of said base, wherein said supporting sections (85, 86) may extend in a first direction, wherein said supporting sections (85, 86) may extend in parallel with each other, wherein said coupling sections (83, 84) may extend in a second direction, and/or wherein said fixation arm coupling portion (87) may extend in a third direction and/or may be configured straight, wherein said first direction and said second direction may extend perpendicular with respect to each other, and/or wherein said first direction and said third direction may extend perpendicular to each other, and/or wherein said second direction and said third direction extend skew to each other.

Aspect 19: Wheel tray kit comprising,
a wheel tray (50) according to one of aspects 11 to 18, and
an adapter (30) configured to be fixedly attached to an attachment portion (25, 26) on said bike carrier (1) and configured to detachably receive said coupling structure (80).

Aspect 20: Bike carrier (1) comprising
a base frame (12) coupled to a load carrier coupling (13),
at least one wheel tray (14, 15) supported on said base frame (12), and
an attachment portion (25, 26) for receiving an add-on wheel tray, for example an add-on wheel tray (50) according to one of aspects 11 to 18,
wherein said attachment portion (10, 11) is configured to directly receive a fixation arm (81, 82) and to be engageable with said fixation arm (81, 82), or wherein said attachment portion (25, 26) is configured to receive an adapter (30) acting as an interface between said attachment portion (25, 26) and said fixation arm (81, 82), and/or
wherein said attachment portion (25, 26) is provided on said base frame (12) between said base frame (12) and a license plate holder (16).

Aspect 21: Spacer (100) for a load carrier (1) mountable on a vehicle, comprising
a carrier-side fastening unit (110) configured to be put on and to be locked with a supporting portion (31) of said load carrier (1),
wherein said fastening unit (110) is configured to accommodate said supporting portion (31) and is configured transferable between a locking configuration in which said fastening unit (110) is held, for example non-detachably fixed, on said supporting portion (31) and an unlocking configuration in which said fastening unit (110) is mountable to and detachable from said supporting portion (31),
wherein said fastening unit (110) is configured transferable into said locking configuration by pushing said fastening unit (110) onto said supporting portion (31).

Aspect 22: Spacer (100) for a load carrier (1) mountable on a vehicle, comprising
a carrier-side fastening unit (110) configured to be put on and to be locked with a supporting portion (31) of said load carrier (1),
a load side attachment unit (150) configured to be fixed to a load portion, for example to a frame portion of a bike,
a connecting structure (103) configured to couple said carrier-side fastening unit (110) and said load side attachment unit (150) to each other,
wherein said fastening unit (110) is configured to accommodate said supporting portion (31) and is configured transferable between a locking configuration in which said fastening unit (110) is held, for example non-detachably fixed, on said supporting portion (31) and an unlocking configuration in which said fastening unit (110) is mountable to and detachable from said supporting portion (31),
wherein said carrier-side fastening unit (110) is configured transferable into said locking configuration by manually applying a force on said load side attachment unit (150) towards said carrier-side fastening unit (110) and/or transferable into said unlocking configuration by applying a force on said load side attachment unit (150) in a direction away from said carrier side fastening unit (110).

Aspect 23: Spacer (100) for a load carrier (1) mountable on a vehicle, comprising
a carrier-side fastening unit (110) configured to be put on and to be locked with a supporting portion (31) of said load carrier (1),
a load side attachment unit (150) configured to be fixed to a load portion, for example to a frame portion of a bike,
a connecting structure (103) configured to couple said carrier-side fastening unit (110) and said load side attachment unit (150) to each other,
wherein said fastening unit (110) is configured to accommodate said supporting portion (31) and is configured transferable between a locking configuration in which said fastening unit (110) is held, for example non-detachably fixed, on said supporting portion (31) and an unlocking configuration in which said fastening unit (110) is mountable to and detachable from said supporting portion (31),
wherein said carrier-side fastening unit (110) is configured transferable into said locking configuration by manually moving said load side attachment unit (150) relative to and towards said supporting portion (31) received in said carrier-side fastening unit (110) and/or transferable into said unlocking configuration by manually moving said load side attachment unit (150) in a direction away from and relative to said supporting portion (31) in said carrier side fastening unit (110).

Aspect 24: Spacer (100) for a load carrier (1) mountable on a vehicle, comprising
a carrier-side fastening unit (110) configured to be put on and to be locked with a supporting portion (31) of said load carrier (1),
wherein said fastening unit (110) comprises an arrangement for positively locking said supporting portion (31) between at least two locking members (111, 112),
wherein said first locking member (111) comprises a first receiving section (113) for at least partially accommodating said supporting portion (31) and wherein said second locking member (112) comprises a second receiving section (112.2) for at least partially accommodating said supporting portion (31),
wherein said first receiving section (113) is configured to be at least partially retractable into said second receiving section (112.2) such that said supporting portion (31) is accommodatable between said first and second receiving sections such that a circumferential portion of said supporting portion (31) is circumferentially enclosed by both of said first and second receiving sections.

Aspect 25: Spacer (100) according to aspect 24, wherein said first receiving section (113) is U-shaped and/or wherein said second receiving section is U-shaped.

Aspect 26: Spacer (100) according to aspect 25, wherein said first receiving section (113) and said second receiving section (112.2) are oriented in different directions, for example in directions extending at angle of 90 degrees with respect to each other.

Aspect 27: Spacer (100) for a load carrier (1) mountable on a vehicle, comprising
a carrier-side fastening unit (110) configured to be put on and to be locked with a supporting portion (31) of said load carrier (1),
wherein said fastening unit (110) is configured to accommodate said supporting portion (31) and is configured transferable between a locking configuration in which said fastening unit (110) is non-detachably fixed on said supporting portion (31) and an unlocking configuration in which said fastening unit (110) is mountable to and detachable from said supporting portion (31),
a locking mechanism (160), for example embodied as a snap-in locking mechanism, configured to lock, for example to automatically lock, said fastening unit (110) in said locking configuration when said carrier-side fastening unit (110) is transferred from said unlocking configuration into said locking configuration.

Aspect 28: Spacer (100) according to aspect 27, wherein said locking mechanism (160) comprises a blocking portion (161) movable between a locking position and an unlocking position, wherein in said locking position said blocking portion directly or indirectly blocks any movement for transferring said fastening unit (110) into said unlocking configuration, and wherein in said unlocking position said blocking portion allows a movement for transferring said fastening unit (110) into said unlocking configuration.

Aspect 29: Spacer (100) according to aspect 28, wherein said carrier-side fastening unit (110) comprises a locking member (111) movable between a locking position in which it positively locks said supporting portion (31) and an unlocking position, wherein said fastening unit (110) is in said locking configuration when said locking member (111) is in said locking position.

Aspect 30: Spacer (100) according to aspect 29, wherein said spacer further comprises a load side attachment unit (150) configured to be attached to a portion of a load, for example to a portion of a bike, wherein said load side attachment unit (150) is coupled to said carrier side fastening unit (110) by means of a connecting structure (103), for example by a hollow profile (104), wherein said snap-in locking mechanism (160) is provided on said load side attachment unit (150).

Aspect 31: Spacer (100) according to aspect 30, further comprising a force transfer member (106), for example a rod, extending between said load side attachment unit (150) and said carrier-side fastening unit (110), wherein said force transfer member (106) is coupled to said carrier side fastening unit (110) to be movable between a first position corresponding to locking configuration of said carrier-side fastening unit (110) and a second position corresponding to an unlocking configuration of said carrier-side fastening unit (110), wherein said snap-in locking mechanism (160) is configured to block and release a movement of said force transfer member (106).

Aspect 32: Spacer (100) according to aspect 31, further comprising an adjusting mechanism (670) for adjusting a longitudinal position of said snap-in locking mechanism (160) relative to said force transfer member (106) and/or relative to said connecting structure (103) and/or relative to said carrier-side fastening unit (110) and/or relative to said load side attachment unit (150).

Aspect 33: Spacer (100) for a load carrier (1) mountable on a vehicle, comprising
a carrier-side fastening unit (110) configured to be put on and to be locked with a supporting portion (31) of said load carrier (1), said carrier side fastening unit (110) comprising a locking member (111) movable between a locking position in which it positively locks said supporting portion (31) and an unlocking position,
a load side attachment unit (150) configured to be fixed to a load portion, for example to a frame portion of a bike,
a connecting structure (103) configured to couple said carrier-side fastening unit (110) and said load side attachment unit (150) to each other,
a locking mechanism (160) for blocking a movement of the locking member (111) out of the locking position, wherein a position of said locking mechanism relative to said locking member (111) is adjustable by an adjusting mechanism (670).

Aspect 33: Spacer (100) according to aspect 33, wherein said load side attachment unit (150) is coupled to said connecting structure (103) by means of an adjusting mechanism (670) for longitudinally adjusting a position of said load side attachment unit (150) relative to said connecting structure (103) and/or relative to said carrier-side fastening unit (110).

Aspect 34: Spacer (100) for a load carrier (1) mountable on a vehicle, comprising
a carrier-side fastening unit (110) configured to be put on and to be locked with a supporting portion (31) of said load carrier (1),
a load side attachment unit (150) configured to be fixed to a load portion, for example to a frame portion of a bike,
a connecting structure (103) configured to couple said carrier-side fastening unit (110) and said load side attachment unit (150) to each other,
wherein said load side attachment unit (150) is coupled to said connecting structure (103) by means of an adjusting mechanism (670) for longitudinally adjusting a position of said load side attachment unit (150) relative to said connecting structure (103) and/or relative to said carrier-side fastening unit (110).

Aspect 35: Spacer (100) according to aspect 33 or aspect 34, wherein said load side attachment unit (150) comprises a locking mechanism (160) for blocking a movement of a locking member (111) arranged on said carrier-side fastening unit (110).

Aspect 36: Spacer (100) according to one of aspects 21 to 35,
wherein said fastening unit (110) comprises an arrangement for positively locking said supporting portion (31) between at least two locking members (111, 112),
wherein a first locking member (111) of said locking members (111, 112) is arranged movable in a first direction (D1) with respect to a second locking member (112), for example along a portion of said second locking member (112), of said at least two locking members (111, 112) in order to positively lock said supporting portion (31) in said fastening unit (110) when said fastening unit (110) is in said locking configuration.

Aspect 37: Spacer (100) according to aspect 36,
wherein said first locking member (111) comprises a first receiving section (113), for example a U-shaped receiving section, for at least partially receiving said supporting portion (31), and/or
wherein at least one of said locking members (111, 112) forms a clamping portion configured to exert a clamping force on said supporting portion (11) when said fastening unit (110) is in said locking configuration, and/or
wherein said receiving section (113) may be configured such that it can be put on said supporting portion (31) by moving said fastening unit (110) in a second direction (D2), wherein said second direction extends cross to said first direction in which said first locking member (111) is movable, and/or
wherein said second locking member (112) comprises a second receiving section (112.2), wherein said second receiving section (112.2) may be U-shaped, wherein said first receiving section (113) and said second receiving section (112.2) may each be U-shaped and wherein said first receiving section (113) may be turned with respect to the second receiving section (112.2) by 90 degrees, wherein said first receiving section (113) is configured retractable into said second receiving section (112.2), and/or
wherein said first locking member (111) is guided in said second locking member (112) such that it is translatory movable in said first direction (D1) but non-rotatable about an axis which extends parallel to said first direction (D1), wherein said second locking member may be configured to be coupled to a connecting structure (103), for example a hollow profile (104), connecting said fastening unit (110) with a load side attachment unit (150) configured to be fixed to a load portion, for example to a frame portion of a bike, wherein said second locking member (112) may be configured to guide said first locking member (111) outside of said connecting structure (103), wherein at least a guided portion of said first locking member (111) may comprise a non-round outer circumference guided in a guiding portion of said second locking member (112) defining a non-round receiving section, and/or
wherein said first locking member (111) comprises a hook-like configuration, in particular a hook-like free end portion.

Aspect 38: Spacer (100) according to one of aspects 21 to 37, wherein said fastening unit (110) is configured to at least partially automatically transfer into said locking configuration when said supporting portion (11) is received in said fastening unit (110).

Aspect 39: Spacer (100) according to one of aspects 36 to 38, further comprising a locking unit (160) for blocking a movement of said first locking member (111) in at least a third direction (D3) opposite to said first direction (D1).

Aspect 40: Spacer (100) according to aspect 39,
wherein said locking unit (160) comprises a blocking portion (161) movable between a locking position in which it directly or indirectly blocks said movement of said first locking member (111) in said third direction (D3) and an unlocking position in which said blocking portion (161) allows said movement of said first locking member (111) in said third direction (D3),
wherein said blocking portion may be a portion of an inserted strap (154),
and/or wherein a fixed end portion (156) of said strap may be operatively coupled to said first locking member (111) such that said first locking member (111) is pulled to remain in said locking position when said strap is tightened.

Aspect 41: Spacer (100) according to aspect 40,
wherein said blocking portion (161) is biased towards said locking position by means of a biasing member (162), for example a spring, such that said blocking portion (161) is able to automatically engage and block a movement of said first locking member (111) when said first locking member (111) has been moved by a predetermined distance towards a positive locking position.

Aspect 42: Spacer (100) according to one of aspects 40 and 41, further comprising an operating portion (170) for at least returning said blocking portion (161) into said unlocking position,
wherein said operating portion (170) may comprise a push member (171) or a pull member (172) or a rotational member operatively coupled to said blocking portion (161) such that upon operating said operating portion (170) said blocking portion (161) is moved towards said unlocking position.

Aspect 43: Spacer (100) according to one of aspects 40 to 42,
wherein said spacer (100) may comprise a force transfer member (106, 115) coupled to or integrally formed with said movable locking member (111) and said blocking portion (161) may be configured engageable with said force transfer member (106, 115),
wherein said force transfer member (106, 115) may comprise a rod (116), and/or
wherein said force transfer member (106, 115) may comprise an engaging section (117) providing a contact surface (118) contactable by said blocking portion (161), and/or
wherein said force transfer member (106, 115) may comprise a tapered end portion (119) tapering towards the end of said force transfer portion (115).

Aspect 44: Spacer (100) according to aspect 43,
wherein said blocking portion (161) is translatory movably arranged in said locking unit (160), preferably shiftably arranged in said locking unit (160), and/or
wherein said blocking portion (161) is movable radially towards and away from said force transfer member (106, 115), and/or
wherein said blocking portion (161) is configured to engage behind a protrusion or widened section provided on said force transfer portion (115), and/or
wherein said blocking portion (161) is configured to engage into a recess formed in said force transfer portion (115), and/or
wherein said blocking portion (161) comprises an opening (165) for receiving an engaging section (117) of said force transfer member (106, 115), wherein said opening (165) comprises a narrow section (166) and a wide section (167), wherein said wide section (167) comprises a dimension allowing said engaging section (117) to pass through said opening (165) and said narrow section (166) comprises a dimension which is smaller than an outer dimension of said engaging section (117).

Aspect 45: Spacer (100) according to aspect 43,
wherein said blocking portion (161) is pivotably movably arranged in said locking unit (160), and/or
wherein said blocking portion (161) comprises a pivot arm (163) pivotably supported at a first end portion thereof about a pivot axis and comprising a contact portion (164) at a second end portion thereof.

Aspect 46: Spacer (100) according to one of aspects 35 to 45, further comprising a load side attachment unit (150) configured to be fixed to a load portion, for example to a frame portion of a bike.

Aspect 47: Spacer (100) according to aspect 36, wherein said first locking member (111) is arranged pivotably movable with respect to the second locking member (112), wherein said first locking member (111) may be biased in a direction away from said second locking member (112), wherein an urging member (312) may be arranged between said first locking member (111) and said second locking member (112).

Aspect 48: Spacer (200) for coupling two bikes to each other while holding them at a predetermined distance from each other, said spacer (200) comprising
two attachment portions (210, 220) each comprising a fastening mechanism (211, 221) transferable between a closed configuration in which the fastening mechanism (211, 221) is capable of firmly attaching to a bike and an opened configuration in which the fastening mechanism (211, 221) can be put on and detached from a respective bike,
wherein said attachment portions (210, 220) may be configured to be independently rotatable with respect to each other, for example about a common rotation axis,
and/or wherein at least one attachment portion (210, 220) may be configured for contacting said bike at a contact portion (152) provided on an outer circumference of said attachment portion (210, 220),
and/or further comprising a locking mechanism (230) configured to lock said fastening mechanisms (211, 221) in said closed configuration.

Aspect 49: Spacer (200) according to aspect 48, wherein said locking mechanism (230) comprises an operating unit (231), for example comprising a locking cylinder of a key operable lock, operable by a user and configured such that said user can lock said fastening mechanisms (211, 221) in said closed configuration by performing a single operating step.

Aspect 50: Spacer (200) according to one of aspects 48 and 49, wherein said locking mechanism (230) is configured to simultaneously lock said fastening mechanisms (211, 221) in said closed configuration.

Aspect 51: Spacer (200) according to one of aspects 48 to 50, wherein at least one fastening mechanism (211, 221), for example each fastening mechanism, comprises a strap (212, 222) and a strap receiver (213, 223), wherein each strap (212, 222) comprises a free end portion (214, 224) insertable into said strap receiver (213, 223) for forming a fixation loop, and
a locking mechanism (230) configured to block a detachment of said free end portions (214, 224) from said strap receivers (213, 223) after said free end portions (214, 224) have been received in said strap receivers (213, 223).

Aspect 52: Spacer (200) according to aspect 51, wherein said locking mechanism (230) comprises an operating unit (231) operable by a user and configured such that said user can block said detachment of said free end portions (214, 224) by performing a single operating step.

Aspect 53: Spacer (200) according to one of aspects 48 to 52,
wherein said operating unit (231) comprises a movable operating member (232) configured to be moved by said user,
wherein said movable operating member (232) may be translatory and/or rotatably movable, and/or
wherein said movable operating member (232) can comprise a locking cylinder (232.1), and/or
wherein said movable operating member (232) can comprise a translatory movable portion (232.2, 232.3), for example a sleeve portion movable along a main extension direction (M) of said spacer (200), and/or
wherein said movable operating member (232) can comprise a rotatably movable portion (232.4, 232.5).

Aspect 54: Spacer (200) according to one of aspects 51 to 53, wherein said locking mechanism (230) is configured to simultaneously lock each of said free end portions (214, 224).

Aspect 55: Spacer (200) according to one of aspects 48 to 54, wherein said locking mechanism (230) comprises a first locking portion (215) associated with a first attachment portion (210) of said two attachment portions (210, 220) and a second locking portion (225) associated with a second attachment portion (220) of said two attachment portions (210, 220), wherein said movable operating member (232) is operatively coupled with said first locking portion (215) and said second locking portion (225) to transfer each of said first locking portion (215) and said second locking portion (225) between an unlocking configuration and a locking configuration, wherein said operating member (232) may be operatively coupled with said first locking portion (215) by means of a first force transfer portion (217) and with said second locking portion (225) by means of a second force transfer portion (227), wherein said force transfer portions (217, 227) may be provided on separate force transfer members, for example rods or other elongate members, or may be provided on a single force transfer member, wherein said force transfer portions (217, 227) may be configured to move translatory and/or along their respective longitudinal axes.

Aspect 56: Spacer (200) according to aspect 55, wherein said first locking portion (215) comprises a first engaging member (215.1, 215.3) configured to engage with a first strap (212) of said straps (212, 222) and wherein said second locking portion (225) comprises a second engaging member (225.1, 225.3) configured to engage with a second strap (222) of said straps (212, 222),
wherein said first engaging member (215.1) and/or said second engaging member (225.1) is/are rotatable about a rotation axis (R1, R2), wherein said rotation axis may extend perpendicular to said main extension direction (M) of said spacer (200).

Aspect 57: Spacer (200) according to aspect 55 or aspect 56, wherein said first locking portion (215) comprises a first engaging member (215.2) configured to engage with a first strap (212) of said straps (212, 222) and wherein said second locking portion (225) comprises a second engaging member (225.2) configured to engage with a second strap (222) of said straps (212, 222),
wherein said first engaging member (215.2) and/or said second engaging member (225.2) is/are translatory movable.

Aspect 58: Spacer (200) according to aspect 56 or aspect 57, wherein said first engaging member (215.1) and/or said second engaging member (225.1) comprise a through opening (226) for receiving a respective strap (212, 222) therein and is/are configured to engage with an inserted strap extending through said through opening (226), and/or wherein each engaging member may comprise an engaging portion, for example one or more teeth, for engaging with teeth on said straps, and/or wherein each engaging portion may be biased towards a disengagement position, and/or wherein said operating member (232) may be operatively coupled to each engaging member such that each engaging member is moved towards and/or away from said disengagement position upon operating said operating member.

Aspect 59: Spacer (200) according to one of aspects 51 to 58, wherein said two attachment portions (210, 220) are configured such that an insertion of a free end portion (214) of a first strap (212) into a first attachment portion (210) grants access into a second attachment portion (220) for a free end portion (224) of the second strap (222).

Aspect 60: Spacer according to one of aspects 48 to 59, wherein at least one fastening mechanism (211, 221) comprises a gripping unit, for example comprising a claw, for gripping a portion of a bike, wherein one fastening mechanism (211, 221) comprises a gripping unit with a claw having one or two jaws and the other fastening mechanism comprises a strap and a strap receiver, or wherein both fastening mechanisms (211, 221) comprise said gripping unit.

Aspect 61: Spacer (200) according to one of aspects 51 to 59, wherein each strap (214, 224) comprises a fixed end portion which is fixed to said attachment portion (210, 220), wherein said fixed end portion may be provided between a bike contact portion of said attachment portion (210, 220) and a strap receiver (157) and/or between said bike contact portion and a center of said spacer and/or wherein a strap path in each of said attachment portions (210, 220) may be configured such that free end portions (214, 224) of said straps are closer to each other than said fixed end portions when said free end portions (214, 224) have been passed through said strap receiver,
and/or
wherein said strap paths in said attachment portions (210, 220) are configured such that insertion openings into said strap paths are provided in opposite longitudinal end faces of said spacer (200) and exit openings of said strap paths are provided closer to the center of said spacer (200), for example on a side on which bike contact portions are provided,
   and/or
wherein said spacer is configured to provide a side support for a bike portion, wherein said side support may be provided by a supporting portion which extends along the longitudinal direction of said spacer and faces in a direction cross to said longitudinal direction, or wherein said spacer is configured to provide an end support for a bike portion, wherein said end support may be provided on a longitudinal end of said spacer and may face in longitudinal direction of said spacer.

Aspect 62: Spacer (100) for a load carrier mountable on a vehicle, comprising
a carrier-side fastening unit (110) which is transferable between a closed configuration in which said fastening unit (110) grips around a supporting portion (11) of said load carrier (1), and an opened configuration allowing said fastening unit (110) to be coupled to and decoupled from said supporting portion (31),
a load-side attachment unit (150) configured to be fixed to a load portion (3), for example a frame of a bike, said attachment unit (150) comprising a tightening device (157, 400) for tightening a clamping member (154) of said attachment unit (150),
wherein said attachment unit (150) is transferable between an active configuration in which a fixation of said attachment unit (150) on said load portion (3) is possible and an inactive configuration in which a fixation of said attachment unit (150) on said load portion (3) is not possible,
wherein in said inactive configuration at least an engaging portion (406) of said tightening device (157, 400) which, upon operating said tightening device (400) is normally interacting with said clamping member (154) for applying and/or keeping a tightening force, is moved to a position in which such interaction with said clamping member (154) is not possible, for example either by moving said engaging portion alone or by moving said entire tightening device, or wherein in said inactive configuration, at least a strap passage portion in said attachment unit (150) is moved to a position in which said strap (154) cannot be inserted therein or passed therethrough.

Aspect 63: Spacer (100) according to aspect 62, wherein said tightening device (157, 400) is movable between a blocking position in which an insertion of said clamping member (154) into said tightening device (157, 400) is prevented and a receiving position in which said clamping member (154) may be inserted into said tightening device (157, 400), wherein when said tightening device (157, 400) is in said blocking position, said attachment unit (150) is in said inactive configuration.

Aspect 64: Spacer (100) according to aspect 62 or aspect 63, wherein said tightening device (157, 400) is translatory movable or rotatory movable and/or wherein said tightening device (157, 400) is movable between a retracted position and an extended position, wherein said attachment portion (150) may comprise a housing (151), wherein when in said retracted position, said tightening device (157, 400) may be at least partially retracted into said housing (151), and/or wherein said tightening device (157, 400) may be slidably received in said housing (151) or wherein said tightening device (157, 400) may be held on said housing pivotable about a predefined pivot axis.

Aspect 65: Spacer (100) according to one of aspects 62 to 64, wherein said engaging portion of said tightening device is movable between a blocking position in which said engaging portion blocks an insertion of said clamping member into said tightening device and a release position in which said engaging portion cannot engage with an inserted clamping member, wherein said engaging portion is maintained in said blocking position or said release position when said attachment unit is in said inactive configuration.

Aspect 66: Spacer (100) according to one of aspects 62 to 64, wherein said engaging portion may be rotatably movable and/or may comprise an opening for receiving said clamping member, wherein when said attachment unit is in said inactive configuration, said opening extends in a direction which is not suitable for receiving said clamping member.

Aspect 67: Spacer (100) according to one of aspects 62 to 66, wherein said attachment unit (150) is operatively coupled to said fastening unit (110) such that when said fastening unit (110) is transferred from said closed configuration into said opened configuration, said attachment unit (150) is transferred into said inactive configuration.

Aspect 68: Spacer (100) according to one of aspects 62 to 67, wherein said clamping member (154) comprises a strap, for example a toothed strap, and wherein said tightening device (157, 400) comprises a strap receiver (157), for example a pump buckle mechanism (400), wherein said pump buckle mechanism (400) may comprise a tightening lever (404) and an engaging portion (406), for example a pawl (406), rotatably supported on a base defining a supporting surface.

Aspect 69: Spacer (200) for a load carrier, in particular for coupling two bikes to each other while holding them at a predetermined distance from each other, said spacer (200) comprising
at least one first attachment portion (210) comprising
a first supporting portion (152) for contacting a first coupling portion of a first bike to be fixed to said first attachment portion (210), for example a first frame portion of a first bike, and
a first fastening mechanism for clamping said first coupling portion on said first supporting portion (152),
wherein said first fastening mechanism comprises a first strap (154) and a first strap receiver (242),
wherein said first strap (154) comprises a fixed end portion (156) and a free end portion (155), wherein said free end portion (155) is configured detachably couplable to said first strap receiver (242) for forming a fixation loop extending over said first supporting portion (152) and said coupling portion,
wherein said fastening mechanism is configured to move said first strap receiver (242) and/or said fixed end portion (156) of said first strap (154) relative to said first supporting portion (152) for exerting a clamping force on said first coupling portion via said strap (154).

Aspect 70: Spacer (200) according to aspect 69, wherein said first fastening mechanism comprises a movable support (240), wherein said movable support (240) may be arranged on a rear side of said supporting portion (152), wherein said fixed end portion (156) and/or said first strap receiver (242) may be fixed on or movably coupled to said movable support, wherein said first strap receiver (242) may be configured to detachably receive said free end portion (155), wherein said first strap receiver (242) may comprise a hook portion on which said free end portion (155) is hookable, wherein said movable support (240) is movable towards and away from said supporting portion (152).

Aspect 71: Spacer (200) according to aspect 69 or aspect 70, wherein said spacer (200) further comprises a second attachment portion (220) comprising,
a second supporting portion (152) for contacting a second coupling portion of a second bike to be fixed on said second attachment portion (220), for example a frame portion of a second bike, and
a second fastening mechanism for clamping said second coupling portion on said second supporting portion (152),
wherein said second fastening mechanism comprises a second strap (154) and a second strap receiver (157),
wherein said second strap (154) comprises a fixed end portion (156) and a free end portion (155), wherein said free end portion (155) is configured detachably couplable to said second strap receiver (157) for forming a fixation loop extending over said second supporting portion (152) and said second coupling portion,
wherein said second strap is operatively coupled to said movable support (240), for example to a coupling portion (244) on said movable support (240),
wherein said second strap receiver (157) may be a pump buckle mechanism.

Aspect 72: Spacer (100) for a load carrier (1) mountable on a vehicle, comprising
an attachment portion (102), for example a load side attachment unit (150) configured to be fixed to a load portion, for example to a frame portion of a two-wheeler;
a fastening mechanism with a strap (154) and a strap receiver (157);
a strap passage (602) provided in said attachment portion (102) and accessible via an insertion portion (600) on said attachment portion (102), for example an opening, wherein said strap receiver (157) is arranged on said attachment portion (102) such that said strap (154) is passable into said strap receiver (157) via said strap passage (602);
a strap passage blocking portion (640) configured to move between an unblocking position in which it does not block said strap passage and a blocking position in which it blocks said strap passage,
wherein said strap passage blocking portion (640) is rotatable between said unblocking position and said blocking position.

Aspect 73: Spacer (100) according to aspect 72, wherein said strap passage blocking portion (640) is rotatable about an axis which is perpendicular to a strap passage extension path and/or parallel to a strap passage extension surface, wherein said strap passage blocking portion (640) may be arranged such that said axis is located in said strap passage.

Aspect 74: Spacer (100) according to aspect 73, wherein said strap passage blocking portion (640) comprises a through opening for receiving said strap, wherein said through opening is aligned with said strap passage when said strap passage blocking portion (640) is in said unblocking position and is unaligned with said strap passage when said strap passage blocking portion (640) is in said blocking position.

Aspect 75: Spacer (100) for a load carrier (1) mountable on a vehicle, comprising
an attachment portion (102), for example a load side attachment unit (150) configured to be fixed to a load portion, for example to a frame portion of a two-wheeler;
a fastening mechanism with a strap (154) and a strap receiver (157);
a strap passage (602) provided in said attachment portion (102) and accessible via an insertion portion (600) on said attachment portion (102), for example an opening, wherein said strap receiver (157) is arranged on said attachment portion (102) such that said strap (154) is passable into said strap receiver (157) via said strap passage (602);
a strap locking member (648) configured to move between an unlocking position in which it does not lock an inserted strap in said strap passage and a locking position in which it locks said strap (154) in said strap passage,
wherein said strap locking member (648) is rotatable between said unlocking position and said locking position.

Aspect 76: Spacer (100) according to aspect 75, wherein said strap locking member (648) is rotatable about a rotation axis which is perpendicular to a strap passage extension path and/or parallel to a strap passage extension surface, wherein said strap locking member (648) may be arranged such that said rotation axis is located in said strap passage.

Aspect 77: Spacer (100) according to aspect 76, wherein said strap locking member (648) defines a passageway for receiving said strap (154) and is configured engageable with an inserted strap, wherein said strap locking member (648) is engageable with an inserted strap (154), wherein said strap locking member (648) comprises an engaging portion (652) engageable with said strap, and/or wherein said strap locking member (648) may comprise a sleeve, for example a cylindrical sleeve.

Aspect 78: Spacer (100) according to aspect 77, further comprising a strap locking mechanism comprising an operating member, for example a locking cylinder (180) operable by a key (182), wherein said operating member is operatively coupled to said strap locking member (648) such that a movement of said operating member to a locking position moves said strap locking member (648) to said locking position.

Aspect 79: Spacer (100) according to aspect 78, comprising a further attachment portion (101), for example a carrier side fastening unit (110) for attaching to a supporting portion (31) of a load carrier, wherein said further attachment portion (101) is configured transferable between a locking configuration in which said fastening unit (110) is non-detachably fixed on said supporting portion (31) and an unlocking
configuration in which said fastening unit (110) is mountable to and detachable from said supporting portion (31), and
an attachment portion locking mechanism (160) configured to lock said further attachment portion (101) in said locking configuration,
a release mechanism for unlocking said further attachment portion (101),
wherein said strap locking mechanism is operatively coupled to said release mechanism such that when said operating portion is in a locking position, said release mechanism is blocked, for example by blocking a movement of an operating portion of said release mechanism, for example a push member or a pull member.

Aspect 80: Spacer (100) comprising
a carrier side attachment unit (110) for attaching said spacer (100) to a load carrier (1), said carrier side attachment unit (110) being transferable between an opened configuration and a closed configuration,
a load side attachment unit (150) with a strap (154) and a strap receiver (157),
wherein said strap receiver (157) is movably held relative to a housing (151) of said load side attachment unit (150) and operatively coupled with the carrier side attachment unit (110) such that said carrier side attachment unit (110) may be transferred between the opened configuration and the closed configuration by moving said strap receiver (157) relative to said housing (151).

Aspect 81: Load carrier (1), for example configured to support a two-wheeler, mountable on a vehicle, said load carrier (1) comprising
a carrying frame (20) extending in a first direction and configured to support a load to be transported, for example a bike, and
a supporting frame (27) extending from said carrying frame (20) in a second direction cross to said first direction, for example perpendicular to said first direction, and configured to provide a side support for said load to be transported,
wherein said supporting frame (27) comprises a supporting portion (31) for supporting an attachment portion (101) of a spacer (100),
wherein said supporting portion (31) comprises a movement prevention portion (31.1) for preventing a sideways movement of said attachment portion (101) and/or along a main extension direction of said supporting portion (31) when said attachment portion (101) is mounted on said supporting portion (31).

Aspect 82: Load carrier (1) according to aspect 81, wherein said movement prevention portion (31.1) is configured to geometrically and/or frictionally prevent said movement.

Aspect 83: Load carrier (1) according to aspect 81 or aspect 82, wherein said movement prevention portion (31.1) comprises at least one stop portion (31.3) for blocking a sideways movement of said attachment portion (101) and along a main extension direction of said supporting portion (31) when said attachment portion (101) is mounted on said supporting portion (31).

Aspect 84: Load carrier (1) according to aspect 83, wherein said stop portion (31.3) comprises a protrusion (31.4) protruding from said supporting portion (31) in a radial direction, for example perpendicular to said main extension direction.

Aspect 85: Load carrier (1) according to aspect 83 or aspect 84, wherein said supporting portion (31) comprises two or more separated supporting sections (31.2) for supporting said attachment portion (101), wherein said supporting sections (31.2) are separated by one of said at least one stop portion (31.3), wherein said supporting portion (31) may be configured such that a clamping part or locking member (111) of said attachment portion (101) may only be supported on said supporting sections (31.2).

Aspect 86: Load carrier (1) according to aspect 85, wherein at least one supporting section (31.2) is limited by two stop portions (31.3), wherein said stop portions (31.3) may be configured to guide said attachment portion (101), for example said clamping part or locking member (111), into said supporting section (31.2), wherein said stop portions (31.3) may be configured such that a distance between them is enlarged towards free edge portions of the stop portions (31.3).

Aspect 87: Load carrier (1) according to aspect 86, wherein said stop portions (31.3) may be formed tapering towards a free end portion in radial direction away from said supporting portion (31) and/or may be at least partially formed tapering in circumferential direction about said supporting portion (31).

Aspect 88: Load carrier (1) according to one of aspects 83 to 87, wherein said stop portions (31.3) may at least or only be provided on said supporting portion (31) such that they protrude in rearward direction of said load carrier (1) away from said supporting frame (27), for example towards a vehicle when said load carrier is mounted on a vehicle, or wherein said stop portions (31.3) may at least or only be provided on said supporting portion (31) such that they protrude away from a loaded two wheeler, for example a bike.

Aspect 89: Load carrier (1) according to one of aspects 83 to 88, wherein said at least one stop portion (31.3) is integrally formed in said supporting frame (27).

Aspect 90: Load carrier (1) according to one of aspects 83 to 88, wherein said at least one stop portion (31.3) is mounted on an outer circumference of said supporting portion (31), wherein said stop portions (31.3) and said supporting sections (31.2) may be provided on a movement blocking member (31.5) which is mountable on said supporting portion (31), for example by fastening members such as screws or rivets.

Aspect 91: Load carrier (1) according to one of aspects 82 to 90, wherein said movement prevention portion (31.1) comprises or is made of a material providing higher friction than a surface of said supporting frame (27), wherein said movement prevention portion (31.1) may be made of rubber or comprise a rubber coating, or wherein said movement prevention portion (31.1) may comprise a surface portion with increased surface deviation compared to other portions on said supporting frame (27), for example a surface portion comprising an increased waviness or periodic deviation or a surface portion with increased roughness, wherein said surface portion may comprise corrugations and/or grooves and/or scores and/or scratches.

Aspect 92: Load carrier (1) according to one of aspects 83 to 91, further comprising at least one spacer (100), wherein a total outer dimension of said supporting portion (31) including a stop portion (31.3) is larger than an inner diameter of a receiving section (113) of an attachment portion (101) of said spacer (100), wherein a width of said receiving section (113) may correspond to a width of a supporting section (31.2).

Aspect 93: Load carrier (1) according to one of aspects 81 to 92, further comprising at least one spacer (100), for example a spacer according to one of aspects 21 to 80, with an attachment portion (101) configured to be supported on said movement prevention portion (31.1), wherein said attachment portion (101) and said movement prevention portion (31.1) are configured such that a movement prevention is only effective when said spacer (100) is positioned on said movement prevention portion (31.1) in a first angular orientation range and is ineffective when said spacer (100) is positioned in a second angular orientation range, wherein said attachment portion (101) and said movement prevention portion (31.1) are mechanically coded, wherein said attachment portion (101) may be permanently attached to the supporting frame (27) and may comprise a groove or channel having a dimension allowing to pass said attachment portion (101) over protrusions (31.4) in said movement prevention portion such that said attachment portion (101) can be moved from one supporting section (31.2) to another supporting section without having to detach said attachment portion (101) from said movement prevention portion (31.1).

Aspect 94: Load carrier (1) according to one of aspects 81 to 93, wherein said supporting portion (31) may be a straight portion on said supporting frame (27), for example a straight portion extending in cross direction of said load carrier (1).

Aspect 95: Spacer (100) comprising a locking member (111) for clamping or fixing to a supporting portion (31) or base portion of a supporting frame (27) of a load carrier (1), for example a spacer according to one of the preceding aspects, wherein at least one locking member (111) comprises a narrow width, for example a width which is 2cm or less, for example 1 cm or less, or a width which is less than half of an inner dimension of said receiving section (113) formed in said locking member (111) or a width which is smaller than the width of a strap (154) provided in a further attachment portion (102), for example in a load side attachment unit (150), and which may be half of the width or smaller than half of the width of the strap (154) or may be one third of the width of the strap (154) or smaller.

Aspect 96: Fixation strap (154) for a load carrier (1), comprising
an engaging portion (154.7) engageable with a strap receiver (157), wherein said engaging portion (154.7) may be a toothed portion, and
a coupling portion (154.1) for fixedly attaching said fixation strap (154) on an attachment portion (102) of a spacer (100), said coupling portion (154.1) comprising a receiving section (154.5), for example an insertion opening, for receiving a fixation member (175), for example a screw,
wherein said coupling portion (154.1) comprises an energy absorbing configuration configured to partially absorb a force transferred from said fixation strap (154) on an inserted fixation member (175) when a predetermined pulling force acting on said fixation strap (154) is exceeded.

Aspect 97: Fixation strap (154) according to aspect 96, wherein said coupling portion (154.1) is configured to perform a relative movement relative to said inserted fixation member (175) against a predetermined resistance when said predetermined pulling force on said fixation strap (154) is exceeded.

Aspect 98: Fixation strap (154) according to aspect 97, further comprising a base portion (154.1) with a first opening (154.3) for receiving said fixation member (175), wherein an inner dimension of said first opening (154.3) is larger than an outer dimension of said fixation member (175), and further comprising a resistance portion (154.8) for providing said resistance against a movement of said inserted fixation member in said first opening (154.3), wherein said resistance portion (154.8) may be a deformable portion, for example a plastically or elastically deformable portion which is deformed, for example compressed, when said coupling portion (154.1) is moved relative to an inserted fixation member (175), and/or wherein said first opening (154.3) may be a slotted opening which may extend in longitudinal direction of said fixation strap (154), and/or wherein said base portion (154.1) may be a reinforcing member and/or may be made from metal and/or may comprise a sheet like structure.

Aspect 99: Fixation strap (154) according to aspect 98, further comprising a covering portion (154.2) fixedly and immovably provided on said base portion (154.1), said covering portion (154.2) forming said resistance portion (154.8), wherein a portion of said covering portion (154.2) may extend into said first opening (154.3), wherein said covering portion (154.2) may be made from a material which is less rigid than a material of said base portion (154.1).

Aspect 100: Fixation strap (154) according to aspect 98, wherein said covering portion (154.2) is molded onto said base portion (154.1), for example such that said first opening (154.3) is partially filled with a material of said covering portion (154.2).

Aspect 101: Fixation strap (154) according to aspect 99 or aspect 100, wherein said covering portion (154.2) comprises a second opening (154.4), wherein a forward end portion of said first opening (154.3), which forward end portion is closer to said engaging portion (154.7) than a rearward end portion of said first opening (154.3), and at least a rearward end portion of said second opening (154.4) overlap each other to commonly define an insertion opening for said fixation member (175).

Aspect 102: Fixation strap (154) according to one of aspects 99 to 101, wherein said covering portion (154.2) is configured to deform, for example to plastically deform and/or elastically deform, when said predetermined pulling force on said fixation strap (154) is exceeded and said covering portion (154.2) is pushed against an inserted fixation member (175), wherein said covering portion (154.2) may be configured such that said inserted fixation member (175) may tear up said covering portion (154.2), for example tear up said second opening (154.4) in said covering portion (154.2) in which said fixation member (175) is receivable.

Aspect 103: Spacer (100) for a load carrier (1) mountable on a vehicle, for example a spacer (100) according to one of aspects 21 to 80 or 95, wherein said spacer (100) comprises a first attachment portion (101) and a second attachment portion (102) coupled to each other by means of a connecting structure (103), wherein said first attachment portion (101) and/or said second attachment portion (102) comprise a fixation strap (154) according to one of aspects 99 to 102.

Aspect 104: Spacer (100) according to aspect 103, wherein said fixation strap (154) is fixed to said attachment portion (102) by said fixation member (175), wherein said strap (154) is fixed to said attachment portion (102) by said fixation member (175) such that said fixation member (175) does not exert a clamping force on said coupling portion (154.1) and/or said fixation strap (154) is only attached by said fixation member (175) in formlocking manner and without frictional locking on a housing (151) of said spacer (100).

## Claims

1. Spacer (100) for a load carrier (1) mountable on a vehicle, comprising
a carrier-side fastening unit (110) configured to be put on and to be locked with a supporting portion (31) of said load carrier (1),
wherein said fastening unit (110) is configured to accommodate said supporting portion (31) and is configured transferable between a locking configuration in which said fastening unit (110) is non-detachably fixed on said supporting portion (31) and an unlocking configuration in which said fastening unit (110) is mountable to and detachable from said supporting portion (31),
wherein said fastening unit (110) is configured transferable into said locking configuration by pushing said fastening unit (110) onto said supporting portion (31).

2. Spacer (100) according to claim 1,
wherein said fastening unit (110) comprises an arrangement for positively locking said supporting portion (31) between at least two locking members (111, 112),
wherein a first locking member (111) of said locking members (111, 112) is arranged movable in a first direction (D1) with respect to a second locking member (112), for example along a portion of said second locking member (112), of said at least two locking members (111, 112) in order to positively lock said supporting portion (31) in said fastening unit (110) when said fastening unit (110) is in said locking configuration.

3. Spacer (100) according to claim 2,
wherein said first locking member (111) comprises a first receiving section (113), for example a U-shaped receiving section, for at least partially receiving said supporting portion (31), and/or
wherein at least one of said locking members (111, 112) forms a clamping portion configured to exert a clamping force on said supporting portion (11) when said fastening unit (110) is in said locking configuration, and/or
wherein said receiving section (113) may be configured such that it can be put on said supporting portion (31) by moving said fastening unit (110) in a second direction (D2), wherein said second direction extends cross to said first direction in which said first locking member (111) is movable, and/or
wherein said second locking member (112) comprises a second receiving section (112.2), wherein said second receiving section (112.2) may be U-shaped, wherein said first receiving section (113) and said second receiving section (112.2) may each be U-shaped and wherein said first receiving section (113) may be turned with respect to the second receiving section (112.2) by 90 degrees, wherein said first receiving section (113) is configured retractable into said second receiving section (112.2), and/or wherein said first locking member (111) is guided in said second locking member (112) such that it is translatory movable in said first direction (D1) but non-rotatable about an axis which extends parallel to said first direction (D1), wherein said second locking member may be configured to be coupled to a connecting structure (103), for example a hollow profile (104), connecting said fastening unit (110) with a load side attachment unit (150) configured to be fixed to a load portion, for example to a frame portion of a bike, wherein said second locking member (112) may be configured to guide said first locking member (111) outside of said connecting structure (103), wherein at least a guided portion of said first locking member (111) may comprise a non-round outer circumference guided in a guiding portion of said second locking member (112) defining a non-round receiving section, and/or
wherein said first locking member (111) comprises a hook-like configuration, in particular a hook-like free end portion.

4. Spacer (100) according to one of claims 1 to 3, wherein said fastening unit (110) is configured to at least partially automatically transfer into said locking configuration when said supporting portion (11) is received in said fastening unit (110).

5. Spacer (100) according to one of claims 2 to 4, further comprising a locking unit (160) for blocking a movement of said first locking member (111) in at least a third direction (D3) opposite to said first direction (D1).

6. Spacer (100) according to claim 5,
wherein said locking unit (160) comprises a blocking portion (161) movable between a locking position in which it directly or indirectly blocks said movement of said first locking member (111) in said third direction (D3) and an unlocking position in which said blocking portion (161) allows said movement of said first locking member (111) in said third direction (D3),
wherein said blocking portion may be a portion of an inserted strap (154),
and/or wherein a fixed end portion (156) of said strap may be operatively coupled to said first locking member (111) such that said first locking member (111) is pulled to remain in said locking position when said strap is tightened.

7. Spacer (100) according to claim 6,
wherein said blocking portion (161) is biased towards said locking position by means of a biasing member (162), for example a spring, such that said blocking portion (161) is able to automatically engage and block a movement of said first locking member (111) when said first locking member (111) has been moved by a predetermined distance towards a positive locking position.

8. Spacer (100) according to one of claims 6 or 7, further comprising an operating portion (170) for at least returning said blocking portion (161) into said unlocking position,
wherein said operating portion (170) may comprise a push member (171) or a pull member (172) or a rotational member operatively coupled to said blocking portion (161) such that upon operating said operating portion (170) said blocking portion (161) is moved towards said unlocking position.

9. Spacer (100) according to one of claims 6 to 8,
wherein said spacer (100) may comprise a force transfer member (106, 115) coupled to or integrally formed with said movable locking member (111) and said blocking portion (161) may be configured engageable with said force transfer portion (115),
wherein said force transfer member (106, 115) may comprise a rod (116), and/or
wherein said force transfer member (106, 115) may comprise an engaging section (117) providing a contact surface (118) contactable by said blocking portion (161), and/or
wherein said force transfer member (106, 115) may comprise a tapered end portion (119) tapering towards the end of said force transfer member (105, 115).

10. Spacer (100) according to claim 9,
wherein said blocking portion (161) is translatory movably arranged in said locking unit (160), preferably shiftably arranged in said locking unit (160), and/or
wherein said blocking portion (161) is movable radially towards and away from said force transfer member (106, 115), and/or
wherein said blocking portion (161) is configured to engage behind a protrusion or widened section provided on said force transfer member (106, 115), and/or
wherein said blocking portion (161) is configured to engage into a recess formed in said force transfer member (106, 115), and/or
wherein said blocking portion (161) comprises an opening (165) for receiving an engaging section (117) of said force transfer member (106, 115), wherein said opening (165) comprises a narrow section (166) and a wide section (167), wherein said wide section (167) comprises a dimension allowing said engaging section (117) to pass through said opening (165) and said narrow section (166) comprises a dimension which is smaller than an outer dimension of said engaging section (117).

11. Spacer (100) according to claim 9,
wherein said blocking portion (161) is pivotably movably arranged in said locking unit (160), and/or
wherein said blocking portion (161) comprises a pivot arm (163) pivotably supported at a first end portion thereof about a pivot axis and comprising a contact portion (164) at a second end portion thereof.

12. Spacer (100) according to one of claims 1 to 11, further comprising a load side attachment unit (150) configured to be fixed to a load portion, for example to a frame portion of a bike.

13. Spacer (100) according to claim 2, wherein said first locking member (111) is arranged pivotably movable with respect to the second locking member (112), wherein said first locking member (111) may be biased in a direction away from said second locking member (112), wherein an urging member (312) may be arranged between said first locking member (111) and said second locking member (112).
